# EUROPEAN PATENT SPECIFICATION

(11) **EP 1 512 090 B1**
(45) Date of publication and mention of the grant of the patent: **13.07.2011**
(21) Application number: 03753085.4
(22) Date of filing: 17.05.2003
(51) Int. Cl.: G06F 17/30

(54) **CONTENT DELIVERY SYSTEM**
INHALTSABLIEFERUNGSSYSTEM
SYSTEME DE DIFFUSION DE CONTENU

(30) Priority: 17.05.2002 US 380834 P; 17.05.2002 US 380864 P; 17.05.2002 US 380863 P; 30.08.2002 US 231459; 30.08.2002 US 231440; 30.09.2002 US 259787; 30.09.2002 US 259785; 30.01.2003 US 354144; 16.05.2003 US 439322
(43) Date of publication of application: 09.03.2005
(73) Proprietor: SAP AG, 69190 Walldorf (DE)
(72) Inventor: WILLIS, Brian, Menlo Park, CA 94025 (US); AGASSI, Shai, Los Gatos, CA 95032 (US); DORNER, Elmar, 76133 Karlsruhe (DE); RUGGABER, Rainer, 75181 Pforzheim (DE)
(74) Representative: Müller-Boré & Partner Patentanwälte
(86) International application number: PCT/US2003/015615
(87) International publication number: WO 2003/098484

(56) References cited:
- EP-A- 1 176 520
- WO-A-01/13287
- US-A- 5 995 943
- US-B1- 6 338 059
- YAMAGUCHI T ET AL: "WEBSTAGE: AN ACTIVE MEDIA ENHANCED WORLD WIDE WEB BROWSER" PROCEEDINGS OF THE SIGCHI CONFERENCE ON HUMAN FACTORS IN COMPUTING SYSTEMS; [CONFERENCE ON HUMAN FACTORS IN COMPUTING SYSTEMS], NEW YORK, NY, USA, 22 March 1997 (1997-03-22), pages 391-398, XP000697135 ISBN: 978-0-89791-802-2

## Description

### TECHNICAL FIELD

This description relates to techniques for delivering content that may be of interest to a particular user.

### BACKGROUND

Technologies exist which allow users to designate categories of information in which desired content may be presented. For example, web sites may allow users to select categories from a variety of different sources and content providers. Such sites are generally known as "portals," and provide a central gateway through which users can be presented with options and links to various information sources. In this way, users can check, for example, their stocks, mail, local weather, sports scores, and movie listings.

Other techniques exist that attempt to provide users with content that will be of particular interest to each user. For example, web sites may track items such as books and Digital Video Disks ("DVDs") based on attributes of such items, such as title, author, performer, and genre. By tracking previously-purchased books and DVDs, registered users may be presented with a web page offering items with similar attributes.

Video recording systems may allow users to voice opinions about specific television shows. Coupled with a programming guide, these video recording systems can later record concurrent episodes of the show or shows starring the same actor or shows of similar interest. Such systems may include personal video recorders ("PVRs"), which typically require a set-top box located at the viewer's location, along with a subscription service, to implement PVR services.

In another example, portals are capable of providing categorized content in disparate pieces (sometimes referred to as "iViews"), where each iView and its associated content can be aggregated into a single delivery package (for example, a web page). Users may select a category of content to be included within each iView, and may generally choose which iView(s) to see and exercise some control over how it is positioned inside the aggregated result.

In practical implementations of portals utilizing iViews, however, most users set up their portal once, if at all, and will thereafter simply keep these initial preferences. As a result, such users may miss out on viewing new content and categories of content that may be more interesting than the iViews originally selected. Similarly, content which is most interesting to the user at a particular time will not be properly emphasized within the aggregated result, such that the user does not give it the attention it is due.

Even if users update their iView configuration very frequently, each configuration is still static. That is, the set of iViews shown, and the order in which they are shown, is constant. Moreover, although the content of each iView may change over time (for example actual news headlines), its overall subject is static (for example, company news).

Conventional portals often concentrate on the computer screen as the main output device thru which the user will receive the delivered content. The scope may be further limited if the portal is rendered in Hypertext Mark-up Language ("HTML") and runs in a web browser. Even when mobile devices like personal digital assistants ("PDAs") and smart cellular phones are used to access conventional portals, the portals are often still rendered in a type of browser.

Such a browser-limited approach may have emerged from an impression that browsers are ubiquitous on many client machines and that portals leave no-footprint on those clients by rendering to them. However, by heading in that direction the portal vendors have limited the capabilities of the portal and the distribution of the content. Moreover, to the extent that delivered content is typically text or image-based in a browser, users may have come to expect only those formats.

The browser-centric approach is usually used for the average business user who comes in to the office in the morning, and logs-in to his computer. However, there are many scenarios that prohibit access to computers. For example, many blue-collar employees do not have computers at their place of work. Also, many people are simply not computer savvy, and/or find computers intimidating. Even the savvy computer user has situations where using a laptop is difficult or impossible (the drive to the office, for example).

Other systems for providing information to users also offer the feature of personalizing information for a particular user or group of users. Examples of such systems include Internet search engines, which allow users to input terms about which the users would like more information, and return documents (or links to documents) containing these terms. Such personalizable information systems have various techniques for allowing users to input their preference information.

Document EP 1 176 520 A2 relates to a computer network server providing a customized newspaper to a recipient according to recipient profile preferences. The server searches for and obtains article content that is deemed of great interest to the recipient according to topical preferences, generates a representation of the selected content according to a layout preference, and delivers the representation to the recipient according to a designated schedule.

### SUMMARY

The present application relates to a system according to independent claim 1 and a method according to independent claim 8.

One implementation of a content presentation system described below enables dynamic selection of the shown set of iViews, based on an individual relevance of each iView to the user at any given time. That is, this implementation allows the user to personalize content based not only on its expected result (that is, the type of iView), but also on its actual result (that is, actual content of the iview).

In another implementation, a system incrementally learns the user's preferences regarding previously-shown items and categories, and uses that information to decide what content should be shown to the user in the future. Time may also be of significance, for example, by playing a part in deciding a level of relevance for each iview with respect to a specific user.

In another implementation, a system combines the concepts of the portal and personalized content with other delivery channels, such as, for example, telephone, radio, and television. The synergy opens up many new opportunities, such as "Enterprise TV," wherein a television is placed in a lobby of a company, the company cafeteria, or other high-traffic areas, or "Enterprise radio," wherein news (particularly company news) is broadcast to all employees over the airwaves. Yet another example is voice mail, wherein messages are left on the employee's voice mail. In this last example, participants of a meeting can easily be notified when a meeting is postponed.

In contrast with the above, one implementation of a content presentation system described below enables dynamic selection of the shown set of iViews, based on an individual relevance of each iView to the user at any given time. That is, this implementation allows the user to personalize content based not only on its expected result (that is, the type ofiView), but also on its actual result (that is, actual content of the iView).

In another implementation, a system incrementally learns the user's preferences regarding previously-shown items and categories, and uses that information to decide what content should be shown to the user in the future. Time also may be of significance, for example, by playing a part in deciding a level of relevance for each iView with respect to a specific user.

In another implementation, user preferences for the various functionalities just listed, and for other functionalities, may be input by a user by way of a pop-up window with which the user may express a level of interest, or disinterest, with respect to a particular term. More specifically, the pop-up window may be provided to the user proximate to the term about which the user is to express preference information, upon selection of that term by the user.

By inputting preference information in this way, a user may take a more convenient and streamlined approach to various applications. For example, a user can implement an Internet search in a streamlined, progressive manner, or can modify a personal portal page, or can express an opinion about a particular element of an audio and/or video presentation. By expressing his or her opinion about an element of content, while accessing the content, a number of screens/processes that the user must access is minimized.

Various implementations extend a portal system to provide the capability of displaying supplemental contextual information based on content that is already shown. One implementation looks for metadata that each iview contains (for example, an article about Intel will contain metadata indicating that it is about a "Company" called "Intel") and, based on this metadata, includes supplemental iViews that are related to this metadata (for example a stock ticker iView that will show the current stock price of Intel).

Other implementations may be used in connection with a non-portal system, such as a system in which a pool of articles is accumulated before a user signs on to the system. In these systems, the articles in the pool may be ranked and/or filtered according to criteria such as user preferences, and supplemental content can be generated before or after the ranking/filtering process.

Other implementations may be used in connection with a news information service, in which a publisher of supplemental contextual information eavesdrops on the news information service for messages concerning topics about which the publisher has, or can obtain, supplemental content. Recipients of the original message(s) can thus receive the supplemental content, as well.

Thus, various implementations provide a means to dynamically supplement displayed information based on the content of the information, and to thereby enhance the user experience by displaying such supplemental contextual content.

According to one general aspect, a system according to claim 1 includes an article reader operable to access information for inclusion in a pool of articles, each article in the pool of articles including content metadata characterizing content of the article type. The system further includes a sorting engine operable to input the pool of articles and individually organize the articles according to the content metadata and preference metadata associated with a user, to thereby output sorted articles for delivery to the user, as well as a media-type selector operable to select a media type of at least one of the sorted articles and a supplemental content selector operable to select a supplemental article based on the content metadata, the preference metadata, supplemental content metadata associated with the supplemental article, and a supplemental content selection rule. The system also includes an aggregation engine operable to determine a presentation format for rendering each of the sorted articles and the supplemental article, where the presentation format is determined based on the content metadata, the preference metadata, and the media type, and further operable to aggregate the sorted articles and the supplemental article in accordance with the presentation format for delivery to the user.

Implementations may have one or more of the following features. For example, the sorting engine may be further operable to filter the pool of articles based on pre-determined criteria. The aggregation engine may be further operable to determine the presentation format based on a priority level associated with each article by the sorting engine, or to format a first frame for display of the sorted articles, and a second frame for display of the supplemental article.

The media-type selector may be further operable to determine that at least one of the sorted articles includes narrative data, and to generate a graphic, video or audio presentation of the narrative data. At least one of the sorted articles may contain a plurality of content blocks, where each content block is associated with a specific media type, and the media-type selector may be operable to select one of the specific media types as the media type.

A monitoring service may be used that is operable to monitor an information distribution service and input a transmitted article that is transmitted over the information distribution service, wherein the monitoring service includes a contextual content selector. The contextual content selector may be operable to determine a subject matter and routing information that are associated with the transmitted article, generate a contextual article that is related to the subject matter, and transmit the contextual article based on the routing information. In this case, the contextual content selector may be operable to transmit the contextual article to the article reader, and the supplemental content selector may be operable to select the contextual article as the supplemental article. Also, the monitoring service may be subscribed to a content-based messaging system, and the monitoring service may be operable to selectively input the transmitted article based on a relation between the subject matter of the transmitted article and a pre-determined logic.

A metadata presentation system is operable to distinguish, on a user display, the content metadata within each of the sorted articles and the supplemental article, and a preference input system is operable to input a user modification to the preference metadata with respect to selected content metadata, while the sorted articles and the supplemental article are being displayed on the user display. In this case, the preference input system may be operable to provide a pop-up window on the user display in the vicinity of the selected content metadata.

According to another general aspect according to claim 8, information is accessed for inclusion in a pool of media assets, each media asset in the pool of media assets including a discussion object designated within content of the media asset The pool of media assets are sorted with respect to a user to obtain sorted media assets, based on the discussion objects and a user preference associated with the user. A supplemental media asset is selected based on discussion objects within the sorted media assets, the user preference, and a supplemental content selection rule. The sorted media assets and the supplemental media asset are aggregated for delivery to the user for presentation on a user display, based on the discussion objects within the sorted media assets and the user preference.

Implementations may have one or more of the following features. For example, in aggregating the sorted media assets and the supplemental media asset, a content block may be selected from a plurality of content blocks associated with a selected media asset, where each of the content blocks is associated with a different media type. In sorting the pool of media assets, the pool of media assets may be filtered and prioritized according to a pre-determined criteria.

In aggregating the sorted media assets and the supplemental media asset, the sorted media assets may be assigned to a first frame on the user display for display of the sorted media assets, and the supplemental media asset may be assigned to a second frame on the user display for display of the supplemental media asset.

Additionally, an information distribution service may be monitored, and a transmitted media asset that is transmitted over the information distribution service may be input. A subject matter and routing information associated with the transmitted media asset may be determined, and a contextual media asset related to the subject matter may be generated. The contextual media asset may be transmitted based on the routing information. In this case, the routing information may include determined discussion objects associated with the transmitted media asset, and transmitting the contextual media asset may include transmitting the contextual media asset using a content-based messaging service, based on the determined discussion objects.

In aggregating the sorted media assets and the supplemental media asset, a designated discussion object is selected within one of the sorted media assets to be distinguished on the user display. A pop-up window is provided on the user display, while the designated discussion object is being displayed and in the vicinity of the designated discussion object, and a modification to the user preferences is accepted through a user input into the pop-up window.

The details of one or more implementations are set forth in the accompanying drawings and the description below. Other features will be apparent from the description and drawings, and from the claims.

### DESCRIPTION OF DRAWINGS

FIG. 1 is an architectural block diagram of one implementation of a content presentation system.
FIG. 2 is an example of a first portion of a process flow used by the system of FIG. 1.
FIG. 3 is an example of a second portion of a process flow used by the system of FIG. 1.
FIG. 4 is an example of a third portion of a process flow used by the system of FIG. 1.
FIG. 5 demonstrates a first example of page generation.
FIG. 6 demonstrates a second example of page generation.
FIG. 7 is an example of an article.
FIG. 8 is an example of a hypertext markup language ("HTML") result page.
FIG. 9 is a first example of a context menu designed to allow users to input preference information.
FIG. 10 is a second example of a context menu designed to allow users to input preference information.
FIG. 11 is an example of a floating toolbar designed to allow users to input preference information.
FIG. 12 is a page that reflects user-expressed opinions with respect to the page of FIG. 8.
FIG. 13 is an architectural block diagram of an example of a content presentation system designed primarily for generating personalized audio and video.
FIG. 14 is an example of an article used in one implementation of the system of FIG. 13.
FIG 15 is an example of a rendering of an article using the system of FIG. 13.
FIG. 16 is a block diagram illustrating a structure and use of a personalized information system.
FIG. 17 is a block diagram illustrating a structure and use of an internet search engine.
FIG 18 is a flow chart illustrating an operation of the search engine of FIG. 17.
FIG. 19 is a first screen shot illustrating an operation of the search engine of FIG. 17.
FIG. 20 is a second screen shot illustrating an operation of the search engine of FIG. 17.
FIG. 21 is a third screen shot illustrating an operation of the search engine of FIG. 17.
FIG. 22 is a fourth screen shot illustrating an operation of the search engine of FIG. 17.
FIG. 23 is a fifth screen shot illustrating an operation of the search engine of FIG 17.
FIG. 24 is a sixth screen shot illustrating an operation of the search engine of FIG. 17.
FIG. 25 is a seventh screenshot illustrating an operation of the search engine of FIG. 17.
FIG. 26 is a screen shot illustrating a technique for entering preference information.
FIG 27 is a screenshot 2700 illustrating a technique for entering preference information.
FIG. 28 is a block diagram illustrating a structure and use of a portal system.
FIG. 29 is a flowchart illustrating an operation of the portal system in FIG. 28.
FIG 30 is a first screen shot illustrating an operation of the portal system of FIG. 28.
FIG. 31 is a second screen shot illustrating a use of the portal system of FIG. 28.
FIG. 32 is a third screen shot illustrating use of the portal system of FIG. 28.
FIG. 33 is a block diagram of a reverse-query portal system.
FIG 34 is a first screenshot of a video presentation using the information system of FIG. 16.
FIG. 35 is a second screenshot of a video presentation using the information system of FIG 16.
FIG 36 is a third screenshot of a video presentation using the information system of FIG. 16.
FIG 37 is a block diagram of an article generation system.
FIG 38 is a block diagram of a system for delivering a portal having supplemental content to a user.
FIG 39 is a screenshot of a portal page that may be generated by the system of FIG. 38.
FIG. 40 is a screenshot of the portal page of FIG. 39 and that includes supplemental content.
FIG. 41 is a block diagram of a system for delivering dynamic personalized content in conjunction with supplemental content.
FIG 42 is a block diagram of a rich-media content delivery system incorporating a supplemental content selector.
FIG 43 is a block diagram of a supplemental content selector in a publish/subscribe infrastructure that includes an information distribution source.
FIG. 44 is a block diagram of a supplemental content generation system.
FIG. 45 is a timing diagram of a supplemental content generation system.
FIG 46 is a screenshot of a message and supplemental content.
FIG. 47 is a block diagram of a supplemental content generation system in a content-based messaging environment.
FIG. 48 is a block diagram illustrating a content delivery system using a contextual publisher.
FIG. 49 demonstrates a system for providing supplemental content to a user.
FIG. 50 demonstrates an article 5000 used in one implementation of the system.

### DETAILED DESCRIPTION

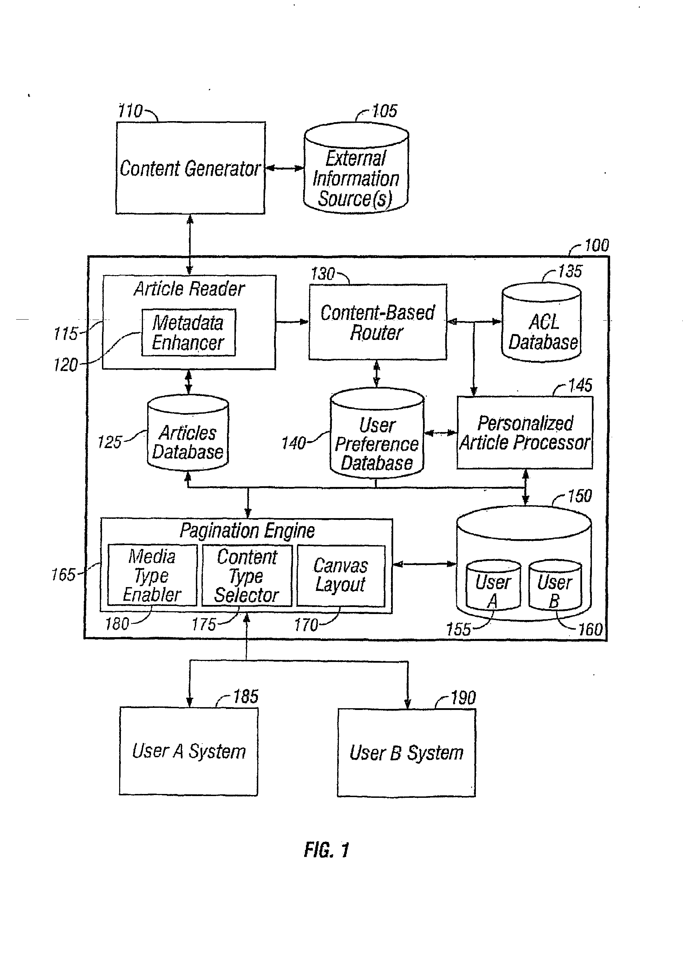

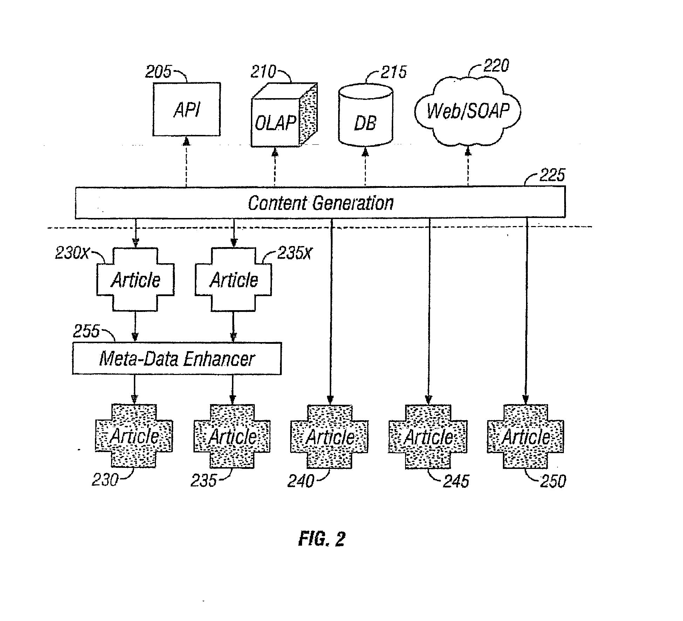

FIG. 1 is an example of a content presentation system including a system 100. In FIG 1, external information from an external information source 105 is received by a content generator 110, which generates a corresponding article. Many types of external information sources 105 may be used, as will be discussed in more detail with respect to FIG 2. Also, content generator 110 may utilize various techniques for gathering and publishing the information as discrete articles. For example, content generator 110 may utilize software agents to gather appropriate information (agents are generally defined as automatons running on a scheduled basis and querying a data source for information and either producing or not producing content based in part on the result of that query). Moreover, in other implementations, content generator 110 may be included within system 100.

The use of the term "article" in this context, as is discussed in more detail below, generally refers to a discrete collection of information that may include content and information about the content. Information about the content may include high-level attributes of the article, such as its author or general subject heading (for example, sports or weather). The information about the article also may include portions of the actual content itself used to articulate content metadata, perhaps in the form of "discussion objects."

In general, discussion objects are considered to be conceptual or tangible objects that are mentioned (discussed) as part of an article. Similarly, "discussion classes" are the types, or categories, of discussion objects. For example, an article about a discussion class of "computer manufacturers" may mention discussion objects "International Business Machines" ("IBM") many times, while only mentioning "Dell" infrequently. By determining at least some information directly from such specific discussion objects within the content of the article, this implementation is capable of accurately sorting articles against a user's interests.

Articles may be, for example, text, video, audio, HTML, or another available rendering medium, or a combination of two or more of these media. Articles may contain the same piece of content in multiple forms, and may permit generation of one type of content from another, as discussed below. Therefore, articles also may be referred to as "media assets," or other similar terminology describing such information to be passed on to a user. Content of an article may be a publicly-available web page (or portion thereof), an internal electronic mail, an individual's personal contact information, weather information, or a set of stock quotes. Content also may be obtained from specific applications, such as a profit and loss report of a company, an online analytical processing ("OLAP") report, a "print-out" of a sales order, or many other examples of discrete pieces of content to be made available to the user(s).

In FIG. 1, then, an article reader 115 accesses articles from content generator 110. Some articles may already include attribute and content metadata information. If a particular article has no associated metadata, a metadata enhancer 120 may be used to examine the content of the article and generate metadata accordingly. Even if some information, such as attribute information, is included with an article, metadata enhancer 120 may be used to further enhance the article.

In one implementation, system 100 may be provided to an enterprise as a resource for its employees and/or customers. The enterprise may have its own object model (that is, definition of permissible discussion objects) describing how the content metadata should be generated, characterized, and interpreted. These object models may differ from one enterprise to the next; for example, IBM might be a "customer" to one enterprise and a "supplier" to another. Individual enterprise object models can therefore be implemented instead of, or in conjunction with, a standardized, centralized object model.

In particular, articles generated within an enterprise may require very little metadata enhancement, whereas articles obtained from publicly-available web pages may require a substantial amount of metadata enhancement.

Accessed articles are stored in a database 125, and information referencing the articles is passed on to a content-based router 130. Although entire articles could be passed through the system 100, other techniques may be used. For example, only links to corresponding articles need be circulated through system 100, with the articles themselves remaining stored in database 125. As another example, such links may be circulated with the associated attribute and/or content metadata, but without the content itself; in this way, the article may processed (as discussed below), without actually having to circulate the article in its entirety.

Content-based router 130 examines each article with respect to its content and associated attributes and content metadata, for example, discussion objects, and compares this information to information stored for individual users. For example, an Access Control List ("ACL") database 135 contains a security clearance for each user with respect to various subjects, so that a user who is not cleared to receive certain information within an article will not receive that article. A user preference database 140 contains information about each user, for example, the extent to which a user likes or dislikes a particular subject, or the type of device(s) the user may be receiving the articles on.

Any type of router capable of routing articles based on content as described herein may be built and/or utilized to implement system 100. One type of router that is capable of performing the functionality of content-based router 130 is known as Elvin and is produced by the Distributed Systems Technology Centre (DSTC). Other types of content-based services include Gryphon, produced by International Business Machines (IBM), and Keryx, a Java-notification service by Hewlett Packard.

User preferences for populating user preference database 140 can be obtained by a number of techniques. For example, the preferences could be gained by asking users to fill out a preference form before gaining access to system 100. As another example, the preferences can be modified over time by obtaining feedback from the users, examples of which are discussed in more detail below.

By accessing databases 135 and 140, content-based router 130 is able to filter articles which are restricted or are of no interest with respect to a particular user. The action of content-based router 130 thus eases the burden on a personalized article processor ("PAP") 145, which has the job of individually prioritizing the remaining articles, based on a comparison of contents of the user preference database 140 to the content and to the content metadata/attributes of each article. Accordingly, individually-sorted articles may be stored in a sorted articles database 150, where articles for a User A and a User B are stored with their corresponding priority information for each user in database portions 155 and 160, respectively.

A pagination engine 165 thus gains access to a set of articles associated with, and prioritized with respect to, individual users. Pagination engine 165 will typically have access to characteristics of the client system being used by each user. This information may be stored in user preference database 140, or (as explained in more detail below) it may be determined from the user request at the time of the request.

In either case, pagination engine 165 determines a layout of the canvas being used by each user, using a canvas layout subsystem 170. In this context, the term "canvas" includes any rendering media in which articles may be presented. Canvas examples include web pages (on desktop computers, laptops, Personal Digital Assistants ("PDAs"), web-enabled cell phones, etc.), audio (for example, cell phone or radio), video (for example, television or Motion Picture Expert Group ("MPEG") player), or another type of device capable of receiving content within an article and presenting it to the user.

Since, as a practical matter, a canvas will typically have capacity limitations, one of the services of the canvas layout subsystem 170 within pagination engine 165 is to determine how much "space" is available to the user for displaying articles. For example, a web browser on a PDA will be able to display a smaller number of articles than a browser on a desktop computer. As another example, a user who receives audio articles via cell phone or radio may only have twenty minutes during a car ride during which to listen to articles. In short, canvas layout subsystem 170 determines any user-specific capacity constraints when deciding which articles to provide to a given user.

A content-type selector 175 determines which rendering media are available to the user for the selected canvas, and which articles are consistent, or can be made to be consistent, with that media. For example, content-type selector 175 may determine that a canvas has video and HTML capabilities, but not audio.

Finally within pagination engine 165, a media-type enabler 180 is available to enable a rendering media that would not ordinarily be available to the user (based on the content type(s) of the articles), when feasible and desired. One example of this feature is the capability of reading aloud to the user an email that is included as an article. Another example is the generation of an animation of a newscaster, complete with moving lips, to read aloud a print story to the user. These and other examples are discussed in more detail below.

During a final portion of the pagination process, pagination engine 165 aggregates the selected articles, in their selected formats, and delivers a personalized "page" of information to each user, so that each user receives articles for rendering that are of the most interest to him or her at a given point in time (or that the system determines the user should/must see, even if the user has expressed non-interest in such an article, such as a direction from the user's boss, or an article about a "hot" topic of the day). User systems 185 and 190 thus receive information suitable for rendering a page of information consistently with their respective system capabilities and requirements.

System 100 also may receive feedback from the users to be recorded in user preference database 140, so that the pages increasingly become better-personalized to each user as time goes by. The use of user preference feedback, as well as various formats in which pages may be rendered, are discussed below.

System 100 may be implemented in an enterprise environment, as discussed above, for the convenience of employees and/or customers of the enterprise. Implementations may be utilized via various other private networks, such as a university or other school network. On the other hand, implementations may be provided to members of the public at large, via the Internet.

FIGS. 2-4 demonstrate a process flow that might be used by the system of FIG. 1. FIG. 2 demonstrates a technique for gathering a pool of articles to be later filtered, sorted, and rendered to a user. In FIG. 2, sources of information for articles might include an application's application program interface ("API") 205, an on-line analytical processing ("OLAP") server 210, a database 215, and the world-wide web 220 (perhaps queried through the hypertext transfer protocol ("HTTP"), simple object access protocol ("SOAP") or other common protocols of the Internet).

Content generation occurs in a process 225, during which articles are generated. Some articles, such as articles 230x and 235x, might be generated without attribute information or content metadata. In this case, meta-data enhancer 255 may be used to examine such articles and generate content metadata to thereby produce articles 230 and 235. Other articles, such as articles 240, 245, and 250, may already be generated with attribute data (describing general features of the articles such as author and date of publication) and content metadata (characterizing actual content of the articles). It should be noted that, in FIGS. 2-4, articles including content metadata are illustrated with a dotted background, whereas articles having no content metadata (such as articles 230x and 235x) are shown with a plain background.

It should be understood that various techniques may be used for gathering article content. For example, software agents may operate in an agent execution environment which may serve as a host for the runtime execution of agents and administer execution of the agents (for example, scheduling of the agents). The agents may be used to query various databases, such as those shown in FIG. 2. On the other hand, the content could also be generated within system 100, as referred to above with respect to FIG. 1, or could be obtained by a variety of other means.

Examples of content that might be obtained according to FIG. 2 include a querying of the OLAP database 210 for a list of the top twenty customers in a particular region of an enterprise implementing system 100. For each one of these customers, an agent may access the API 205 of a customer relationship management ("CRM") application, and then report the list of top customers that have pending complaints with customer service. This list may be used as an article, as discussed below.

Another example of content for articles might be current levels of the financial markets, gleaned from the web 220. Many other types of content, whether internal to an enterprise or simply drawn from the public domain, may form the basis for an article.

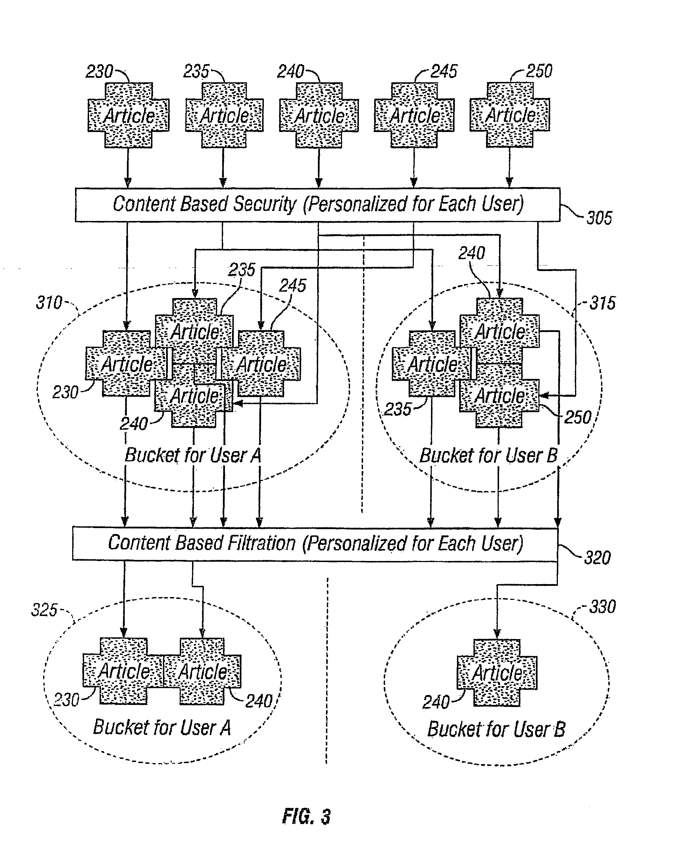

In FIG. 2 and continuing into FIG. 3, articles 230, 235, 240, 245, and 250 thus represent a pool of articles, from which a subset for each user will be drawn. Once a pool of articles is established at a given point in time, a content-based security analysis 305 may be performed, the analysis being personalized for each user. Analysis 305 may be performed within content-based router 130 by accessing ACL database 135, both of FIG. 1. In this way, articles which a particular user does not have security rights to access will be removed prior to actual content-based sorting, in order to make the sorting process more efficient.

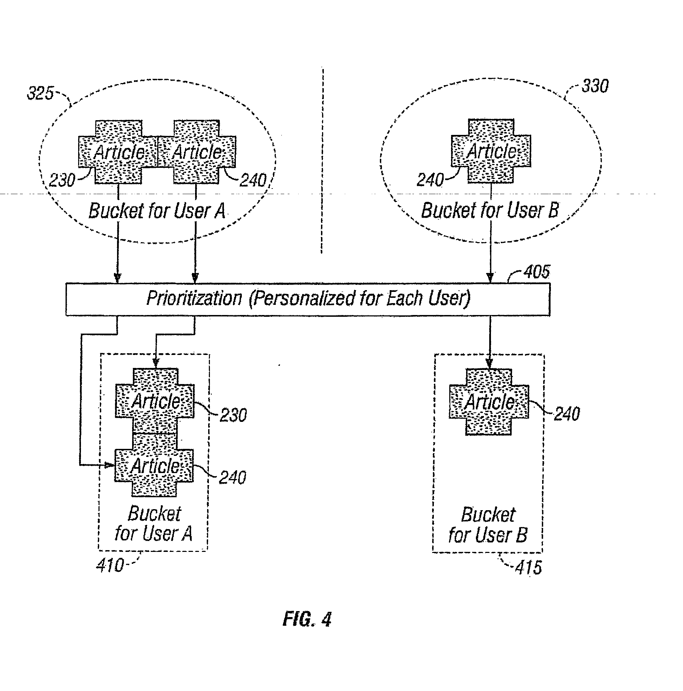

After security analysis 305 is complete, a "bucket" 310 of articles exists for a user A, and a separate bucket 315 of articles exists for user B. At this point, content-based filtration analysis 320 occurs, wherein the content-based router 130 interacts with user-preference database 140 in FIG. 1 to determine which of the articles in buckets 310 and 315 match the interests of users A and B, respectively. This process results in refined buckets 325 and 330, as shown in FIG. 3 and continuing into FIG 4.

FIG. 4 demonstrates a prioritization process 405 that occurs within PAP 145, using data from within user preference database 140 in FIG. 1. As a result of process 405, articles within buckets 325 and 330 are prioritized and stored in final buckets 410 and 415, in accordance with the preferences of users A and B, respectively. Although FIG. 4 shows only a few articles in buckets 410 and 415 for the sake of clarity, the number of articles that can be assigned to a given user as a result of the operations of FIGS. 1-4 can be significantly higher and is limited only by system performance considerations.

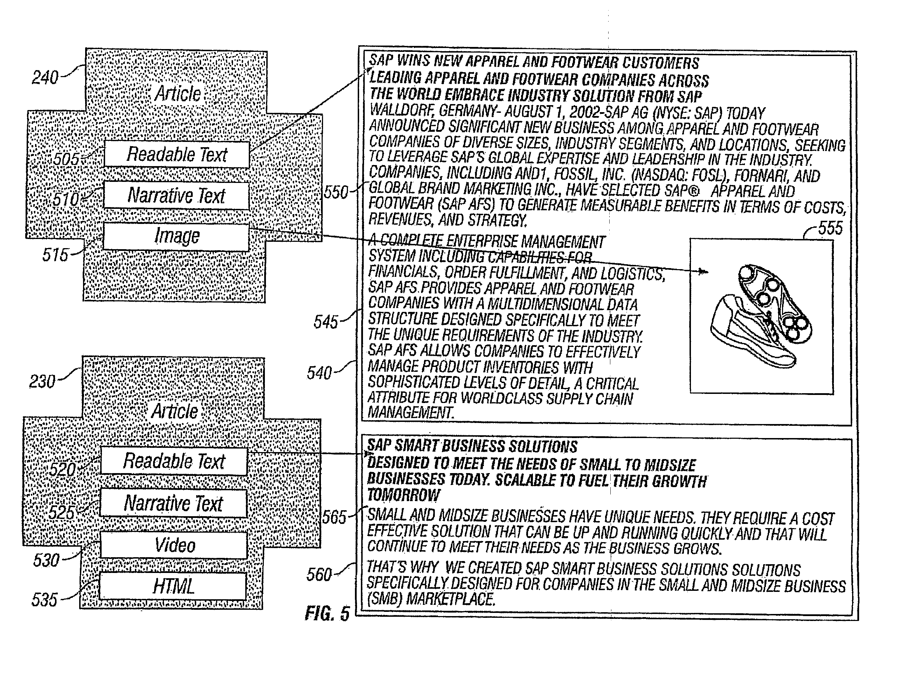

Once the articles have been filtered, sorted, and prioritized, system 100 may begin the pagination process. FIG. 5 demonstrates a first example of page generation. In FIG 5, articles 240 and 230, which were stored in bucket 410, are shown to contain content in various formats suitable for rendering in various media. For example, article 240 contains content blocks in the form of a readable text block 505, a narrative text block 510 (that is, text to be read as audio), and an image block 515. Similarly, article 230 contains content blocks in the form of a readable text block 520, a narrative text block 525, a video block 530, and an HTML block 535.

Based on knowledge of a user system onto which the page will be rendered, a page 540 is then created by pagination engine 165. In the example of FIG. 5, the user system capabilities and/or user preferences indicate that the article should be rendered as HTML and therefore only readable text and associated images are to be utilized.

Accordingly, page 540 includes article 240 rendered as a section 545, as well as article 230 rendered as a section 560. Section 545 includes readable text content block 505 rendered as a portion 550 in HTML form, as well as image information content block 515 rendered as an image 555 as part of the HTML. Article 230 includes only readable text content block 520 rendered as a portion 565, again in HTML form.

It should be understood from FIGS. 4 and 5 that article 240 was given a higher priority for display than article 230, and was therefore shown on page 540 prior to article 230. In general, relatively more important articles might be shown in a more prominent location on the page, while the less important ones, space permitting, might only be shown as headlines with reference (for example, hyperlinks) to the full article.

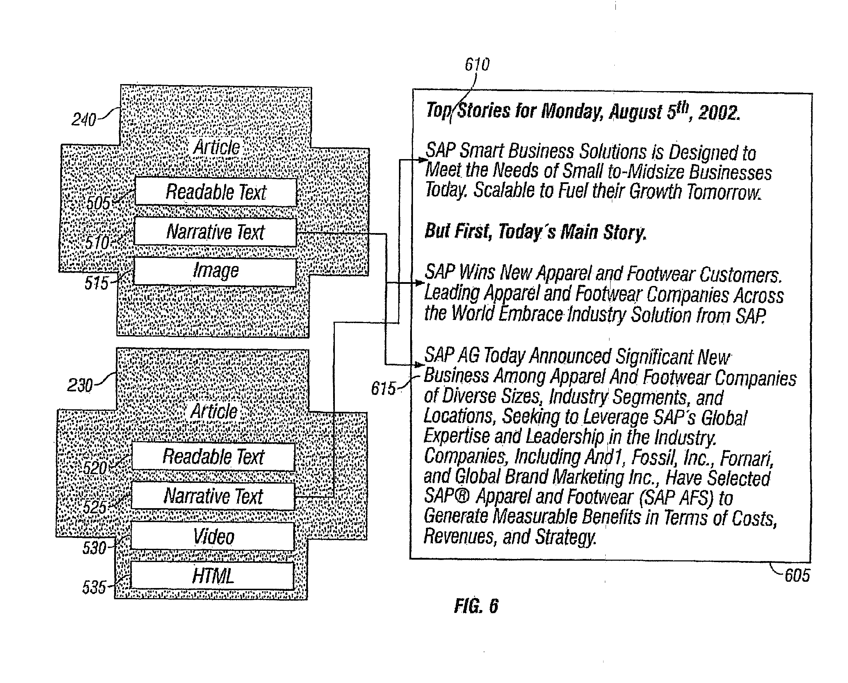

FIG. 6 shows an alternate pagination process for rendering articles 240 and 230 within bucket 410. In FIG. 6, pagination engine 165 determines that user A should receive the content of articles 230 and 240 as audio. This might be the case for a user wishing to receive articles 240 and 230 via radio and/or cell phone. Accordingly, a page 605 includes a portion of narrative text content block 525 rendered as audio portion 610, as well as narrative text content block 510 rendered as an audio portion 615. In page 605, article 230 is still prioritized lower than article 240, and might therefore generally be rendered subsequent to article 240. However, in page 605, a slightly different format is shown, in which a portion of lower priority article is shown as a "top story" to be discussed later in the page 605, whereas the higher priority article 240 is provided in its entirety as the day's "main story." Alternatively, a "teaser" for the main story could be given first, and then returned to after the less-important articles were read. Such alternate formats mirror popular formats of conventional news programs, and may be preferred by some users.

It should be understood from FIGS. 5 and 6 that an article may contain several content blocks or content segments, which might each represent a subset of the total amount of content within the article (or might include all of the content). Together, these portions represent the entirety of the article content, however, the content need not be shown in its entirety. For example, image 515 is not included in page 605, because the articles were to be rendered only as audio. Thus, the provision of at least a portion of an article's content, in a format most suitable for a particular user, allows maximum flexibility in providing the user with information in a personalized, convenient format.

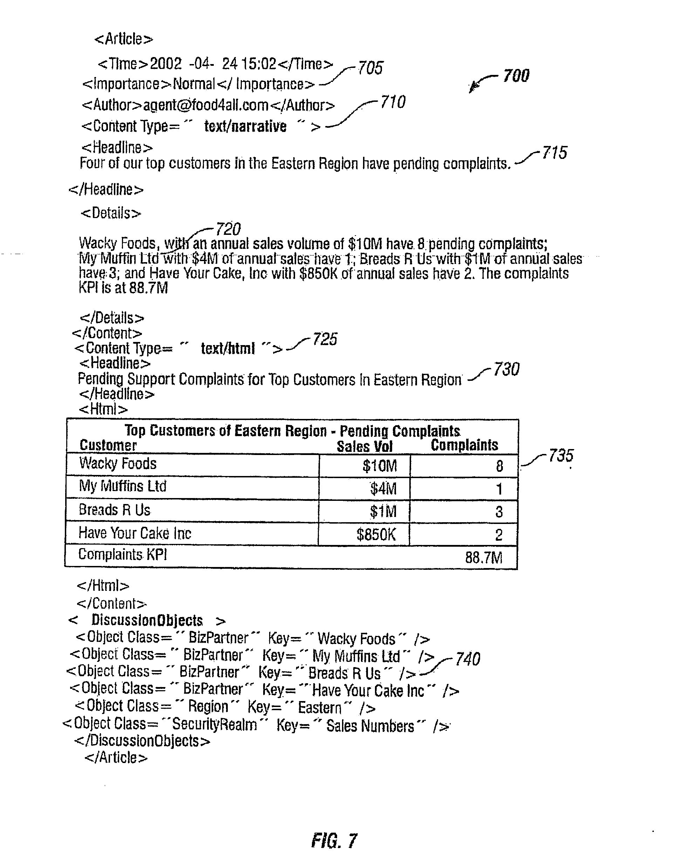

FIG 7 shows an example of an article used in one implementation. In FIG. 7, the article is expressed in one possible extensible markup language ("XML") form, however, other implementations of an article may take other forms. In a section 705, the article contains some general attributes like the time it was created, the importance of the story, and the author who created it.

Article 700 also contains several content blocks for one or more possible rendering scenarios. For example, a section 710 includes a "text/narrative" content block for cases where an audio description of the content is necessary (for example, if the content is to be broadcast on radio or read by a TV spokesman). This content block is analogous to narrative text content blocks 510 and 525, and includes a headline section 715, as well as a detailed content section 720.

A "text/html" content block is shown in a section 725, which is useful for cases where the content will be shown in a web browser. Section 725 also contains a headline in a section 730, as well as a body of information (in this case, a table) in section a 735.

Finally, article 700 includes a list of discussion objects in a section 740. As discussed above, these discussion objects can be included when the article is first generated, and/or can be added with metadata enhancer 120 after generation is otherwise complete. Section 740 includes relevant discussion objects that were part of the article content. In this example, four business partners were discussed in the content; therefore, the discussion objects block contains four objects of class "BizPartner." The article also relates to, and mentions in the content, the Eastern region and thus an additional object block is included to represent that object.

The discussion objects also include information about what is shown for the purpose of enforcing a security policy. In this example, article 700 shows sales numbers of customers and therefore a security realm is defined for that article stating that fact. Thus, in a filtering process such as process 305 in FIG. 3, users who are not allowed to see articles of this security realm will be denied access to the article.

Defining classes and determining what classes are available may be done in many ways. For example, classes could be rigidly defined and coupled to the system 100, or classes could be defined in a distributed manner based on the incoming messages. In the latter case, system 100 assumes that an object and class exist if and when such object or class are read in an incoming article. It does not try to enforce validity based on a pre-defined object model; in this case, the full list of discussion classes is the object model referred to above with respect to metadata enhancer 120.

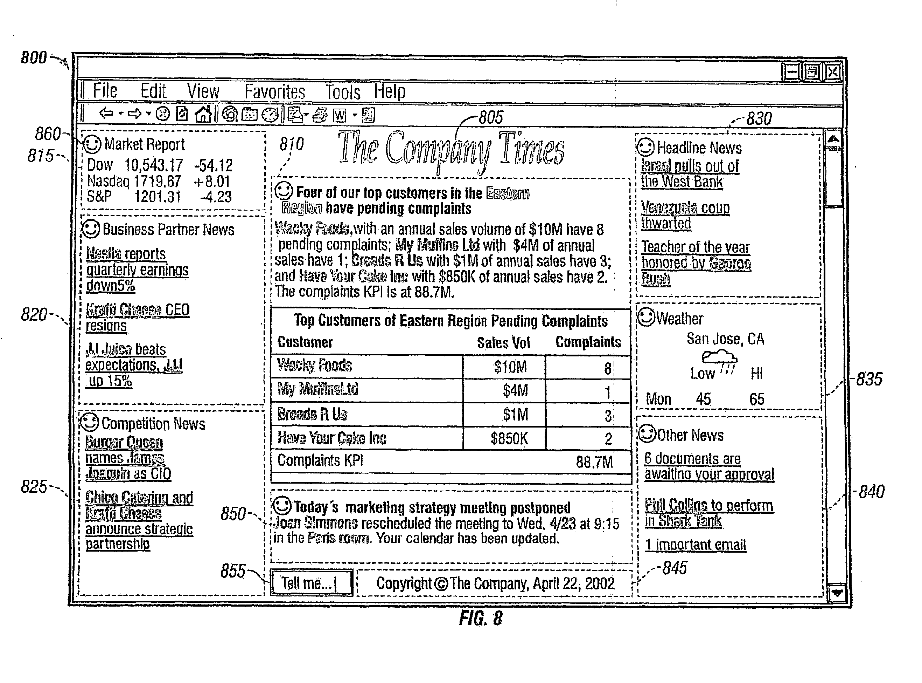

FIG. 8 demonstrates an example of an HTML result page 800 that includes article 700. Page 800 is generally organized like a newspaper front page, having a headline 805 (which in this case indicates the enterprise sponsoring the page). A main story 810, corresponding to article 700, is shown in the upper middle portion of the page. A section 815 shows current levels of the Dow Jones, NASDAQ, and S&P 500. The rest of page 800 includes additional hypothetical articles not previously described.

The filtering, sorting, prioritizing, and paginating processes already described determine whether an article is displayed in full size (for example, article 700 in section 810), simply as a link (for example, links within sections 820, 825, 830, 835, 840, and 850, which are shown grouped together with similar articles), with a "more" link (not shown) that does not include any details but allows access to additional articles, or not at all (in case there is no room on the screen). The rules under which the articles are rendered generally take into account both subjective (that is, according to user preferences) and objective (that is, according to the author) levels of importance assigned to each article and its content.

In FIG. 8, the highest-ranking article occupies a central location. If two or more articles are categorized as highest ranking, then a number of options are available for deciding how and whether to display them. Examples include: (i) one article could be selected, at random or otherwise, (ii) all, or some, of the articles could be rotated in and out of the page (which uses time slicing as well as real estate allocation), (iii) if there is enough space, then all of the articles could be displayed, or at least part of each of them, for example, by giving each article the same amount of space or allocating space based on priority, and (iv) one article could be selected for full, or primary display, and the others could be identified with links indicating the title of the article or with a "more" link.

The concept of using time as a variable (T), as well as space (which can be considered as a single variable of area or as two variables-X and Y), can be applied in many ways to render prioritized data on a page or other format. For example, articles or other data could be displayed at particular locations for specified times, scrolled, formed into a collage, zoomed in and out with a fixed or variable size space, etc.

It should be noted that articles within page 800 may take many various forms besides the form of a general news articles. For example, section 840 includes an email that can be read by, or read to, the user. Section 840 also includes internal documents to be approved by the user. As a final example, section 850 is devoted to a personal scheduling issue of the user.

In any case, page 800 is generally arranged such that more important articles, as determined by system 100, are assigned a more prominent position and/or size, whereas less important articles are assigned a less prominent position and/or size (and/or are shown only partially or in summary form). Such prioritized assignment of "real estate" on page 800 is generally without respect to a given category into which an article of page 800 might fall, but rather, as explained above, is determined based on the actual content of the article(s).

Some implementations may group together articles of similar type or content, and in essence "categorize" the page view. For example, all email articles might be shown together. Such categorization may be done dynamically, based on the available content. In some of these implementations, categories such as "emails" may be used due to the presence of a large number of articles within that category for a particular user; in these cases, a combined priority weighting may be used to determine their (collective) prominence on page 800. In others of these implementations, a location for a specific subset may be determined in advance; such fixed positioning may be used for all or part of page 800

Page 800 may allow the user to express his preferences regarding what is shown in several different ways. In this implementation of the user interface ("UI"), every identified discussion object in the page is highlighted and also an icon (for example, "smiley face" 860) is located next to some articles or groups of articles. By clicking on any of these icons and/or discussion objects, the user is provided with a dialog that allows him to express his opinion on the object or article associated with the point where he clicked.

For example, user A may have previously indicated that articles about the customer Wacky Foods (the company's most important customer) are to be upgraded. Article 700's importance is shown as Normal within section 705 of FIG 7, but since it discusses Wacky Foods, its importance level is upgraded to Important for user A. Article 700 may thus be shown in a more prominent location in the result page for user A.

A future article about Wacky Foods may come in as already being designated as Important. In such a case, user A's upgrade will make that article Critical, emphasizing it in the result page 800. This later article will then show more prominently than article 700.

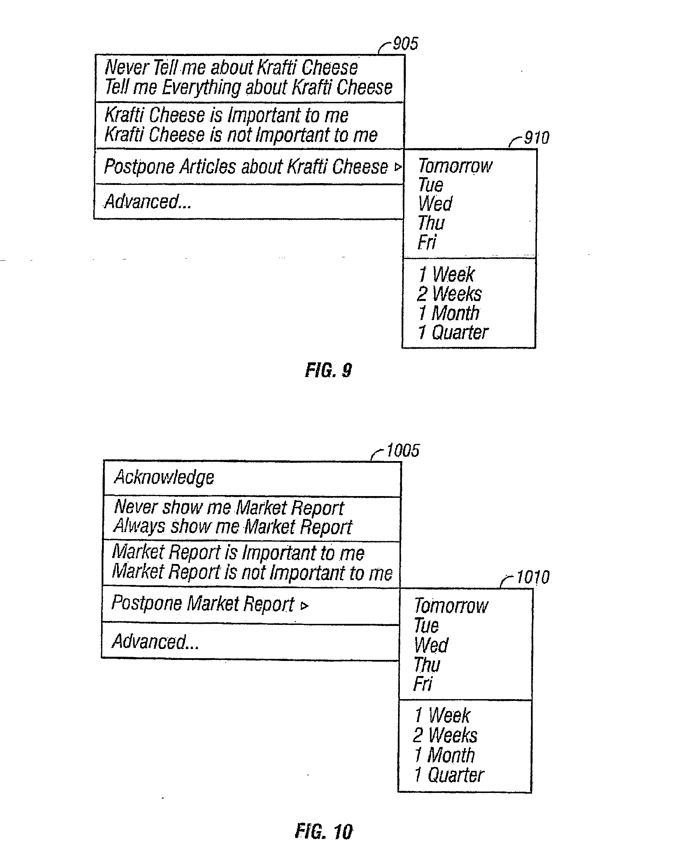

Further illustrating techniques by which a user may indicate preferences as to which articles should be shown and how they should be shown, FIG. 9 demonstrates a context menu 905 designed to allow users to input preference information. Context menu 905 may be accessed by a user by clicking on a highlighted discussion object within an article.

For example, a user may click on the words "Krafti Cheese" within one of the links contained in section 820. In context menu 905, the user is then able to indicate one of five possible opinions on Krafti Cheese: never to be shown articles about Krafti Cheese (but note that in cases where articles contain both Krafti Cheese and a discussion object that the user has expressed explicit interest in, the article may still be shown); always to be shown articles dealing with Krafti Cheese; upgrade (or promote) the importance of articles containing Krafti Cheese; downgrade (or demote) the importance of articles containing Krafti Cheese (if the user downgrades a discussion object some predetermined number of times, that discussion object may be thereafter blocked completely); and postpone articles about Krafti Cheese for a specified period of time (this option is useful if the user has more important tasks at the moment but wants to be informed of such articles at a more convenient time). In the last example, context menu 910 illustrates time periods which may be selected to set a length of a postponement.

Finally, context menu 905 includes an advanced opinion dialog, provided for cases where the user wishes to express, for example, complex conditional opinions on the discussion object. One such condition might be to block all articles about Krafti Cheese unless they are marked as important. Another example might be to block Krafti Cheese articles that originated from publicly-available sources. The "Krafti Cheese" article within section 820 referred to above, about a CEO resignation, is an example of such an article. The fact that it is publicly accessible may be indicated as an attribute of the article, for example, as a security realm, as a custom attribute, or by an author of the article.

It is also possible, though not shown in FIG 9, to allow the user to express an opinion about the class of the discussion object. This option would allow the user to no longer receive articles concerning any business partners, not just Krafti Cheese.

In a similar fashion, the user may express an opinion about an article as a whole. For example, if the user is no longer interested in receiving a stock market update in section 815, the user may click on the "smiley face" icon 860 next to the market article in section 815.

FIG. 10 demonstrates an opinion dialog 1005 that enables the user to express his opinion about an article such as the market report article within section 815. Similarly to context menu 905, context menu 1005 allows the user to characterize the article in question. For the postpone operation, a box 1010 is available to provide similar options to those discussed with respect to context menu 910.

An additional option shown in context menu 1005 is the ability to Acknowledge an article, allowing the user to express the fact that he or she does not want to be informed of this particular instance of the article anymore. Future versions of the same article, however, would still be considered interesting to that user.

It is also possible to let the user provide more information. For example, the user may give a reason why he or she is no longer interested in this article, the reason being, for example, one of the discussion objects contained within the article. This feature may be useful in cases where the full article is not fully displayed on screen, and therefore its discussion objects are not visible. For example, the first article in section 840 talks about six documents, but names and authors are not shown as part of the link because of lack of space. The user may specify that he no longer wants to be notified about documents from John Doe (a hypothetical author of one of the documents), for example.

In many cases, the user would like to indicate his preferences regarding objects that are not currently displayed on the screen. Such objects may have been read in a story in a newspaper, or seen on TV, or heard in a rumor. For those cases, the system 100 provides a Tell Me input box or similar UI in section 855 that enables the user to enter the name of what he or she is looking for.

As an example, if the user heard from the sales manager that sales of Pizza Zitti are down 5% this quarter, the user can type in Pizza Zitti in the Tell Me box and press enter. The system 100 will look up the object that matches the text, possibly presenting several options for the user to choose from. In this case, Pizza Zitti is a product, so every article containing a reference to this product will be prioritized based on the user's preferences regarding Pizza Zitti.

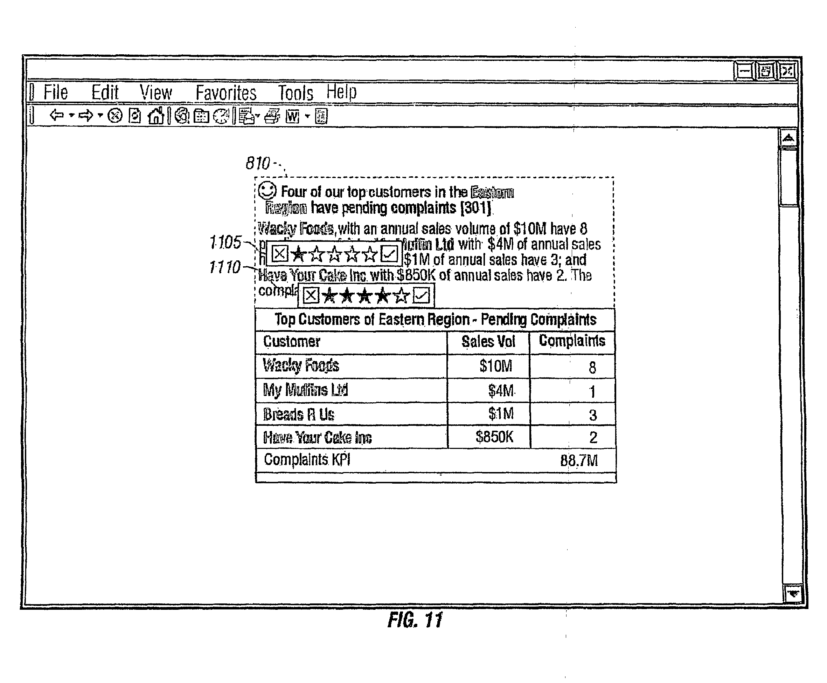

FIG. 11 demonstrates a different technique by which the user may express his or her opinions about a discussion object. In FIG. 11, clicking on a highlighted discussion object results in a pop-up box that allows the user to rate the discussion object. In FIG. 11, the discussion object "Wacky Foods" has been given one out of a possible five stars in pop-up box 1105, whereas the discussion object "Have Your Cake, Inc." has been given four out of five stars in a pop-up box 1110. Pop-up boxes 1105 and 1110 also include an "x" and a "check" box, by which a user may choose to "block" the given object or select to "always see" it in the future, respectively, as described above. Pop-up boxes like boxes 1105 and 1110 may be used with respect to individual discussion objects, classes of discussion objects, or may be used with respect to articles as a whole.

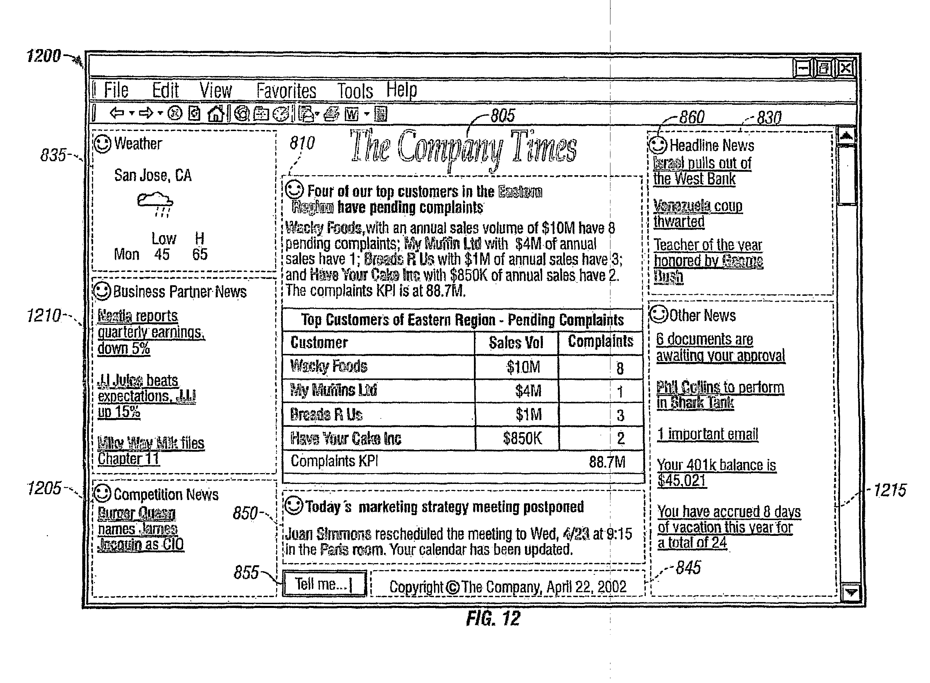

FIG 12 demonstrates a page 1200 that reflects user-expressed opinions with respect to page 800 of FIG 8. Specifically, page 1200 illustrates the situation in which the user (1) clicked on the Market Report 815 opinion icon 860 and indicated "no interest" in Market Reports, and (2) clicked on the words "Krafti Cheese" in section 820 and indicated "no interest" in Krafti Cheese.

Page 1200 reflects the resulting new set of preferences. Specifically, articles about Krafti Cheese in sections 820 and 825 are removed, and a new article entitled "Milky Way Milk files Chapter 11" is included instead. Also, the Market Report in section 815 is gone, and the weather article in section 835 has taken its place. Finally, additional space created by the above changes, particularly movement of the weather article in section 835, permits the addition of two new articles in section 840.

In some implementations, system 100 may learn automatically by observing the user's behavior. For example, if a user clicks on a particular article, the implementation may increment the priority of one or more of the various discussion objects represented by that article. Two possibilities, for example, are that (1) all of the discussion objects or object classes in that article are incremented in priority, or that (2) only a primary discussion object in that article is incremented. A primary discussion object could be determined in a variety of ways, such as, for example, by counting occurrences of search strings in the article. Priority may be a numerical scale or otherwise, allowing easy incrementing and decrementing.

Various operations depicted in FIGS. 2-6 may be combined. For example, operations of agents in gathering information for articles may be combined with the filtering, sorting, prioritizing, and/or pagination operations. In one implementation, each user may have an individual "agent" that performs all of the filtering, sorting, prioritizing, and/or pagination operations when a page is requested by the user.

Also, articles may be pushed straight from a source, rather than being collected by an agent. In one implementation, articles are broadcast and are filtered at the time of broadcast, by the broadcaster, to place them in one or more buckets. In another implementation, a user's system performs the filtering operations on articles as the articles are broadcast. In either of these implementations, the function of the agent has been moved to the broadcaster and the user, respectively, and the agent execution environment has been removed.

One implementation may process articles as they come in, filtering them into the buckets of each user at that time. The articles wait in that bucket until such time as a user requests a page. At that time the prioritization and pagination processes kick in, and the page is created. This may provide improved performance over filtering at the time a user requests a page, particularly in cases where the user logs into the system 100 relatively rarely.

Various implementations allow: (i) filtering articles or other data based on content of the delivered or available data, (ii) adjusting display of data based on content, (iii) filtering articles dynamically, upon viewing, or otherwise, (iv) adjusting display of data dynamically, and/or (v) separating producers of articles or other data from consumers of the data.

Implementations discussed above contemplate the use of audio and video presentations as part of a personalized delivery of content. In some implementations, these and other features can be utilized outside of the context of system 100 and the associated discussions above, and can be implemented similarly to portal-based techniques.

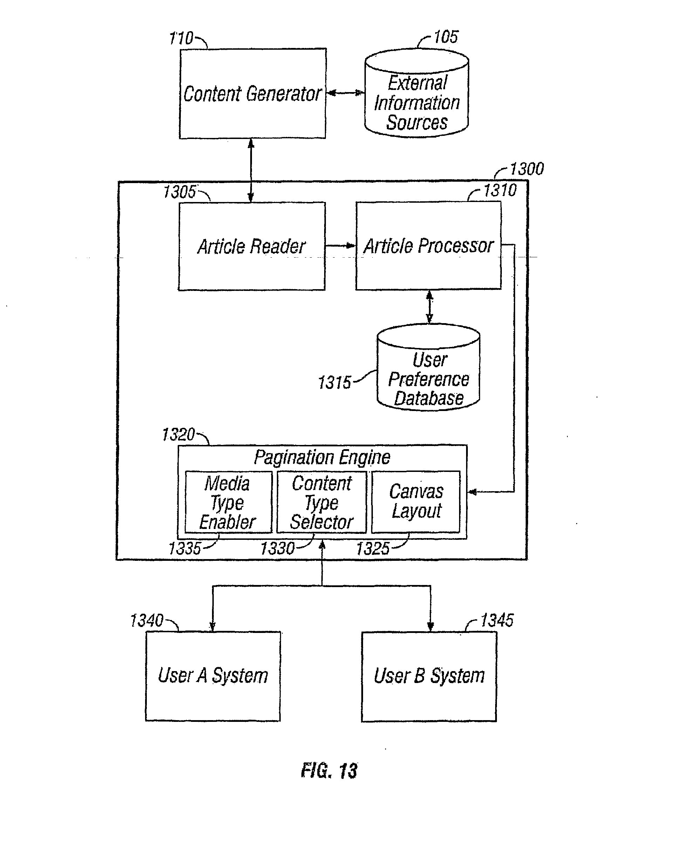

FIG 13 demonstrates an implementation of a content personalization system designed primarily for generating personalized audio and video-based information systems.

In FIG 13, article reader 1305 obtains articles from content generator 110. An article reader 1305 need not include a metadata enhancer, and need not store the articles separately (although the articles could be cached for possible later use, as is known). An article processor may then associate articles with particular users, using a user preference database 1315. This association may occur by virtue of content metadata such as discussion objects contained within the articles, as discussed above, or may occur only by virtue of a comparison of general article attributes to user preferences.

A pagination engine 1320 communicates with both article processor 1310 and user systems 1340 and/or 1345. Pagination engine 1320, as with pagination engine 165 of FIG 1, will typically have access to characteristics of the client system being used by each user, either from user preference database 1315, or determined from the user request at the time of the request.

In this way, pagination engine 1320 determines a layout of the canvas being used by each user, using a canvas layout subsystem 1325 that is similar to canvas layout subsystem 170 of FIG. 1. As with canvas layout subsystem 170, one of the services of the canvas layout subsystem 1325 is to determine how much "space" is available to the user for displaying articles, as well as any other user-specific capacity constraints relevant to deciding which articles to provide to the user(s).

Content-type selector 1330 may then determine which rendering media are available to the user for the selected canvas, and which articles are consistent, or can be made to be consistent, with that media. Media-type enabler 1335 is available to utilize a type of media that would not normally be available to the user, as discussed above with respect to media-type enabler 180.

As referred to above, in the implementation of FIG. 13, article selection and layout may be determined essentially as is done in the context of traditional portal technology, or may incorporate any or all of the advantageous features of system 100. In any case, as discussed in more detail below, system 1300 serves to provide personalized audio and/or video presentations above and beyond the context of traditional browser-based technologies.

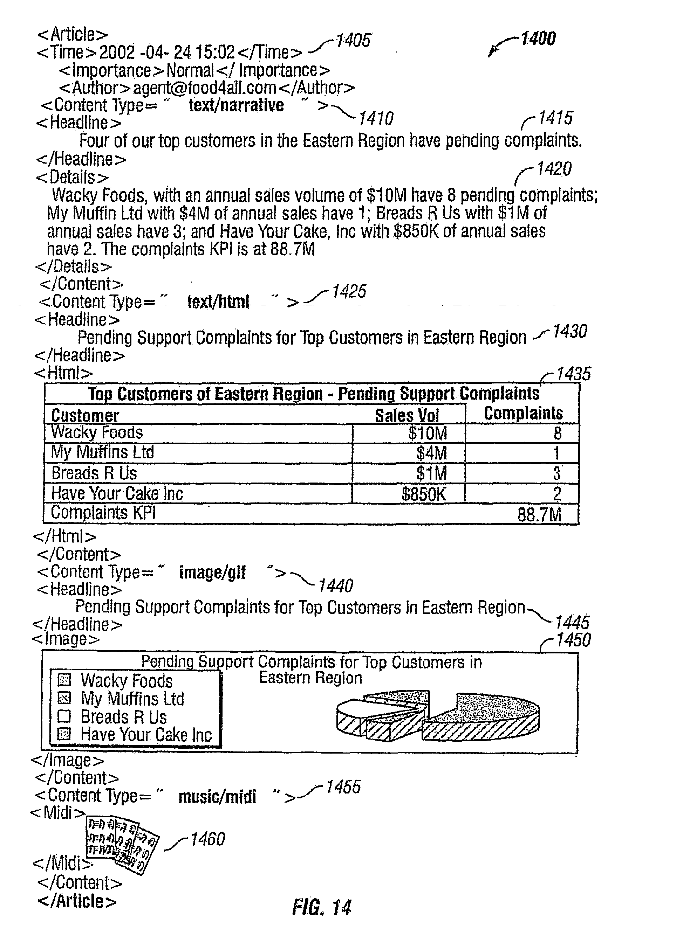

FIG 14 demonstrates an article 1400 used in one implementation of the system. Article 1400 is similar to article 700 in many respects, and is also written in XML. In article 1400, a section 1405 contains general attributes of the article, such as its author, time of creation, and level of importance. A section 1410 labels a first content portion as being narrative text in proper grammar for reading and having a headline portion 1415 and a details portion 1420. A section 1425 labels a second content portion as being HTML-based, with a headline in section 1430 and a table 1435, as its detailed content.

A section 1440 labels the next content block as containing a viewable image in a standard format such as ".gif." The image has an associated headline in section 1445, and is itself located in section 1450. Finally, a section 1455 labels a last content block as containing music, which may be, for example, background music having no words, in a standard format such as "midi." The actual midi file is in a section 1460.

Although not explicitly shown, it should be understood that video (for example, MPEG) and other formats also may be used. Also, as should be understood from FIG. 6, articles such as article 1400 may include summaries of the articles, or of article portions. Also, content blocks may be labeled as mutually exclusive or not, for example, typically an article summary would not be included in the same page as the article itself, as that would be redundant.

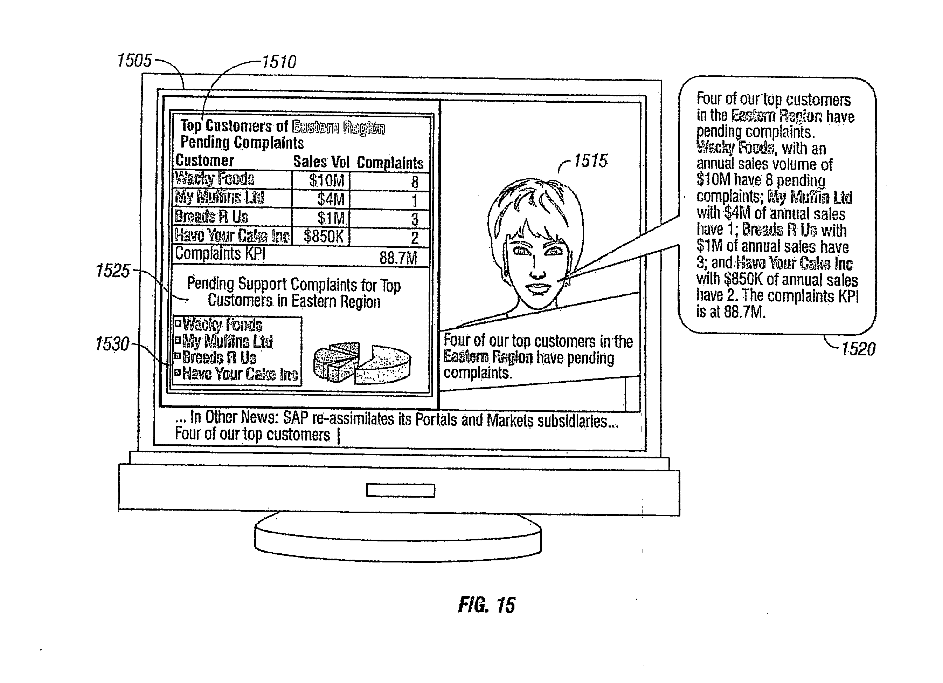

FIG 15 shows one implementation of a rendering of article 1400. In FIG 15, a computer 1505 displays in a section 1510 the HTML table from sections 1430/1435 of article 1400. A section 1515 depicts an anchorwoman "reading" the story of section 1415/1420; that is, a computer-generated image of a woman with animated lips and eyes moving to simulate talking, generates audio represented by a section 1520. Headline 1425 may be read by the generated anchorwoman image, and/or may be shown as an image 1535 (note that, since narrative text can be treated as readable text, it does not always have to be read).

A section 1525 displays the gif image from sections 1445/1450 of article 1400, and though not explicitly shown in FIG. 15, the midi music file from section 1460 may be played in the background, or may be ignored. Finally, a section 1530 displays additional headlines from other articles, which may be aggregated for inclusion in the display of computer 1505 by pagination engine 1325. These articles may be, for example, articles designated as "headlines of the day" by article processor 1415 or articles related to the currently-displayed article. These articles may be non-specific to users A and B, or may be specific to a group of users.

In FIG 15, the layout places the sensory input types into appropriate positions. For example, the anchorwoman cannot "read" an image; she can only read narrative text. The system 1300 has chosen, using canvas layout subsystem 1325, to display the two viewable images contained in the article 1400; two are shown because there is enough real estate on the screen of computer 1505. Other implementations may show one at a time, flicking between them, or not show some of them at all.

The following examples demonstrate various utilizations of content presentation systems. Many people today spend a lot of their time commuting to work. They sit in a car usually listening to the radio without the ability to access corporate data, or perhaps they have a conference call with several colleagues. Content presentation systems as described herein may allow this time to be better used by generating an audio track summarizing the day's news. The track's time length can be set so as to cover the time it takes the employee to commute. Then, the employee can simply call a phone number to access the information needed to start the day. Alternatively, the audio track may be delivered to a capable audio player like an MPEG Layer 3 ("MP3") player or a PDA. Delivery may be made, for example, by downloading from a cellular network.

In a company building, there are several places of high-traffic where people congregate. Those places are often characterized by not having access to computers. Two examples of these places are the lobby and the cafeteria. Implementations of content presentation systems may be used to generate a video track that will run in a loop and be shown on a television screen. People can then watch that video while they wait in the lobby (for example, public company data shown to a guest of the company) or eat lunch (for example, internal company news for its employees).

Another example of a location where people wait, often with little or nothing to do, is an airport. In many airports, next to the boarding gate, there are TV sets tuned to a news station, such as the Cable News Network ("CNN"). In some cases, the channel is even customized for airport use. However, there is only one channel for all airports, so the channel is not personalized to a particular airport or even a gate. Various implementations allow for such personalization. For example, depending on a destination of a flight leaving a near-by gate, as well as connecting flights out of that location, the video may show relevant weather reports, flight delays, security alerts, or terminal maps.

Various implementations allow a content editor to personalize an information system for a group of users, such as by personalizing a TV station for passengers at a particular gate in a specific airport. Various implementations allow an individual user to personalize an information system for himself, such as by personalizing a voicemail recording of particular news items so that the user can listen to it during the morning commute. The acquisition, rendering, and delivery of such personalized information can be automated and no human involvement is necessary. Mediums such as, for example, TV, telephone, computer, and radio can be used.

Moreover, the personalization process itself can be automated. For example, using the example of the airport gate TV, the destination of a flight can be input as "user preferences" in database 1315 (here the "user" is, for example, an airport administrator, and system 1340 is the gate TV) by accessing a flight schedule database.

As already mentioned, acquiring, rendering, and editing data, as well as various other operations, can be performed in whole or in part using elements of system 100. Additional editing may be used to control the content for a specified period of time. For example, a user may personalize the rendering format to provide ten minutes of different content in an audio format. Articles or other data could be prioritized based on content, with entire articles narrated in order of priority. Such narration could be used in an audio format, and also in a video format with additional information being visible.

A number of implementations of methods and systems for presenting personalized content have been described. Nevertheless, it will be understood that various modifications may be made. For example, the system 100 can be used without the personalized security and/or preference-based filtering performed in content-based router 130; that is, all articles in database 125 may be prioritized by PAP 145. Also, prioritization in PAP 145 may occur before security/preference-based filtering. Security-based filtering may occur without preference-based filtering, and vice-versa. Also, content-based router 130 could be implemented in two separate subsystems, one subsystem being responsible for security-based filtering, while the other subsystem is responsible for preference-based filtering.

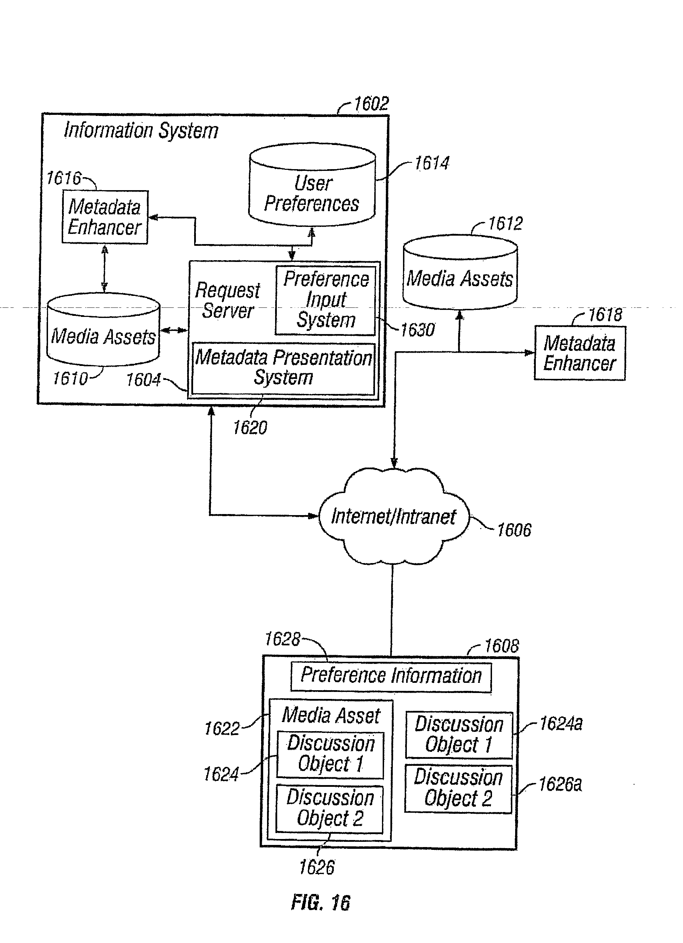

FIG. 16 is a block diagram illustrating a structure and use of a personalized information system 1602. In FIG. 16, the information system 1602 includes a request server 1604 operable to output media assets, using a network 1606, to a user of a user interface 1608. The network 1606 may be for example, the public Internet, or may be an intranet, such as an enterprise-wide intranet. The user interface may be shown on a presentation device, which may be some type of user display. Such a user display may be, for example, a television or computer screen. Such a presentation device includes presentation of content in any format, including video, audio, text, or any other format, or any combination thereof.

The request server 1604 may obtain media assets from a plurality of sources. For example, a media assets database 1610 is shown as being co-located with the request server 1604 within the information system 1602. Alternatively, the request server 1604 may obtain media assets from external sources, via network 1606, where the external sources are represented in FIG. 16 by an external media assets database 1612.

The request server 1604 selects particular media assets for delivery to the user based on user input and/or information stored in a user preferences database 1614. The request server 1604 is assisted in populating the user preferences database 1614, and in selecting particular media assets for delivery to the user, by the use of metadata associated with each of the media assets. Such metadata may be added to, and/or identified within, each of the media assets by the request server 1604, using a metadata enhancer 1616 that is co-located with the request server 1604 within the information system 1602. Alternatively, media assets obtained from sources external to the information system 1602, that is, from the media assets database 1612, may be similarly, but externally, supplemented by an external metadata enhancer 1618.

The metadata enhancer 1616 may be similar to, or the same as, the metadata enhancer 120, discussed above (for example, see FIG. 1 and associated discussion). Thus, the metadata enhancer may be used to identify and classify discussion objects, as discussed herein, or may be used simply to identify particular words, numbers, or other content characters/elements within a media asset. Such identification may, for example, allow a user to input preference information with respect to the identified content element. The content elements could be identified by, for example, matching elements within the content to a pre-determined list of elements. As another example, the metadata enhancer 1616 may have the ability to analyze content for types of information, such as examining content for numbers in the form xxx-xx-xxxx, and identifying this content element as a social security number. Other techniques could also be used for selecting content elements from within the content of a media asset.

It should be understood that some or all of the functionality of the request server 1604 may be performed on the client side, that is, at a local computer of the user. For example, preference information related to the user may be stored and used locally, and changes to the preference information (which may be updated or modified in the various manners described herein) also may be stored locally. Similarly, metadata enhancement and presentation within (or with respect to) a particular media asset may be performed on the client side, and may be performed on media assets stored locally and/or obtained via the network 1606.

By using content metadata such as the discussion objects mentioned above, the request server 1604 within the information system 1602 is able to gather and utilize very specific information about particular media assets, as well as different users' interest levels in those media assets. For example, the request server 1604 may include a metadata presentation system 1620 which specifically identifies discussion objects or other content metadata for a user within the display 1608.

In FIG. 16, for example, a media asset 1622 is presented to the user on the display 1608 by the request server 1604. The media asset 1622 has a first discussion object 1624 and a second discussion object 1626, which are particularly presented to the user by the metadata presentation system 1620. The presentation of the discussion objects 1624 and 1626 by the metadata presentation system 1620 may include, for example, highlighting, underlining, or bolding the discussion objects 1624 and 1626 within the content of the media asset 1622. As another example, the discussion objects 1624 and 1626 may be presented outside the content of the media asset, and within a separate portion of the display 1608, as a discussion object 1624a and a discussion object 1626a.

Regardless of how the discussion objects 1624 and 1626 are presented, a user of the display 1608 can enter a piece of preference information 1628 particularly regarding one or more of the discussion objects 1624 and 1626. The request server 1604 may thus input the preference information 1628 using a preference input system 1630, and thereby store preference information of the user within the user preferences database 1614.

As described in more detail below in various contexts, the implementation of FIG. 16 provides for fast, easy, and efficient collection of user preference information. Users are allowed to enter very specific preference information, while in the context of a particular media asset and/or user session, and/or while they are viewing the media asset. This preference information may include, for example, not only whether the user likes/dislikes a particular element of the media asset, but also an extent to which the user likes/dislikes that element. In the example of FIG. 16, the user will be able to express his or her opinion about particular elements of the media asset 1622, without ever having to leave the display 1608 currently displaying the media asset 1622.

Moreover, information other than preference information may be entered in a similar manner, for example, with respect to a particular element, as that element appears within a particular media asset. For example, an administrator may want to select the discussion object 1624 to create a record or listing of every media asset containing this discussion object, or to route media assets containing this discussion object to particular destinations/users. Such a rule or macro, for example, for the particular content element may be created with the content element is viewed within a media asset.

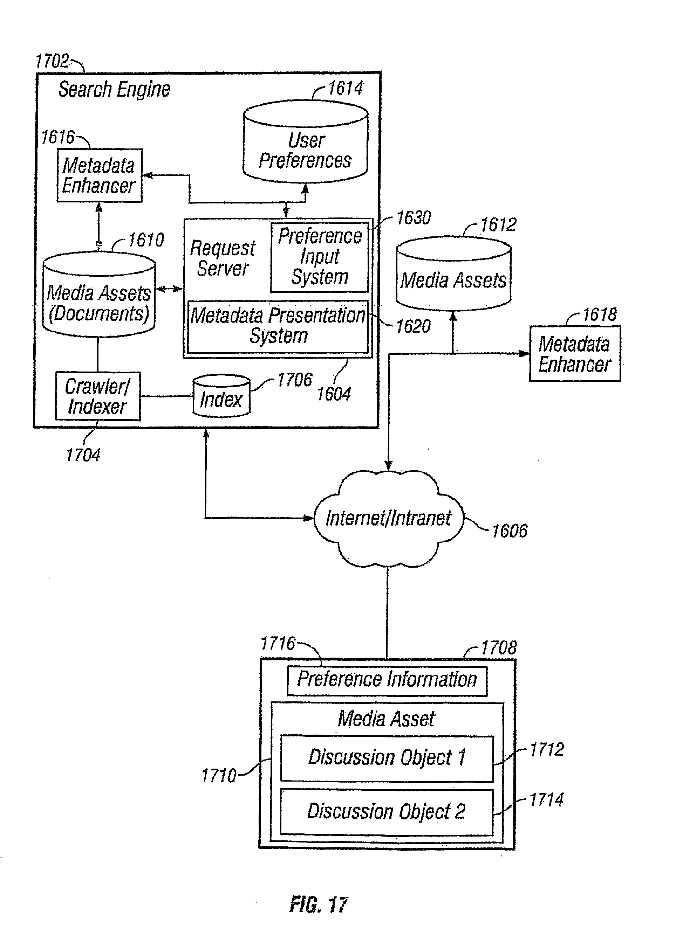

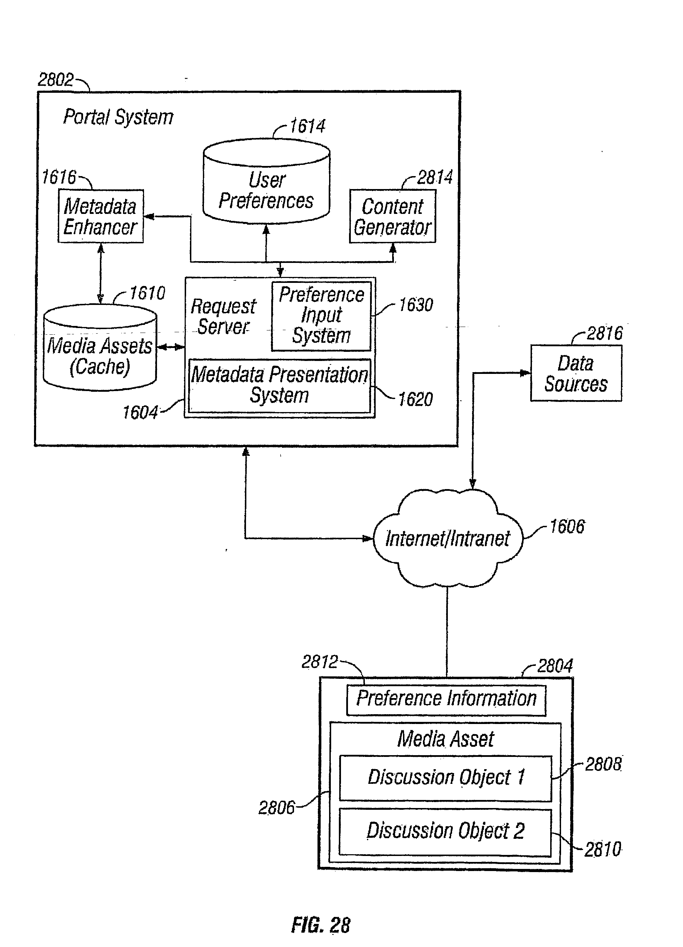

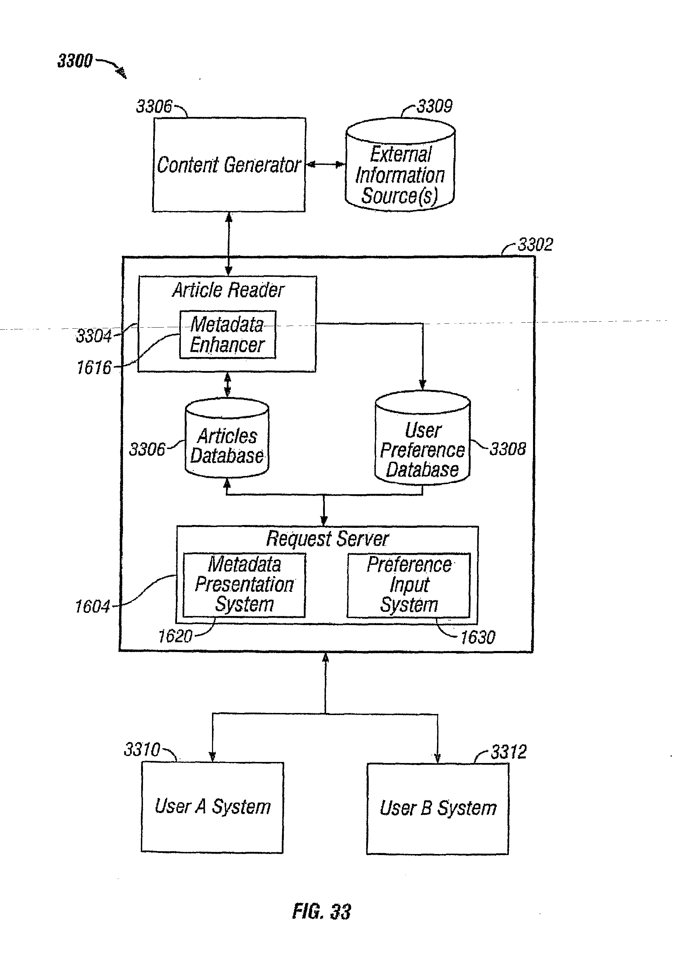

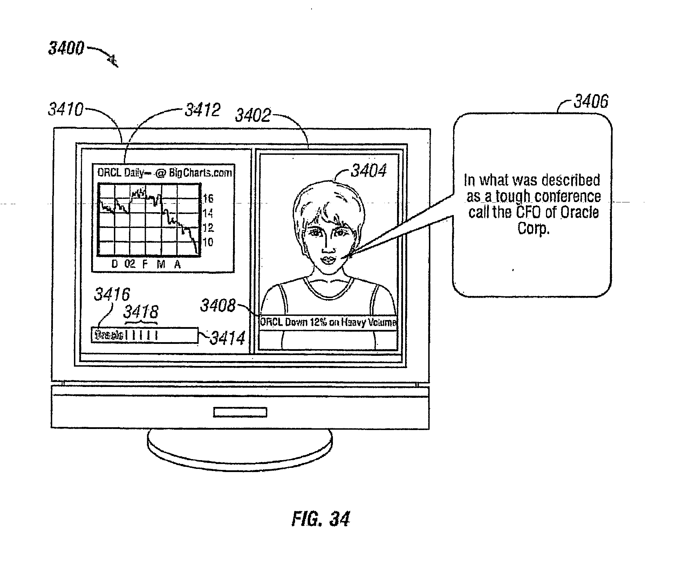

The information system 1602 of FIG. 16 may be implemented in various ways and in various settings. As examples, FIGs. 17-25 discuss variations of the information system 1602 in the context of a network search engine, while FIGs. 28-32 discuss variations of the information system 1602 in the context of a network portal page. As further examples, FIG. 33 discusses a variation of the information system 1602 in the context of a reverse-query portal page, while FIGs. 34-36 discuss variations of the information system 1602 in the context of a video presentation, such as a television broadcast.

FIG. 17 is a block diagram illustrating a structure and use of an internet search engine 1702. The search engine 1702 includes various elements in common with the information system 1602 of FIG. 16, and these common elements are not further described. The search engine 1702 utilizes a crawler/indexer 1704 to scan external data sources represented by the media assets database 1612. The crawler/indexer 1704 then analyzes and indexes the media assets obtained in this manner, storing the media assets (or a pointer to their remote location(s)) in the media assets database 1610, while storing the index information in an index database 1706.

In operation, the search engine 1702 typically receives a search request for one or more search terms from the user, examines the media assets database 1610 using the index information from index database 1706, and outputs the media assets to the user on a search engine display 1708. Other techniques for performing such a search also may be used.

In FIG. 17, the search engine 1702 outputs, as a result of the requested search, a media asset 1710 including a first discussion object 1712 and a second discussion object 1714. It should be understood in FIG. 17 that the media asset 1710 may represent a displayed portion of, and/or a link or reference to, a larger media asset, such as, for example, a title of the larger media asset. The title may be displayed along with the first few lines of the larger media asset (with the discussion objects 1712 and 1714 highlighted therein).

Alternatively, the discussion objects 1712 and 1714 need not be located within the first few lines of the larger media asset, but may be selected as particularly important or "primary" discussion objects from within the content of the larger media asset. In this case, the index database 1706 also may be used to store the discussion objects 1712 and 1714 (and any other primary discussion objects), in association with their respective media asset 1710. As a further alternative, the media asset 1710 may represent a media asset in its entirety.

In the context of the search engine 1702, preference information 1716 includes the search terms entered by the user. Conventionally, such search terms may be entered into an initial search engine home page, such that a conventional search engine may return search results, or a summary page of search results, including, for example, a plurality of various media asset portions which correspond to (for example, are hyperlinks to) media assets that include the search terms. In this way, the user may select a particular one of the media asset portions, in order to view the corresponding media asset in its entirety. If a user wishes to alter or refine the performed search, the user typically must return to the original search engine home page (for example, by using a "back" button on a web browser), and enter the new search term(s) into the original search field. Alternatively, some conventional search engines provide the search field within the initial search results summary page.

In contrast, search engine 1702 allows a user to obtain search results (and/or a summary of search results), and to enter preference information regarding those search results directly from the results themselves, that is, while viewing the media asset(s) (or portions thereof). In this way, the user may refine/alter a search quicldy and easily, as explained in more detail below.

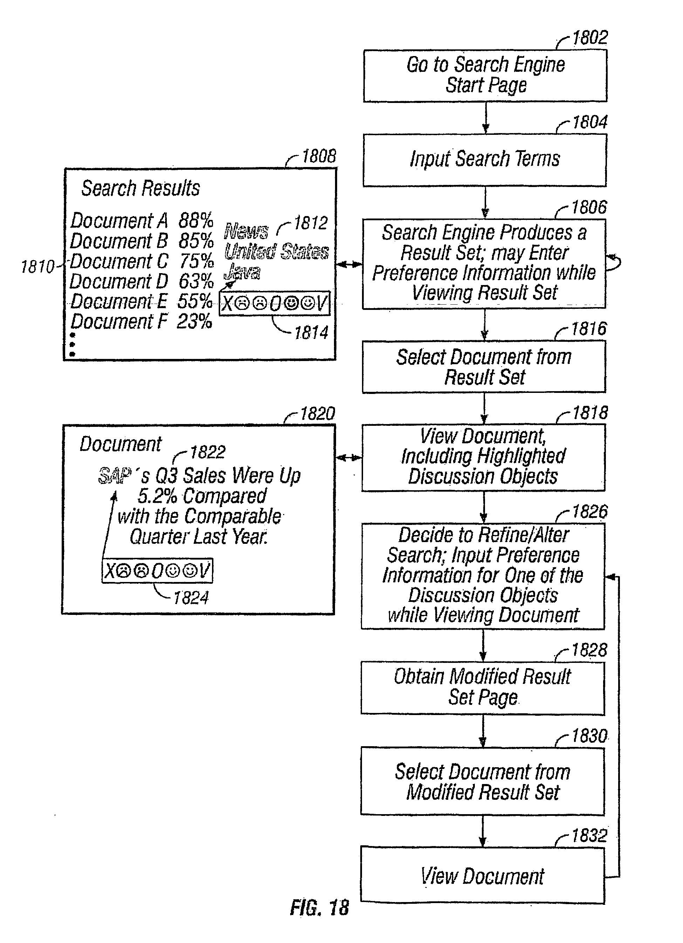

FIG. 18 is a flow chart illustrating an operation of the search engine 1702 of FIG. 17. In FIG. 18, a user first interacts with the search engine 1702 by going to an associated search engine start page (1802). At the search engine start page, the user inputs desired search terms (1804), whereupon the search engine 1702 produces an initial result set (1806). Alternatively, the initial search term may be obtained from an external location, for example, a web site.

An example of a result set is shown in a sample search result page 1808, in which a plurality of documents 1810 (that is, media assets) are displayed. The plurality of documents 1810 may represent, for example, portions of individual documents, where the user may select and view one of the documents in its entirety by, for example, clicking on a chosen document. As shown in page 1808, each of the documents 1810 includes an associated percentage indicating an extent to which the particular document matches the search terms input by the user. Also on page 1808, a plurality of discussion objects 1812 may be highlighted for the user, so that the user may input preference information about one or more of the discussion objects 1812. In page 1808, the discussion objects 1812 are shown separately from the documents 1810, however, the discussion object 1812 (as illustrated below) also may be included within the content of each of the documents (or document portions) 1810.

In page 1808, and as discussed in more detail below, a technique for indicating a preference about a particular discussion object includes a pop-up window 1814. The pop-up window 1814 may be obtained, for example, by the user clicking on a particular discussion object, or simply by "hovering" a cursor over the desired discussion object, using the user's mouse or other computer input technique. The pop-up window 1814 includes a range of preference information which may be selected by the user, ranging from "never show information about this discussion object," represented by the "x" at the left side of pop-up window 1814, all the way to "always show information about this discussion object," represented by the "v" on the right side of pop-up window 1814. Of course, other preference information could be incorporated within the pop-up window 1814, or elsewhere.

Once the user has received the initial search result set such as page 1808, and has expressed additional preference information about any one of the documents 1810, or the discussion objects 1812 within the page 1808, a new search result page (not shown) may be generated accordingly. The new search result set may be generated automatically upon inputting preference information from the pop-up window 1814, or may be generated upon a "refresh" command from the user. In the latter case, the user may input preference information about a plurality of discussion objects before reloading the page and thereby obtaining a new search result set.

At some point, the user selects a particular document from a result set currently being viewed (1816), so that the user is able to view the selected document (1818). An example of a selected document is a document 1820, which includes an associated discussion object 1822. The user may express preference information about the discussion object in the manner discussed above, using, for example, a pop-up window 1824. This preference information may be used by the search engine 1702 to refine/alter the current search, and is entered while the user is viewing the document 1820 (1826). Thus, the user will obtain a modified result set page (not shown), similar to page 1808 (1828), and may thus continue to select a second document from the modified results set (1830), and thus view the newly selected document (1832).

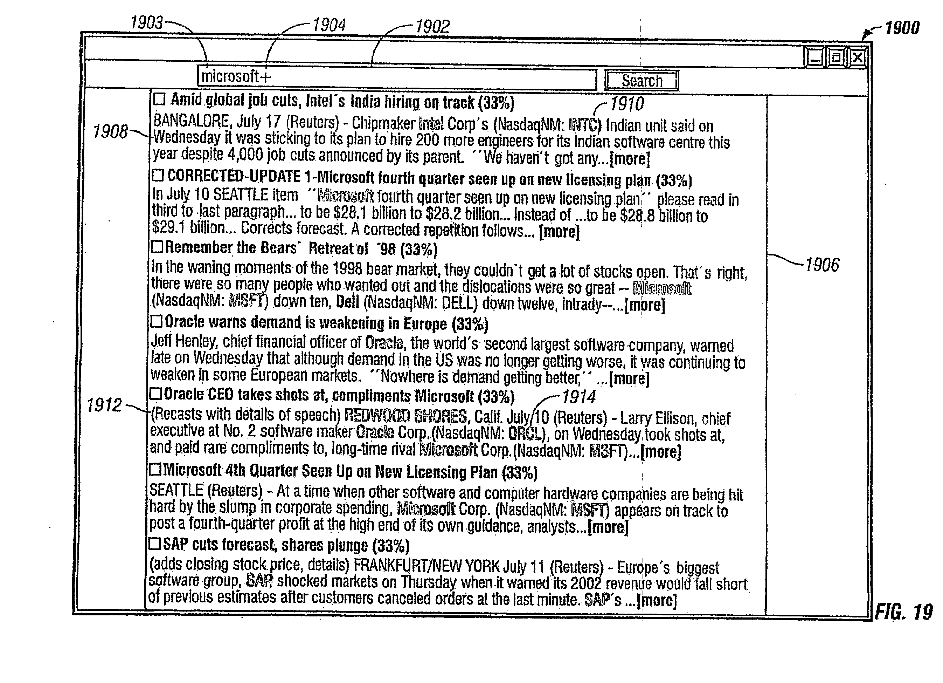

The above technique for collecting preference information in the context of a search engine is discussed in more detail below with respect to Figs. 19-27. However, it should be understood from FIG. 18 that the techniques discussed therein may be advantageous over conventional search engine systems. For example, conventional systems often require a user to return from a viewed document to a search engine home page and/or search result page in order to refine or alter a particular search. Moreover, in conventional search engines, the user typically refines or alters a search by entering new search terms into a search field. In contrast, the techniques discussed with respect to FIGs. 17-27 allow a user to enter preference information while actually viewing a particular document (or portion thereof), and do not require the user to explicitly type in the preference information in order to have the preference information reflected in a revised search. Thus, the user may perform searches quickly, easily, and efficiently.

Further, the techniques of FIGs. 17-27 may actually suggest new search terms, by identifying discussion objects within the search results, to aid the user in constructing a desirable search. Moreover, the ability to enter a range of preference information, rather than just "include" or "don't include," allows a user more options in refining a search. For example, by expressing only a slight dis-interest in a particular discussion object, a user may find the discussion object still included within a search result set (as long as there are few or no documents within the result set that contain search terms of greater interest).

FIG. 19 is a first screen shot 1900 illustrating an operation of the search engine 1702 of FIG. 17. Screenshot 1900 is analogous to the page 1808 in FIG. 18, that is, it includes references to a plurality of documents (and portions of each of the referenced documents), where the documents have been obtained by the search engine 1702 in response to a particular search term. In particular, in screenshot 1900, it can be seen that the user has entered the search term "Microsoft," which appears in a search field 1902. It should be noted that a plus sign 1904 after the search term Microsoft indicates that the term must be found in each returned document. A plus sign may be assigned as the default level of approval assigned to the search term, based on the fact that it was used as a search term by the user. As a result of performing a search on the term Microsoft, the search engine 1702 has returned a plurality of documents 1906 within the screenshot 1900, where each document contains the search term "Microsoft."

Within each of the documents 1906, at least one discussion object has been highlighted. For example, in an article 1908, a discussion object 1910 is a stock symbol "INTC" for semiconductor chipmaker Intel Corporation. Similarly, an article 1912 includes a discussion object 1914 showing "ORCL," the stock symbol for the software maker Oracle Corporation.

In one implementation, the user may be provided with a mechanism to take one or more predefined actions with respect to a discussion object. For example, the user may be provided with a set of choices regarding each discussion object (for example, when the user "right clicks," that is, clicks on the discussion object using a right mouse button), where such actions may include performing a search only on this discussion object, or obtaining a stock quote for this discussion object. The set of choices also may be provided, for example, as a listing within a reserved portion of the screenshot 1900 (not shown), so that the user may "drag" the discussion object and "drop" it over a particular action from within the listing, to thereby cause that action to be performed.

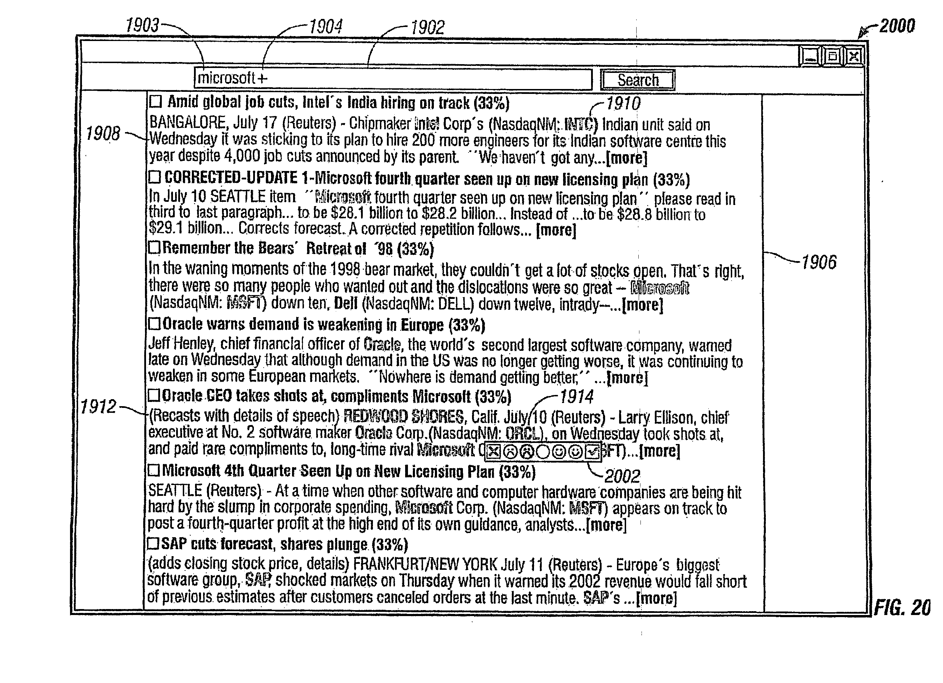

FIG. 20 is a second screen shot 2000 illustrating an operation of the search engine 1702 of FIG. 17. In screen shot 2000, the user has selected the discussion object 1914, in order to input preference information about this discussion object. Specifically, the user has obtained a pop-up window 2002 by selecting the discussion object 1914 (that is, by clicking on the discussion object 1914, hovering the mouse over it, or using a similar technique, as discussed above), and the user has selected a slightly negative rating for this particular discussion object, as shown.

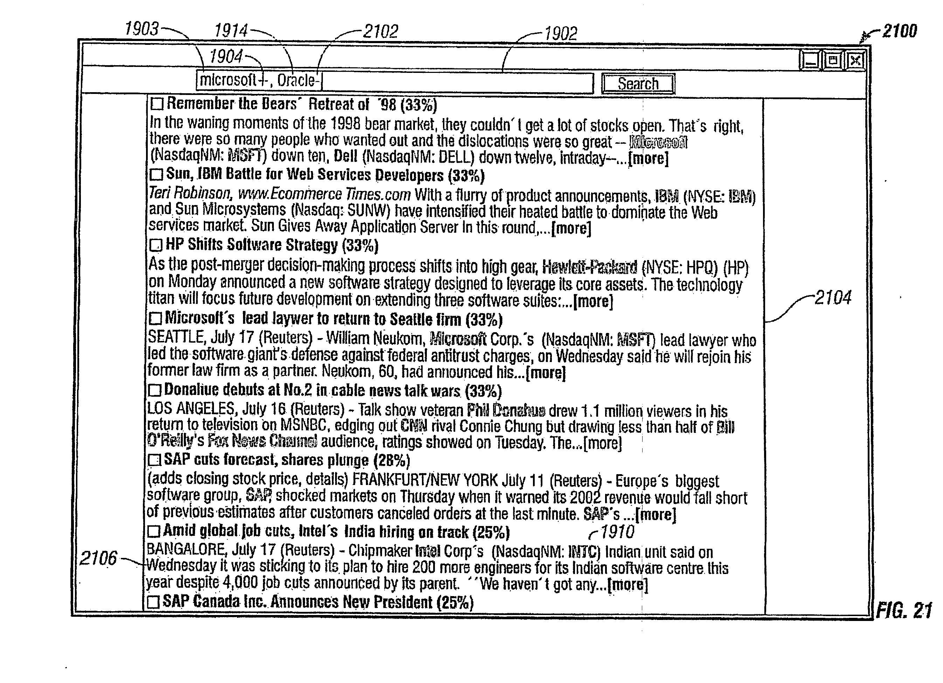

FIG. 21 is a third screen shot 2100 illustrating an operation of the search engine 1702 of FIG. 17. Screen shot 2100 reflects a result of the preference information entered by the user with respect to screenshot 2000. Because of the negative preference indicated by the user regarding the discussion object 1914 "Oracle," this discussion object 1914 is now included within field 1902, along with a minus sign 2102 indicating the slight negative preference input with respect to screenshot 2000. That is, a stronger negative preference might be shown as two or three minus signs, or by some other designation. It should be understood that the discussion object 1914, although shown as a stock symbol in screen shot 2000, may include information referencing the software maker Oracle Corporation more generally.

As a result of the preference information entered in screen shot 2000, screenshot 2100 includes a new set of documents 2104 (documents 2104 are actually portions of referenced documents). For example, the documents 2104 include a document (portion) 2106 including the discussion object 1910 "Intel," discussed above with respect to FIG. 19. In screenshot 2100, it should be noted that documents 2104 no longer include documents related to the discussion object 1914 "Oracle," since the negative rating given to that discussion object caused corresponding documents to be listed lower than the eight documents partially or completely listed in screenshot 2100.

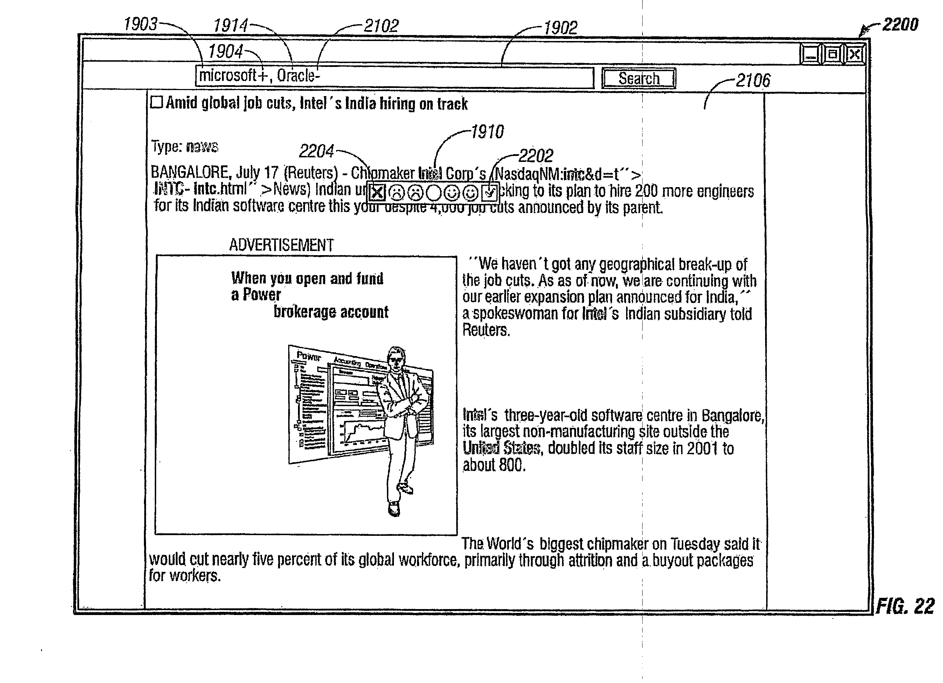

FIG. 22 is a fourth screen shot 2200 illustrating an operation of the search engine 1702. In screen shot 2200, the user has selected the document 2106 from screenshot 2100, and search engine 1702 now displays the entirety of the referenced document 2106. While viewing the document 2106, the user is able to input preference information about the discussion object 1910 "Intel," using a pop-up window 2202. Specifically in the example of screen shot 2200, the user has input the preference that information about discussion object 1910 should never be included in future result sets, by selecting a box 2204 marked "X."

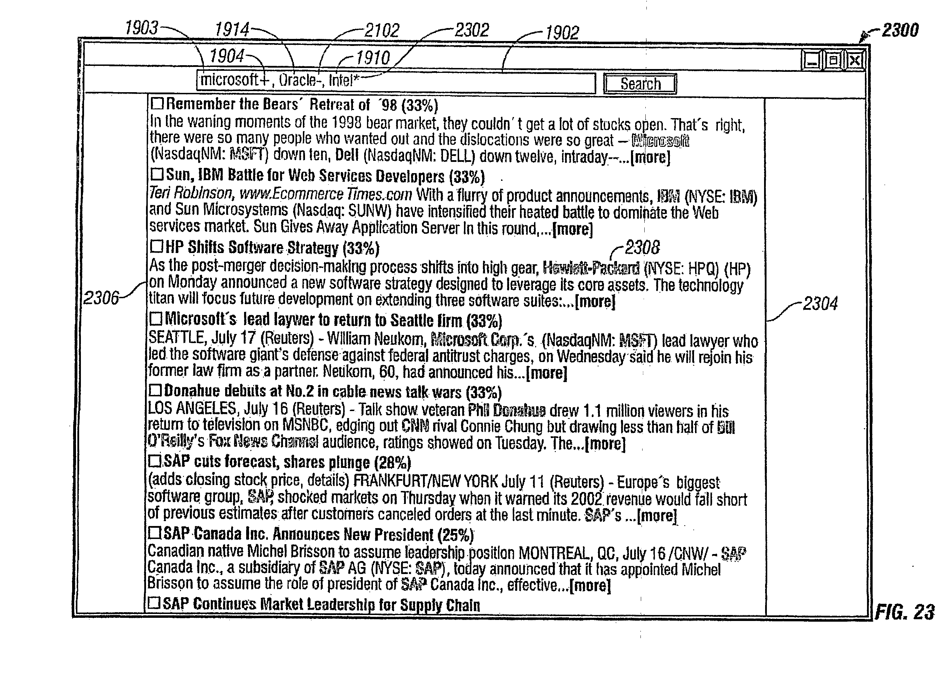

FIG. 23 is a fifth screen shot 2300 illustrating an operation of the search engine 1702 of FIG. 17. In screen shot 2300, the discussion object 1910 "Intel" is now included within the field 1902, along with an asterisk (*) 2302, indicating that it is a discussion object not to be included in future search results. Also in screen shot 2300, a plurality of documents 2304 have been returned, reflecting all the preference information input to date, that is, an interest in discussion object 1903 "Microsoft," a slight dis-interest in discussion object 1910 "Oracle," and a total lack of interest in the discussion object 1910 "Intel."

Reflecting this information, the documents 2304 do not include the document 2106 from FIGs. 21 and 22, since this document contains the discussion object 1910 "Intel." Other documents within documents 2304 may have already been included in previous search results, such as, for example, an article or media asset 2306, which includes discussion objects such as a discussion object 2308 "Hewlett-Packard."

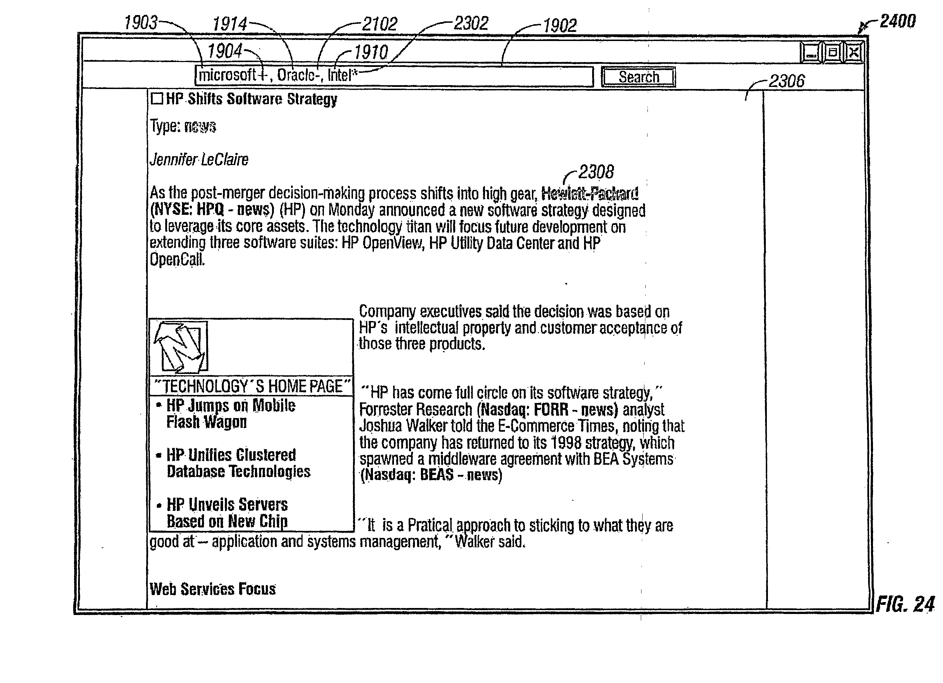

FIG. 24 is a sixth screen shot 2400 illustrating an operation of the search engine 1702 of FIG. 17. In screenshot 2400, the user has selected the media asset 2306, which is now displayed for viewing. The media asset 2306 may be shown in its entirety, either within a single screen, or, if necessary, with the benefit of scroll bars or other techniques for viewing a document which requires more than one full screen to view. In screenshot 2400, the media asset 2306 is rendered (by the search engine 1702) so as to highlight the various discussion objects (for example, the discussion object 2308 "Hewlett-Packard") within the body of the media asset 2306.

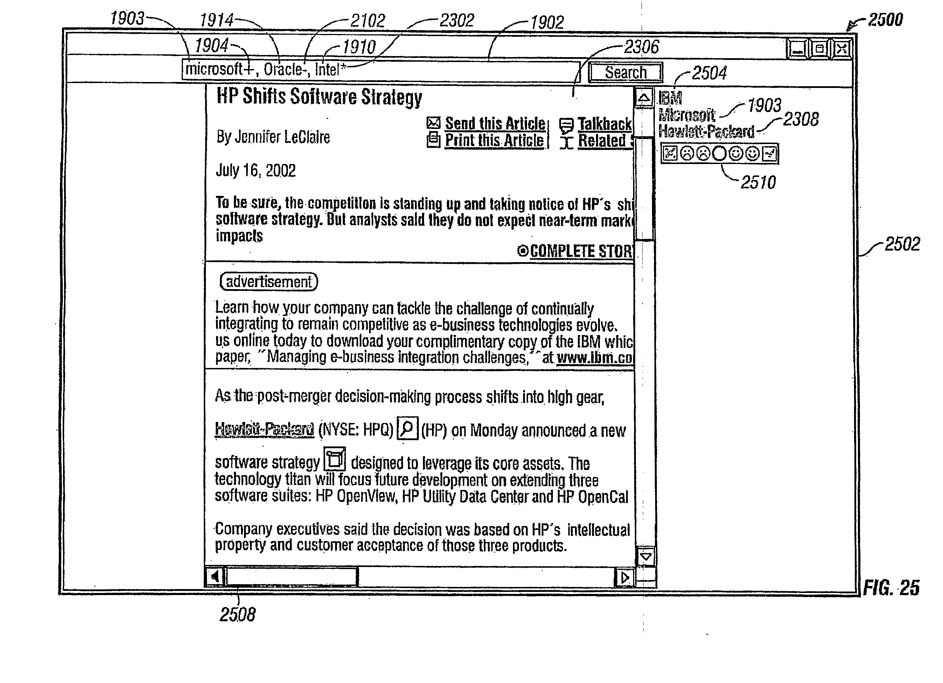

FIG. 25 is a seventh screenshot 2500 illustrating an operation of the search engine 1702 of FIG. 17. In screenshot 2500, the original media asset 2306 is displayed, that is, the discussion objects associated with media asset 2306 are not displayed within the context of the media asset 2306 itself. Instead, some of the discussion objects are provided to the user within a reserved portion 2502 of the screen shot 2500. Within portion 2502, the discussion object 1903 "Microsoft," the discussion object 2308 "Hewlett-Packard," and a discussion object 2504 "IBM" ("International Business Machines") are displayed.

Although these discussion objects are shown grouped at the top of portion 2502, they also may be dispersed throughout the portion 2502, such that the discussion objects correspond to a location of their appearance(s) within the media asset 2306. In screenshot 2500, the original version of the media asset 2306 is displayed to the user by directing the user to a remote location of the media asset 2306, using a frame 2508. Also, it should be understood that discussion objects included in portion 2502 may be a partial or complete listing of discussion objects within the media asset 2306, and/or may contain discussion objects entered as a search term, even if such discussion objects are not actually contained in the particular media asset being viewed.

In differentiating between screen shots 2400 and 2500, it should be understood that screen shot 2400 represents, for example, a situation in which the search engine 1702 has rendered a media asset (document) 2306. The media asset 2306 may be stored locally, or may be obtained (on-the-fly) from a remote location. Once obtained, the discussion objects within the media asset 2306 are identified (for example, using the metadata enhancer 1616), and the media asset is rendered by being converted to (in this case) HTML, with the discussion objects embedded within the HTML-formatted version of the media asset.

In contrast, screen shot 2500 represents a situation in which the search engine 1702 displays an original version of the media asset 2306. In this case, the media asset is an HTML document, and is displayed within the frame 2508, which may display the media asset 2306 by obtaining it directly from a remote location, as described above, or by obtaining the media asset 2306 from the database 1610. In either case, in screenshot 2500, the search engine 1702 has not altered the original version of the media asset 2306, but rather has determined discussion objects within the media asset 2306 for display within the portion 2502. In screenshot 2500, the discussion objects may be determined using, for example, the metadata enhancer 1616 and/or 1618.

In short, when the media asset 2306 is shown in its original version, its metadata may be better presented externally to the document, rather than within the content of the document itself. Such external presentation of the discussion objects may be in addition to, or instead of, inclusion of discussion objects within the document 2306 itself.

Regardless of where the discussion objects are displayed, all of the above information related to entry of preference information may be equally applicable. For example, a pop-up window 2510 also may be used with respect to the discussion objects within the portion 2502 of screen shot 2500.

In the above examples, preference information was entered using the pop-up windows such as the pop-up window 2510. However, various other techniques may be used for entering preference information.

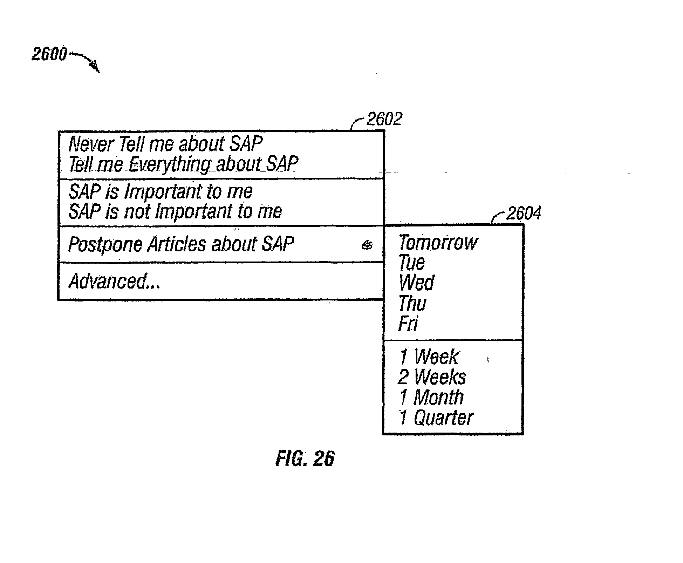

FIG. 26 is a screenshot 2600 illustrating a technique for entering preference information, similar to the technique shown above with respect to FIG. 11. In screenshot 2600, a pop-up menu 2602 illustrates various examples for entering preference information, such as never/always including a particular discussion topic, or indicating a relative importance of the discussion topic (discussion object). A sub-menu 2604 illustrates the possibility of providing additional information beyond that initially shown in menu 2602. In this case, the sub-menu 2604 is used to postpone media assets which include a particular discussion object for some selected amount of time.

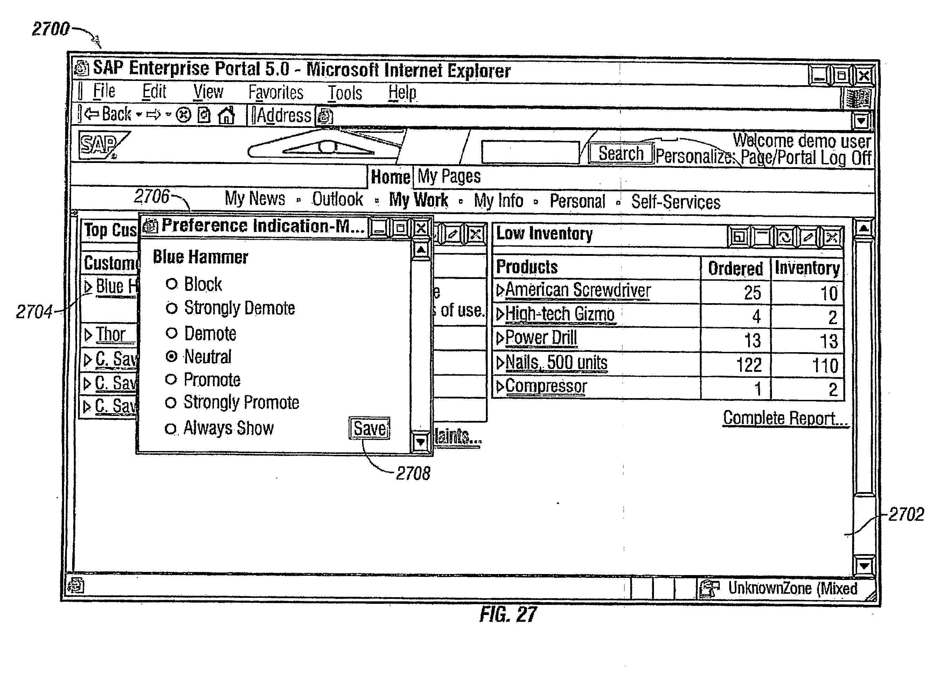

FIG. 27 is a screenshot 2700 illustrating a technique for entering preference information. In screenshot 2700, a page 2702 includes a discussion object 2704 "Blue Hammer." The user has selected (for example, by clicking with a mouse) the discussion object 2704 "Blue Hammer," whereupon a pop-up browser window 2706 is shown to the user. The pop-up browser window contains the name of the relevant discussion object, as well as a range of preference options for the user to select. Finally, the user may save the selected option ("Neutral" in this case) by selecting a "save" button 2708.

FIG. 28 is a block diagram illustrating a structure and use of a portal system 2802. In an example of a conventional portal system, as referred to above, a portal page may include one or more sub-sections or windows, which may exist in various (proprietary) forms, and may be known by a variety of names, such as "iViews" or "portlets."

In particular, iViews have two primary characteristics, specifically, their definition and their visual presentation. The term definition refers to the fact that iViews may be thought of as parameterized topics/queries, where the queries are pre-defined and encapsulated, for example, within Java code, thereby resembling a software module or a Java class. The values of the iViews parameters may then be set by, for example, the user, an administrator, and/or by default. The term visual presentation refers to the techniques for giving form to the iView, and associating the iView with a user and a page. At a time of visual presentation, the iView is typically allocated a location on a page (screen), and its parameters are filled based on the user preferences.

An iView may be associated with a personalization page, in which a user may modify a query associated with that iView by editing the values of the parameters. Thus, an iView designed to query a customer database and produce a list of the top ten customers, by revenue, may be edited to return only the top five customers.

A user may be provided with an initial preference page for associating an iView with a desired location on the user's portal page. Using the preference page, for example, the user might arrange multiple iViews, each associated with a query related to a topic such as "sports," "weather," and/or "stock market."

Then, each time the user logs onto the portal system and views the portal page, the iViews automatically run their respective queries, thereby obtaining relevant information for the user. Thus, iViews may be considered to be media assets themselves, and/or may contain a media asset (including a simple data list), a portion of a media asset, or a link to a media asset (for example, links to other iViews). If the user wishes to revise preference information (for example, a location of an iView on the portal page), typically the user returns to the initial preference page to do so, and then refreshes or reloads the actual portal page (which refreshes all contained iViews) to view the revisions.

As just described, it is not typically until the user logs on and requests a viewing of the (personalized) portal page that the portal system 2802 (that is, each iView) generates the corresponding information using a content generator 2803, which delivers a page 2804 to the user by performing a parameterized query against data sources 2805. However, it should be understood that the portal system 2802 also may perform predictive or preemptive publishing of media assets, in order to speed up an overall operation of the portal system 2802. In some cases, media assets may be temporarily cached after delivery to a user, in case a user requests the same media asset(s) in the near future.

Thus, the portal system 2802 typically-generates media assets, and provides these assets to the user according to a plurality of iViews that have been individually associated with queries that are of interest to the user. These iViews and their related information may be stored/implemented in, for example, the user preferences database 1614 and/or the content generator 2803. It should be understood that the media assets database 1610 within the portal system 2802 thus may represent a cache of media assets assembled in response to previous user requests, as described above.

During operation, the portal system 2802 presents the page 2804 to the user, as mentioned above. The page 2804 in FIG. 28 represents, for example, either an initial portal set up page, a portal page requested by the user, or a media asset 2806 selected by the user from the portal page (for example, an iView, or a media asset selected by way of a link contained within an iView, as described above). Page 2804 may thus include the media asset 2806 (or portion thereof), including a first discussion object 2808 and a second discussion object 2810.

As referred to above and discussed in more detail below, the discussion objects 2808 and 2810 may be highlighted within the media asset 2806, or may be provided to the user within a second portion of the page 2804. The user may express preference information 2812 specifically with regard to one or both of the discussion objects 2808 or 2810.

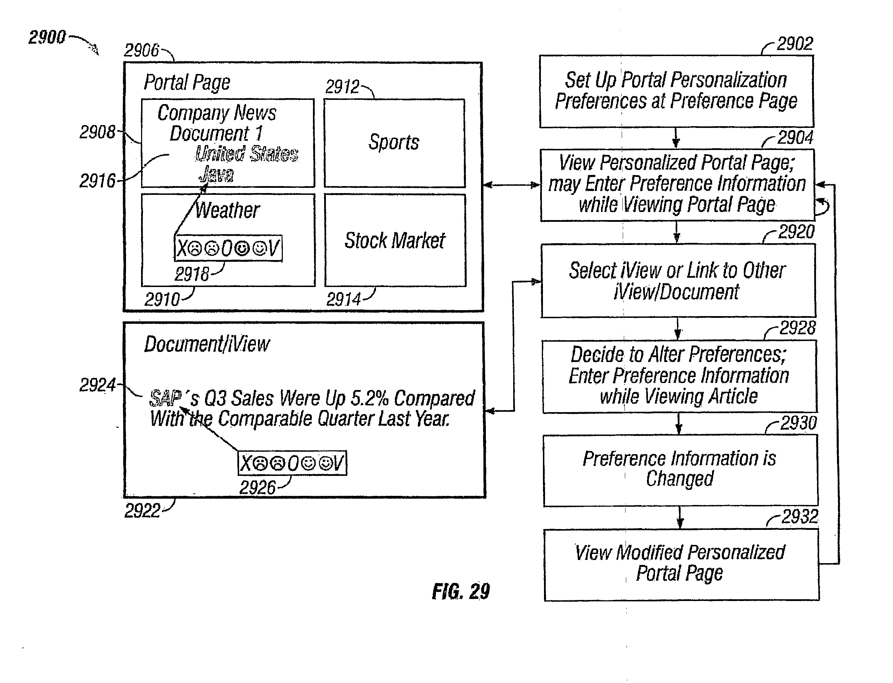

FIG. 29 is a flowchart 2900 illustrating an operation of the portal system 2802 in FIG. 28. In flowchart 2900, a user begins by setting up portal personalization preferences (for example, selecting a number/size ofiViews) at an initial preference page provided by the portal system 2802 (2902). These portal personalization preferences may be stored in the user preferences database 1614. In some cases an administrator will preset the initial set of user preferences according the role of the user. Whatever the case may be, based on the preferences just entered, the user may then view a personalized portal page accordingly (2904). An example of such a personalized portal page is shown in a portal page 2906.

The portal page 2906 includes various iViews. For example, a first iView 2908 may contain information related to "company news," that is, news regarding the user's employer, who may be providing the portal system 2802. A second iView 2910 may be devoted to weather information, a third iView 2912 may be devoted to sports information, and a fourth iView 2914 may be devoted to news about the stock market. Each of the iViews may contain documents or portions thereof (or links to other documents), and the documents may contain discussion objects, such as discussion objects 2916 within the first section 2908. Additionally, or alternatively, the iViews may contain a simple listing of information (including discussion objects within the information), or the iviews may contain links to other iviews (on the page 2906, or on another page).

As with the search engine 1702 discussed above, a user may select one or more of the discussion objects in order to input preference information about that discussion object. In FIG. 29, a pop-up window 2918 similar to pop-up windows discussed above allows the user to enter preference information about a particular discussion object.

Upon entering preference information in this or similar manners, the user receives a revised portal page similar to the page 2906, but reflecting information expressed regarding the discussion objects. For example, the revised portal page may include different information/documents within a particular iView, or could even remove an entire one of the iViews in favor of a new, more preferred iView.

Once the user has obtained a particular portal page such as the page 2906, the user may select one of the iviews for more detailed viewing, or may select (a link to) another iView or document (2920). In selecting one of the iViews, for example, the user may "zoom in" on a selected iview, so that the iView is displayed on the entirety of an available user display. For example, the user may select the sports iView 2912 to occupy an entirety of the user's display; in this case, the iView would, of course, be able to display more sports information than would be possible in the example of the page 2906.

In selecting a particular document or iView (or link thereto) from within one of the iViews 2908, 2910, 2912, or 2914, the user may be shown the corresponding document/iView as a document/iView 2922, which includes a discussion object 2924, about which the user inputs preferences using a pop-up window 2926. If the user decides to alter his/her portal preference information, he/she may do so while viewing the document/iView 2922, using, for example, the pop-up window 2926 (2928). Accordingly, the portal system 2802 inputs the preference information using the preference input system 1630, and changes user preference information stored within the user preference database 1614 (2930). At this point, the user is capable of viewing a modified personalized portal page, for example, a modified version of page 2906 (2932).

It should be understood from the above discussion that the portal system 2802, via its operation as explained above with respect to flowchart 2900, allows a user to directly enter preference information about a specific portion of a media asset, while the user is actually viewing the media asset (or portion thereof). As seen above in the context of the search engine 1702, such techniques provide a fast and efficient way to collect user preference information, and are convenient for the user in that they minimize the different number of screens that a user must access in order to input preference information. Moreover, the user is not taken out of his or her current context to another screen to input preference information; rather, the user still sees the content he was reading. Further, such techniques allow a user to see the effect of a preference change quickly, so that the user can easily fine-tune the preference change.

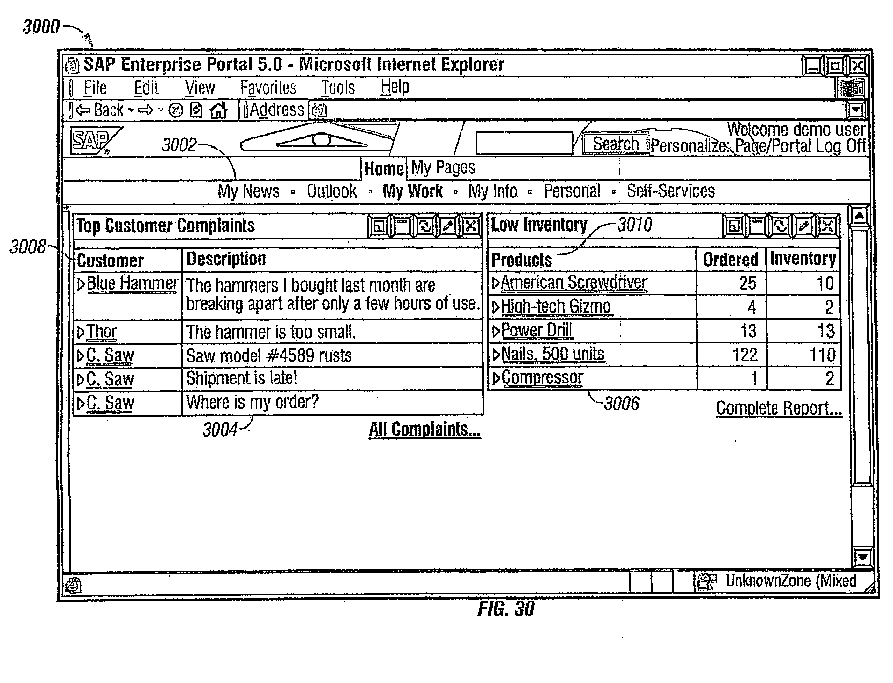

FIG. 30 is a first screen shot 3000 illustrating an operation of the portal system 2802 of FIG. 28. In screen shot 3000, the user may select a portal page from among a plurality of portal pages 3002, the portal pages 3002 including, for example, "My News," "My Work," "My Info," and "Personal." In screen shot 3000, the user has selected "My Work," and has therefore received for viewing a portal page that includes a first iView 3004 of "Top Customer Complaints," as well as a second iView 3006 "Low Inventory."

The iView 3004 includes a listing of various customers, and a corresponding description of their respective complaints. The iView 3006 includes an inventory listing of various products, along with a number of the products that have been ordered versus a number that is actually in inventory. The iViews 3004 and 3006 each contain discussion objects. For example, iView 3004 includes each of the customer names within a customer column 3008 as discussion objects, while a column 3010 within the iView 3006 contains each of the product names as discussion objects.

As discussed above, the iViews 3004 and 3006 also may contain links to other media assets and/or iViews. For example, each of the customer names in iView 3004 might represent a link to a general information file (document) about that customer, or to other information, such as a current stock market quote.

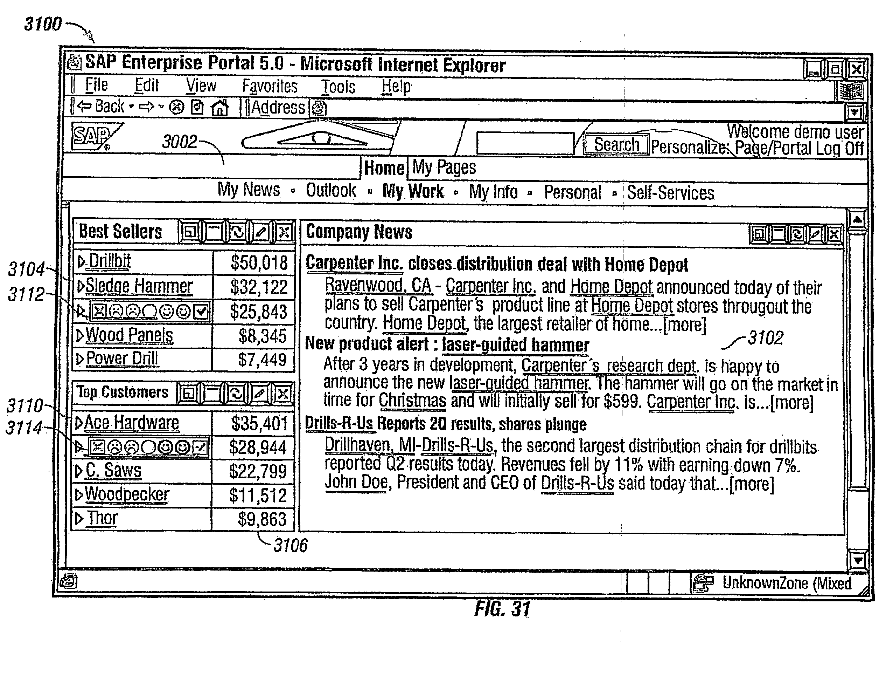

FIG. 31 is a second screen shot 3100 illustrating a use of the portal system 2802 of FIG. 28. In screen shot 3100, the user has selected a different portal page from within the portal pages 3002. Specifically, the user has selected the "My News" portal page. As a result, the user is shown a first news iView 3102 "Company News," a second iView 3104 "Best Sellers," and a third iView 3106 "Top Customers." As shown in screen shot 3100, and similarly to screenshot 3000, each of the iViews 3102, 3104, and 3106 includes information about their respective query, and the information includes discussion objects, about which the user may express preference information.

For example, iView 3104 includes a discussion object 3108 "Sledge Hammer," and the iView 3106 includes a discussion object 3110 "Ace Hardware." Accordingly, the user may express information about either of these discussion objects using a first pop-up window 3112 or a second pop-up window 3114, respectively. Specifically, in screen shot 3100, the user has provided preference information regarding discussion object 3108 "Sledge Hammer," such that this discussion object should always be included in future media asset listings, by selecting a check box within the pop-up window 3112. Similarly, the user has expressed a strong positive preference for the discussion object 3110 "Ace Hardware," by selecting multiple "smiley faces" within the pop-up window 3114.

In screenshot 3100, the pop-up windows 3112 and 3114 are shown simultaneously, that is, the user may express preference information about a plurality of discussion objects, using such a series of corresponding pop-up windows (which may or may not be shown simultaneously), and then refresh/reload the page 3100. However, as discussed above, the page 3100 also may reload automatically upon an inputting of any preference information via one of the pop-up windows 3112 or 3114.

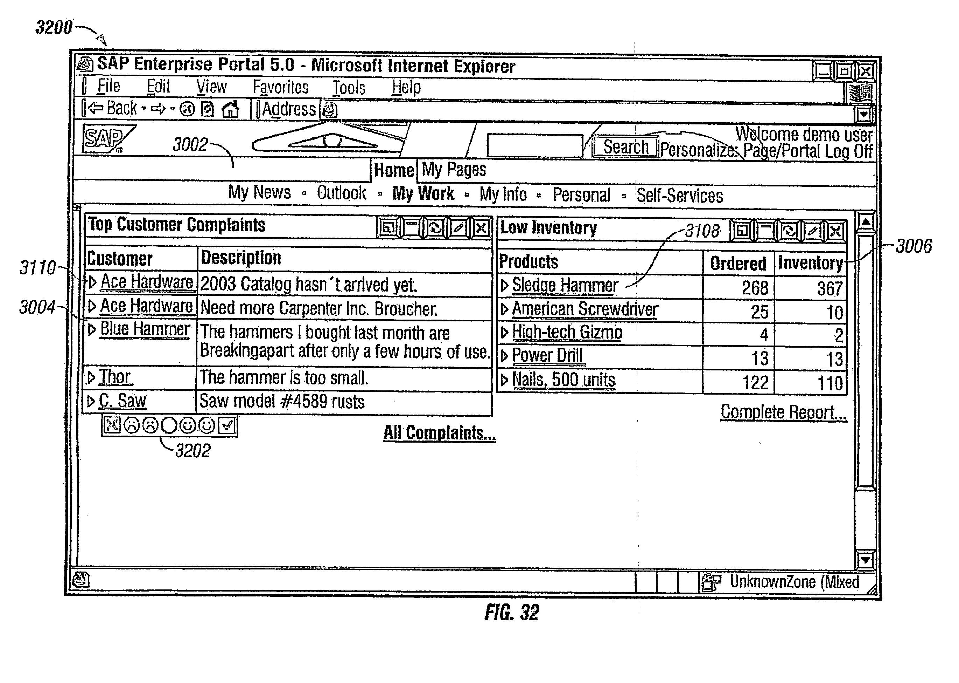

FIG. 32 is a third screen shot 3200 illustrating use of the portal system 2802 of FIG. 28. In screen shot 3200, the user has reselected the portal page "My Work" from the category listing 3002. As a result, the iViews 3004 and 3006 are returned to the screenshot 3200. In this case, however, the discussion objects 3108 "Sledge Hammer," and 3110 "Ace Hardware," are more heavily emphasized and/or prioritized within the iViews 3004 and 3006, reflecting the preference information entered with respect to the screen shot 3100.

It should be noted that this preference for the discussion objects 3108 and 3110 is executed despite the nature of media assets associated with these discussion objects. For example, customer complaints associated with the discussion objects 3110 "Ace Hardware" may be relatively trivial customer complaints. Similarly, there may be no obvious inventory problems associated with the company represented by the discussion object 3108 "Sledge Hammer." Nonetheless, these items are promoted ahead of other customers or products, due to the preference information input with respect to screen shot 3100.

In the portal system 2802 described above with respect to FIGs. 28-32, many of the features discussed above with respect to the search engine 1702 also may be implemented. For example, discussion objects, particularly with respect to information obtained form sources external to the portal system 2802, may be presented to the user in a separate, reserved portion of the user display 2804 of FIG. 28. As another example, a pop-up window for expressing preference information, such as a pop-up window 3202 in FIG. 32, may be obtained by a number of methods, such as clicking on a selected discussion object or hovering over the selected discussion object, using a computer mouse or other input technique.

FIG. 33 is a block diagram 3300 of a reverse-query portal system 3302, similar in some ways to the system 100 of FIG. 1. In the system 3302, an article reader 3304 contains media assets from a content generator 3306, which in turn obtains content from external information sources 3308. The article reader 3304 may provide metadata enhancement to the content using the metadata enhancer 1616, similar to the metadata enhancer 1616 of FIG. 16. By so doing, the article reader 3304 may accumulate a database of media assets 3310.

The reverse-query portal system also contains a user preference database 3312. Thus, the system 3302 may collect a pool of articles associated with each of a plurality of users represented by a first user 3314 and a second user 3316. In this way, the system 3302 may provide articles of interest to a plurality of users.

It should be understood with respect to the system 3302 that articles are collected and sorted (for example, with respect to each user) before any particular request(s) are made by a user, based simply on information in the user preference database 3312. Thus, the articles are obtained and/or generated prior to a direct query being entered by the user 3314 or 3316. This is in contrast to portal systems, such as the portal system 2802, in which articles are often obtained for delivery to a particular user, or allocated or assigned to the particular user, only in response to a request from the particular user.

The user preference information for user preference database 3312 may be initially collected, for example, using a preference selection page. The user 3314 or 3316 may express preferences about particular articles or categories of articles using the preference collection techniques discussed above with respect to particular discussion objects.

Although the information system 1602 of FIG. 16 has primarily been discussed above with respect to portal systems, reverse-query portal systems, and search engines, the information system 1602 also may be used in various other settings. For example, the system 1602 may be used in an email system, in which each email is considered a media asset, so that discussion objects may be highlighted inside emails. Similarly, discussion objects could be highlighted while viewing lists of emails, as in an email inbox. In this way, a user may prioritize emails regarding particular topics of interest, or from/to particular senders/recipients. As in the other implementations, such an implementation would reduce the time, effort, and number of screens accessed by the user to enter preference information, and would allow the user to enter the preference information, for example, while viewing the content about which preference information is being entered, or while viewing the discussion objects in some other context.

FIG. 34 is a screenshot 3400 of a video presentation using the information system 1602 of FIG. 16. Screenshot 3400 may be, for example, an audio-video media asset that may be shown, for example, on a television or other video player (for example, a Moving Picture Experts Group ("MPEG") player).

Screenshot 3400 includes a first section 3402 displaying a narrator 3404 reading an article, as represented by a word balloon 3406. A title of the article being read by the narrator 3404 is included in the section 3402 as a text bar 3408. The text bar 3408, or another text bar (which may be static or scrolling, for example), could be used to display current headlines of the day, which may not be related to the article being read by the narrator 3404.

The screenshot 3400 also includes a second section 3410. The section 3410 includes in a chart 3412 supplemental and/or contextual information about the article being read by the narrator 3404. In this case, the chart 3412 provides stock market information about the company Oracle Corp.

Finally in the section 3410, a discussion object section 3414 is included. In the discussion object section 3414, a discussion object (or objects) 3416 is (are) included. In this case, the discussion object 3416 "Oracle" is included in the section 3414. Additionally, a section 3418 within the section 3414 displays preference information about the currently displayed discussion object 3416. In this case, the preference information is conveyed as a number of bars (using an appearance similar to that of techniques used for adjusting a volume of a television), but other techniques for indicating preference, such as those discussed above, also may be used.

The discussion object 3416 may be displayed automatically, concurrently with its occurrence within the article being read by the narrator 3404. In other words, as the narrator 3404 reads the word, in this case, "Oracle," during the reading of an article, then that word appears within the section 3414. The words within an article that are designated as discussion objects can be selected/determined using the various techniques discussed above, and may be displayed in other ways that are not specifically illustrated. For example, a closed captioning rendering of the article being read may be streamed along a bottom of the display 3400, and the discussion object(s) 3416 "Oracle" may be highlighted, underlined, colored differently, or otherwise identified from within the closed-captioning text.

Even when an entire closed-captioning rendering of the article is not provided, as in screenshot 3400, text from within the closed-captioning text may be used to identify and extract words as the discussion object(s) 3416 "Oracle" for display in section 3414. Similarly, other audio sub-channels (for example, a secondary audio programming ("SAP") channel) may be designed and/or used to broadcast the discussion object 3416 "Oracle."

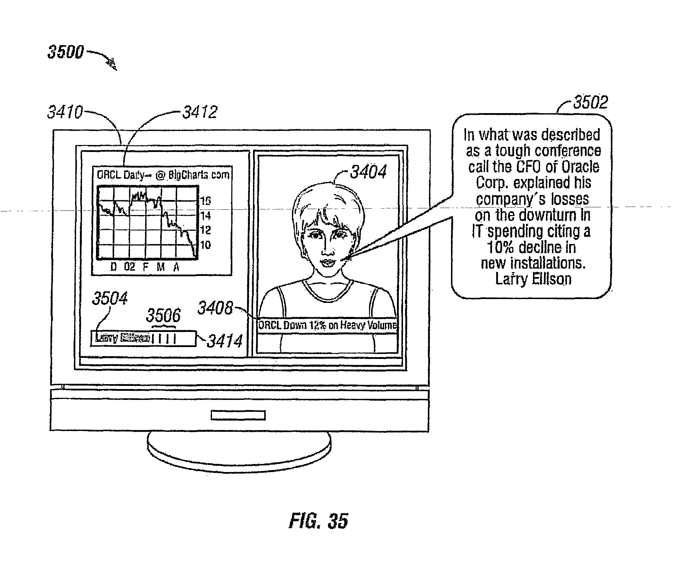

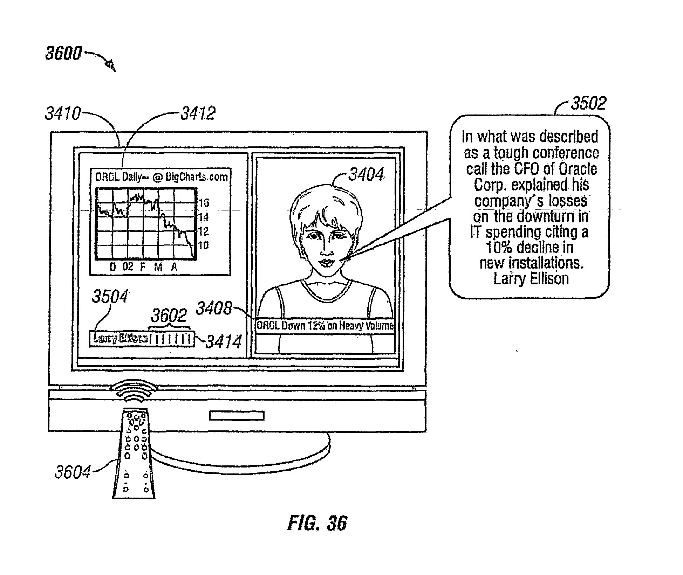

As the narrator 3404 continues to narrate a particular article, discussion objects may correspondingly appear within the section 3414. For example, in FIG. 35, a screenshot 3500 displays an example in which the narrator 3404 has continued reading the same article being read in screenshot 3400, and has now spoken the words "Larry Ellison," as shown in a word balloon 3502. Accordingly, the words "Larry Ellison" appear as a discussion object 3504 within the section 3414. The discussion object 3504 "Larry Ellison" may appear before, during, or after the reading of the words "Larry Ellison." As in screenshot 3400, the discussion object 3504 "Larry Ellison" is displayed along with a current preference indication, that is, a set of bars 3506, associated with that discussion object 3504. In screenshot 3500, the set of bars 3506 includes four bars, indicating a certain extent of preference based on a scale maximum of, for example, seven bars. FIG. 36 is a screenshot 3600, in which a set of bars 3602 within the section 3414 has been raised to a maximum of seven bars by a user, where the user has used a remote control 3604 to select the discussion object 3504 "Larry Ellison" for voting, and then to actually vote by raising the number of bars associated with the discussion object 3504 "Larry Ellison," as shown.

Although not shown in the screenshots of FIGs. 34-36, a user may select an option in which multiple discussion objects appear simultaneously. If the user decides to vote on (that is, indicate a preference about) a discussion object such as the discussion object 3416 or 3504, then additional discussion objects spoken by the narrator 3404 while the user is voting on a current discussion object may be skipped, saved for later viewing (voting), or displayed in a different portion of the display. Alternatively, the video of the narrator 3404 may be paused during a voting process.

In other implementations, the user may use the remote control 3604 to select all discussion objects associated with the article currently being read for simultaneous display, perhaps on a separate screen, whereupon the user may change his or her preference information associated with any one of the discussion objects. As in the implementations above, the narrator 3404 may be paused during this operation, or may simply continue speaking while the user votes.

The information system 1602, or variations thereof, may be used to implement the screenshots of FIGs. 34-36. For example, on the client side in FIG. 16, the media asset 1622 would be an audio-visual media asset, such as the article being read by the narrator 3404. The discussion objects 1624 and 1626 would be the spoken versions of the discussion objects 3416 and 3504, while the discussion objects 1624a and 1626a would represent the textual versions of the discussion objects 3416 and 3504. The preference information 1628 would represent the section 3414 and associated information, or merely the section 3418 and associated information (bars). On the side of the request server 1630, the metadata presentation system 1620 may, as referred to above, interact with a closed-captioning system, or other secondary-audio programming channel, to provide discussion objects 3416 and 3504 within the section 3414, perhaps using the metadata enhancer(s) 1616 and 1612 to determine discussion objects for presentation. Such a system may be used, for example, to transmit MPEG video over the network 1606.

In other implementations, the audio-visual media asset may be broadcast over a television channel, which may be a public television channel, or a closed-circuit television channel, such as, for example, a company-wide television channel or a channel displayed on a television in a public or semi-public waiting area. Also, although not specifically illustrated, some subset of the discussion objects associated with an audiovisual media asset may be selected and presented within a portion of the screenshots of FIGs. 34-36, to serve as a visual summary of the media asset, in the manner described above with respect to FIGs. 18-21.

To implement the screenshots of FIGs. 34-36, a device (not shown) for obtaining and storing set-up and/or preference information from the user may be kept at either a broadcasting site (for example, server side), and/or at the client (for example, user) side. For example, a receiver such as a cable or satellite receiver, and/or a personal video recorder, could be used to input, record, and transmit the user's preference information.

As a result of inputting the user's preference information, an information system such as the information system 1602 may select future programming for the user accordingly, and similarly to the way other media assets were promoted, demoted, excluded, or included in the various examples above.

Although the examples of FIGs. 34-36 are discussed in terms of an audio-visual media asset, an audio media asset(s) also could be provided to the user, as part of an audio presentation device. For example, a user practicing the system 1300 of FIG. 13, in which a personalized audio presentation is delivered to the user, may listen to an audio media asset over a cell phone or car radio. Discussion objects could be distinguished to the user by way of a pre-determined sound, such as a "ping," after every discussion object. Alternatively, the discussion objects could be listed together, at a beginning or end of a particular media asset, or in conjunction with a title of a media asset. By inputting voice commands, the system 1300 (or other audio-content presentation system) may input preferences of the user.

In the above examples, various techniques were discussed for inputting preference information from a user, where the preference information is specific to content elements within a media asset, and the preference information is collected while the user is accessing a display of the media asset. These techniques allow a user to change his or her preference information quickly, easily, and efficiently, and to improve the use of, for example, a search engine, a portal page, a reverse-query portal page, or a video (for example, television) display. For example, the user may update/modify a search being performed by a search engine while viewing one of the media assets discovered during the search, without having to return to a search engine home page or search results page.

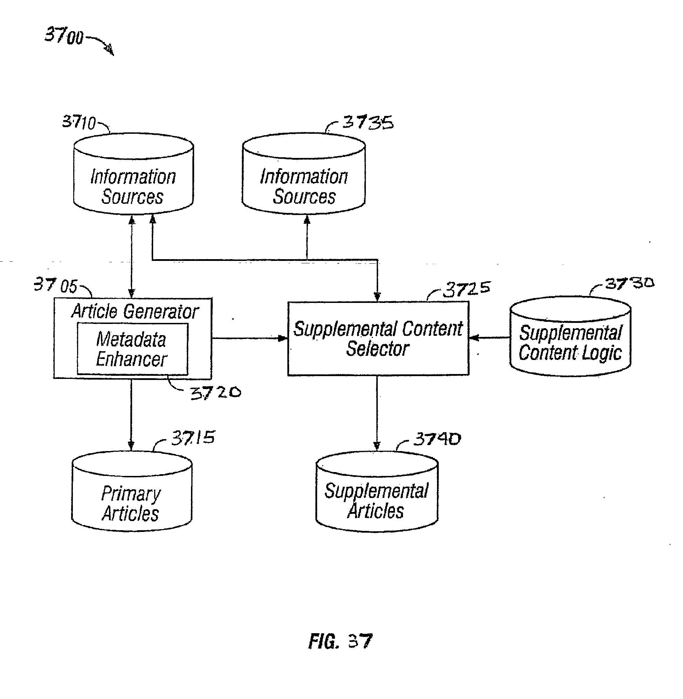

FIG. 37 is a block diagram of an article generation system 3700. In FIG. 37, an article generator 3705 interacts with information sources 3710 to publish articles to a database 3715. Sources of information for articles might include an application's application program interface ("API"), an on-line analytical processing ("OLAP") server, a private or public database, and the World-Wide Web (perhaps queried through the hypertext transfer protocol ("HTTP"), simple object access protocol ("SOAP"), or other common protocols of the Internet).

Article generator 3705 may utilize various techniques for gathering and publishing information as discrete articles. For example, article generator 3705 may utilize software agents to gather appropriate information (agents are generally defined as automatons running on a scheduled basis and querying a data source for information and either producing or not producing content based in part on the result of that query).

In FIG. 37, some articles may already include attribute and content metadata information. If a particular article has no associated metadata, a metadata enhancer 3720 may be used to examine the content of the article and generate metadata accordingly. Even if some information, such as attribute information or content metadata, is included with an article, metadata enhancer 3720 may be used to further enhance the article by providing content metadata (or additional content metadata if some content metadata already exists).

Articles may be additionally output to a supplemental content selector 3725. Supplemental content selector 3725 analyzes the attribute information and content metadata associated with each article, and compares this information against a set of rules contained in a supplemental content logic database 3730. Supplemental content selector 3725 may then gather information from information sources 3710 and/or 3735 (that is, may use the information sources 3710 available to article generator 3705, as well as other information sources 3735), and thereafter publish supplemental articles 3740. In one implementation, the primary and secondary articles may be published in the Extensible Markup Language ("XML") or in HTML.

There may be many different rules that can be implemented as supplemental content logic. For example, one rule may state that supplemental content should always be generated for a particular company or other discussion object. Another rule may state that supplemental content should be provided for a particular discussion object if it is mentioned in some threshold number of primary articles in database 3715. Other rules may be used, as discussed below and/or as would be apparent in a particular implementation.

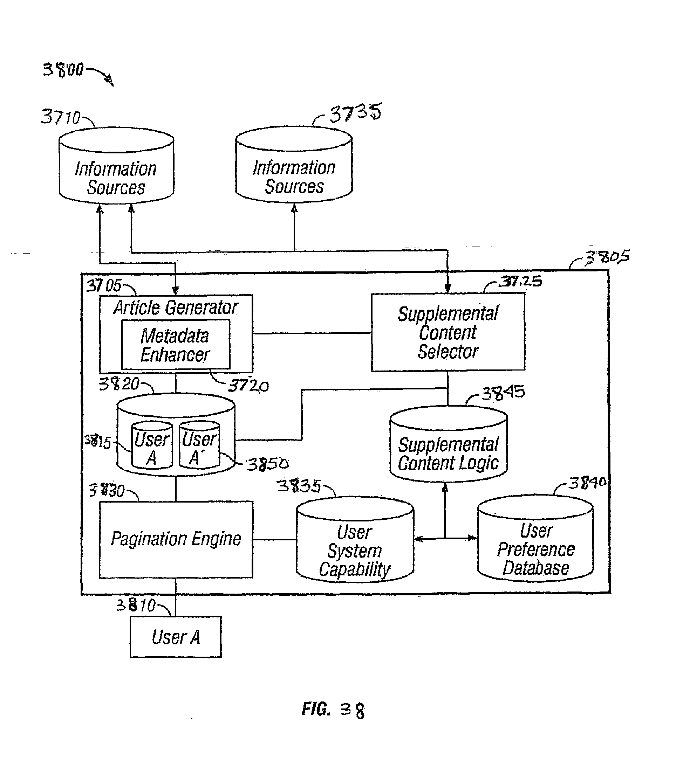

FIG. 38 is a block diagram 3800 including a system 3805 for delivering a portal having supplemental content to a user. System 3805 might be, for example, an Internet server that is part of the World Wide Web. In FIG. 38, as generally described above, article generator 3705 generates articles to be delivered to a user 3810. For example, user 3810 may be using a web-based browser for displaying a portal that includes a plurality of iViews, wherein each iView contains articles that are instances of a particular category. For example, an iView designated to contain "business" articles might contain an article about Dell Computers or General Electric Company ("GE"). The iViews can be arranged on a screen according to a preference of the user 3810.

In this and related implementations, it should be understood that the term article could also be considered to extend to the entirety of the iView itself, even in the situation where the iView contains a plurality of different stories. That is, given that supplemental content is selected based on content of an iView, as explained in more detail below, all of the content generated by code associated with the iView (that is, the content of the iView), can be considered one article for the purpose of generating supplemental content therefrom.

It should be understood that articles generated by article generator 3705 will not generally exist prior to a time that user 3810 requests a portal page from system 3805. That is, when user 3810 logs onto system 3805 and receives (and/or refreshes) a corresponding portal page, system 3805 actuates article generator 3705 and retrieves information from information sources 3710 to formulate articles for delivery to user 3810. This article generation may be as simple as obtaining a previously-written news article from an on-line newspaper, or it may be more complicated, such as accessing a database to withdraw requested data and compose a user-specific story from that data.

In FIG. 38, articles generated by article generator 3705 are shown to be stored as primary articles in a database 3815 within a larger database 3820. It should be understood that such storage is typically merely a caching of articles in the event that one or more of the articles may be requested again in the near future, and, consistent with the explanation of a "query" system 3805 just given, these articles are not associated with a particular user, but rather are available in response to any user who might request one or more before the article(s) expire from the cache. Articles shown as being stored in primary articles database 3815 need not be stored at all, and could simply be delivered to user 3810 via a pagination engine 3830, and re-generated later on an as-needed basis.

Pagination engine 3830 is generally used to describe a portion of system 3805 that interacts with user 3810 to receive a request, a user preference, and/or a system capability (where the user preference and the system capability may or may not be part of the request). Pagination engine 3830 may then act to deliver a portal page and associated iViews (having category-appropriate articles contained therein) to user 3810, with the iViews being arranged in a manner determined by user 3810 during an initial portal set-up.

The user system capabilities may be stored in a user system capability database 3835, and the user preferences may be stored in a user preference database 3840. It should be understood that user preference database 3840 is generically used to refer to an ability of system 3805 to store any user preferences. For example, user preference database 3840 may store information used by article generator 3705 to generate primary articles. User preference database 3840 may also store the user-determined layout or arrangement of the iViews on the user's portal page.

User preference database 3840 may also store preferences of the user 3810 with respect to supplemental articles. Thus, data stored within user system capability database 3835 and user preference database 3840 may be used by supplemental content selector 3725 in conjunction with other information stored in a supplemental content logic database 3845 to generate articles that supplement the primary articles generated by article generator 3705. The supplemental articles, similarly to primary articles, may be cached in a database 3850 within database 3820, or may be generated on an as-needed basis (and therefore not cached at all).

As discussed above with respect to FIG. 37, supplemental content selector 3725 may generate supplemental articles from the same information sources 3710 used by article generator 3705, or may access other information sources 3735. Supplemental content selector 3725 generally generates supplemental content based on attributes and content metadata of the primary articles. Content metadata may be included with the primary articles through, for example, the operation of metadata enhancer 3720.

In one implementation of system 3805, supplemental content selector 3725 may generate supplemental content based simply on the appearance of a particular topic or subject in articles output by article generator 3705. In other implementations, the supplemental content selector 3725 may be more specific to user 3810 than simply specifying a particular topic or subject. For example, the supplemental content selector 3725 may select supplemental content based on supplemental content logic 3845, where supplemental content logic 3845 includes rules that are personalized to each of a plurality of users, including user 3810.

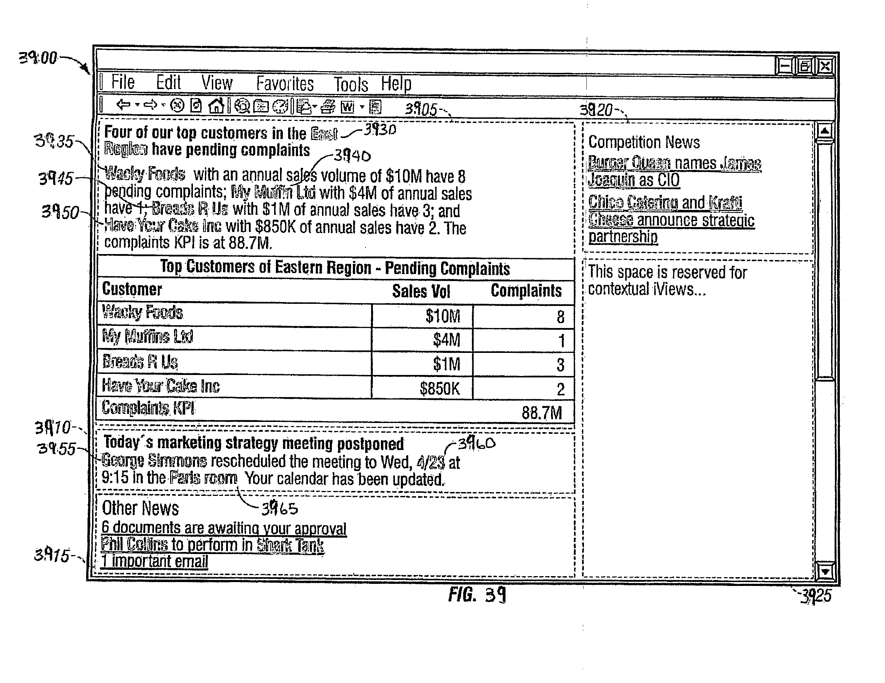

FIG. 39 is a screenshot 3900 of a portal page that may be generated by system 3805. The screenshot 3900 of FIG. 39 assumes, for the sake of example, a scenario in which system 3805 is being deployed in an enterprise environment, that is, in which an enterprise utilizes system 3805 as part of its company network to provide relevant information to its employees. However, it should be understood that such a scenario may include access by the system 3805 of external sources of information, such as sources on the Internet. It should also be understood that system 3805 may be deployed via a public, as well as a private, network.

In FIG. 39, a first iView 3905 has previously been designated by user 3810 to contain information about the category "customer information." Accordingly, in this example, iView 3905 contains an article about customers of the enterprise. More specifically, iView 3905 happens to contain information about which important customers in a particular region have pending complaints with the enterprise.

Based on the explanation above with respect to FIG. 38, it should be understood that the article (that is, the content) within iView 3905 did not necessarily exist before user 3810 logged onto system 3805. That is, customer information existed in list form in a company database, but the specific article about which of the customers in a particular region have pending complaints did not exist until user 3810, having iView 3905 designated for "customer information," logged on. The article in iView 3905 may be specifically generated for the "customer information" iView 3905, may be based on more specific user preferences about what type of customer information to display, what region to limit the report to, or (though not shown in FIG. 38) may be generated based on specifications of the enterprise as to what will be shown to employees on a company portal page.

Similar comments apply to other iViews shown in FIG. 39. Specifically, an iView 3910 may be a "calendar" iView for displaying scheduling information specific to user 3810, such as details of an upcoming meeting. Again, iVIew 3910 will contain an article created to have timely relevance to user 3810; that is, if user 3810 has logged onto system 3805 after the meeting referred to in iView 3910, then that article might never have been generated, and another article about a still-pending meeting might have been generated by article generator 3705. An iView 3915 is an "other news" or miscellaneous iView for content not fitting into a particular category, and an iView 3920 contains content about enterprises that compete with the enterprise deploying system 3805. In the cases of iViews 3915 and 3920, content may be pre-composed by an external source, emails addressed to user 3810, work documents of user 3810 stored on a database of the enterprise, or other information available in information sources 3710.

Finally, in the screen shot 3900 of FIG. 39, a space or subsection 3925 represents space reserved for contextual iViews, that is, content generated by supplemental content selector 3725. This space may contain one iView or a plurality ofiViews, and the content of these supplemental iViews may vary based on articles within primary iViews 3905, 3910,3915, and 3920, where primary iViews may be considered a first space or subsection for primary articles (content). For example, the content of the supplemental iViews may vary based on the content of the primary articles.

Articles within the various iViews each contain content metadata, as explained above in various contexts. In the article ofiView 3905, for example, discussion objects include "East Region" 3930, "Wacky Foods" 3935, "My Muffin Ltd" 3940, "Breads R Us" 3945, and "Have Your Cake Inc" 3950. Similarly, the article ofiView 3910 contains discussion objects "George Simmons" 3955, "4/23" 3960, and "Paris room" 3965. Each of these discussion objects may be classified as part of a specific class or category, for example, "Wacky Foods" 3935 may be classified as a "company" and/or a "customer." These classifications are made according to a pre-determined object model, perhaps implemented by metadata enhancer 3720, and may be incorporated into, for example, an XML or HTML message that contains the information for the relevant article(s). In this way, as described above, supplemental content selector 3725 may generate supplemental articles based on the content of primary articles.

Discussion objects may be identified in the content of an article by displaying them in a different color than remaining text, highlighting them, underlining them, or using another technique for identifying them to user 3810. On the other hand, discussion objects could simply be incorporated into the article as metadata, without explicitly identifying them visually in the content at all.

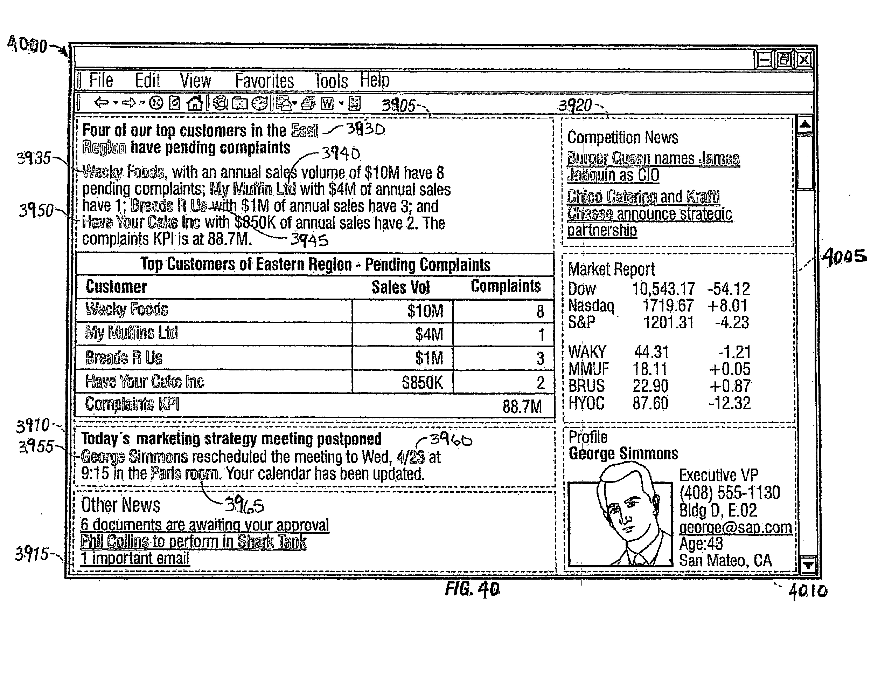

FIG. 40 is a screenshot 4000 of the portal page of FIG. 39 having space 3925 filled with supplemental content. Specifically, FIG. 40 includes a supplemental iView 4005 that contains stock market information, including current stock quotes for each of the companies 3935, 3940, 3945, and 3950 identified in the article of iView 3905. An article in a supplemental iView 4010 displays information about the discussion object 3955, "George Simmons."

It should be understood that, in conventional systems, a user would not expect to see, and indeed would not see, the supplemental information about George Simmons; that is, such information is different from what the types of information the user selected for receiving when setting up the primary iViews. Thus, the supplemental information may be a valuable tool for gaining the user's attention with respect to a particular topic. Given that supplemental content will often be generated for the most important articles/content within the primary iViews, the user's attention will thus be drawn to the more important articles/content, as well. For example, the supplemental article about George Simmons in this example, may allow or remind user 3810 to contact George Simmons regarding the meeting discussed in the article ofiView 3910.

The amount of space 3925 reserved for supplemental content, and/or a number of iViews to be included in space 3925, may be determined by user 3810. In iView 4010, content about only one discussion object ("George Simmons" 3955) is included. However, more than one discussion object can be included in each article within supplemental or contextual iViews 4005/4010. For example, in iView 4005, content about each of the discussion objects 3935, 3940, 3945, and 3950 is included.

Since space is limited for inclusion of supplemental content, and as referred to above, various rules may be included in supplemental content logic database 3845 for determining what content is generated by supplemental content selector 3725 for inclusion in space 3925. For example, supplemental content selector 3725 may use a priority system to determine iView categories and/or discussion objects for which to generate supplemental content. Such priorities may be determined, for example, by user 3810 and/or the enterprise deploying system 3805.

Supplemental content selector 3725 may also examine a particular discussion object to determine, for example, how often it is mentioned in a particular primary article(s). If the discussion object is mentioned a certain number of times, it might be prioritized as a basis for supplemental content.

In short, system 3805 may be used to include supplemental content in the context of an otherwise-conventional portal environment. Users may thus be provided with information (that is, the supplemental information) that may be useful or interesting to them, in addition to information provided in conventional portal environments.

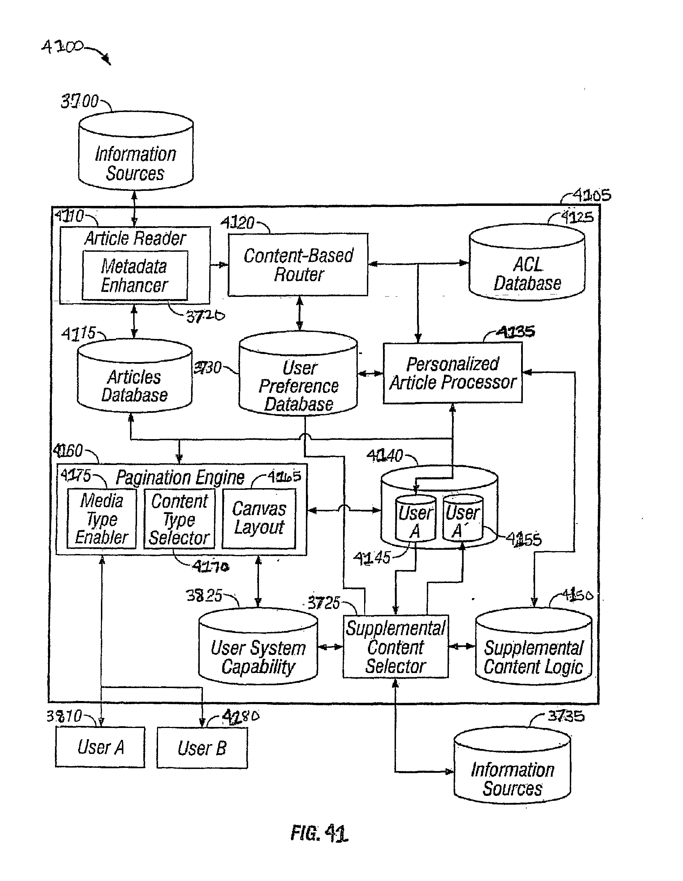

Supplemental content selector 3725 may also be used in contexts outside of conventional portal environments. For example, FIG. 41 is a block diagram 4100 of a system 4105 for delivering dynamic personalized content in conjunction with supplemental content. In FIG. 41, an article reader 4110 may obtain articles or other information from information sources 3710, generate metadata, as needed, with metadata enhancer 3720, and store the articles in an articles database 4115. Although element 4110 is described as an article reader, as opposed to an article generator 3705, it should be understood that, as explained above, an article generator typically compiles an article based on content in a database and in response to a user request, whereas article reader 4110 may assemble articles prior to a specific user request. However, the functionalities of the article generator 3705 and article reader 4110 may overlap in a given scenario.

Information referencing the articles is passed on to a content-based router 4120. Although entire articles could be passed through the system 4105, other techniques may be used. For example, only links to corresponding articles need be circulated through system 4105, with the articles themselves remaining stored in database 4115. As another example, such links may be circulated with the associated attribute and/or content metadata, but without the content itself; in this way, the article may be processed (as discussed below), without actually having to circulate the article in its entirety.

Content-based router 4120 examines each article with respect to its content, associated attributes, and/or content metadata, for example, discussion objects, and compares this information to information stored for individual users. For example, an Access Control List ("ACL") database 4125 contains a security clearance for each user with respect to various subjects, so that a user who is not cleared to receive certain information within an article will not receive that article. A user preference database 4130 contains information about each user, for example, the extent to which a user likes or dislikes a particular subject, or the type of device(s) on which the user may be receiving the articles.

User preferences for populating user preference database 4125 can be obtained by a number of techniques. For example, the preferences could be gained by asking users to fill out a preference form before gaining access to system 4105. As another example, the preferences can be modified over time by obtaining feedback from the users, perhaps according to techniques described herein.

By accessing databases 4130 and 4125, content-based router 4120 is able to filter articles that are restricted from or are of no interest to a particular user. The action of content-based router 4120 thus eases the burden on a personalized article processor ("PAP") 4135, which has the job of individually prioritizing the remaining articles. The prioritization may be based on a comparison of contents of the user preference database 4125 to the content and to the content metadata/attributes of each article. Accordingly, individually-sorted articles may be stored in a sorted articles database 4140, where articles for user 3810 are stored with their corresponding priority information for that user in database portion 4145. The priority information may be associated with an article by, for example, storing the information in a table or storing articles in a prioritized order.

Articles in database 4145 may thus be presented to a user, as discussed in more detail below. Additionally, supplemental articles may be generated by supplemental content selector 3725 operating in conjunction with user system capability database 3825, user preference database 4125, and a supplemental content logic database 4150 (and possibly with ACL database 4130, connection not shown). The supplemental articles may be stored in database 4155.

A pagination engine 4160 may thus gain access to two sets of articles associated with, and prioritized with respect to, an individual user. Pagination engine 4160 will typically have access to characteristics of the client systembeing used by each user, which may be stored in user system capability database 3825, or determined from the user request at the time of the request.

Pagination engine 4160 determines a layout of the canvas being used by each user, using a canvas layout subsystem 4165. Since, as a practical matter, a canvas will typically have capacity limitations, one of the services of the canvas layout subsystem 4165 within pagination engine 4160 is to determine how much "space" is available to the user for displaying articles. For example, a web browser on a PDA typically will be able to display a smaller number of articles than a browser on a desktop computer. As another example, a user who receives audio articles via cell phone or radio only may have twenty minutes during a car ride during which to listen to articles. In short, canvas layout subsystem 4165 determines any user-specific capacity constraints when deciding which articles to provide to a given user.

A content-type selector 4170 determines which rendering media are available to the user for the selected canvas, and which articles are consistent, or can be made to be consistent, with that media. For example, content-type selector 4170 may determine that a canvas has audio and HTML capabilities, but not video.

Finally within pagination engine 4160, a media-type enabler 4175 is available to enable a rendering media that would not ordinarily be available to the user (based on the content type(s) of the articles), when feasible and desired. One example of this feature is the capability of reading aloud to the user an email that is included as an article. Another example is the generation of an animation of a newscaster, complete with moving lips, to read aloud a print story to the user.

For example, content-type selector 4170 may determine from user system capability database 3825 that a system for user 3810 has audio capability. Pagination engine 4160 may then determine from user preference database 4125 that user 3810 prefers to have text content read to him or her, rather than having the text content displayed on a screen. Pagination engine 4160 may then use media type enabler 4175 to convert the text content to an audio format.

During a final portion of the pagination process, pagination engine 4160 aggregates the selected articles, in their selected formats, and delivers a personalized "page" of information to the user 3810, so that the user 3810 receives articles for rendering that are of the most interest to him or her at a given point in time (or that the system determines the user should/must see, even if the user has expressed non-interest in such an article, such as a direction from the user's boss, or an article about a "hot" topic of the day). Here, it should be understood that a page refers to the aggregated articles, regardless of the rendering method. A system(s) of user 3810 may thus receive information suitable for rendering a page of information consistently with the user's respective system capabilities and requirements.

System 4105 may also receive feedback from a user to be recorded in user preference database 4125, so that the pages increasingly become better-personalized to each user as time goes by.

System 4105 may be implemented in an enterprise environment, as discussed above, for the convenience of employees and/or customers of the enterprise. Implementations may be utilized via various other private networks, such as, for example, a university or other school network. Implementations, additionally or alternatively, may be provided to members of the public at large, via the Internet.

It should be understood that the system 4105 may thus provide dynamic, personalized content to the user 3810, and that this content may be supplemented with supplemental content that is selected based on the personalized content. This implementation has various differences from the implementation described above with respect to FIGS. 38-40. For example, in the implementation of FIG. 41, the articles are pre-assembled for user 3810, based on information about the user 3810. The articles can thus be prioritized and/or filtered for relevance with respect to user 3810, so that user 3810 receives articles that will be of most interest to him or her.

Thus, in the implementation of FIG. 41, the various sections of the screenshots 300 and 400 of FIGS. 39 and 40, respectively, need not be iViews having pre-determined categories. Rather, the content and placement of the sections 3905, 3910, 3915, 3920 and 3925 could be dynamically determined based on the available articles and their respective prioritization/filtering status. In other words, in the implementation of FIG. 41, the sections of screenshots 3900 and 400 of FIGS. 39 and 40 represent pre-assembled articles that are not (necessarily) generated by the system 4105 at the time of a user request. Again, this approach allows placement, sizing, and selection of content (and content type or category) in a customized and dynamic manner that is not generally available in the implementation of FIG. 38.

In conjunction with the above-described features of the implementation of FIG. 41, supplemental content can be selected and presented in a variety of ways. For example, if the supplemental content is selected from articles already available in database 4145, then supplemental content selector 3725 may be able to use the associated prioritization information to better select supplemental content.

Another selection option includes supplemental content selector 3725 selecting supplemental content only for articles having a certain priority level, or only for articles having the highest priority level. Similarly, another presentation option includes the ability to re-size the space 3925 reserved for supplemental content, as needed. For example, if user 3805 specifies that supplemental content is only desired for one discussion class, such as "Company News," and there is little or no company news to be shown in a current rendering for the user 3805, then the space 3925 may be reduced or removed, so that other articles may be included in that space. Other selection and presentation options exist for including supplemental content in the implementation of FIG. 41, using the information available via PAP 4135, as would be apparent.

Additionally, supplemental content selector 3725 need not select supplemental articles only from among the non-presented articles in database 4145. Rather, supplemental content selector 3725 may access the entire article pool stored in database 4115, or may access external information sources 3735 (or 3710, connection not shown). In such cases, supplemental content selector 3725 may generate articles in the manner described with respect to article generator 3705 in FIG. 38, at the time of a user request or as the fulfillment of a pre-determined rule. This article generation may be based on prioritization/filtering information of articles in database 4145, or may be based on some other selection criteria specified by the user. In this implementation, articles need not (but could) be stored in a database 4155, and space 3925 may be reserved for (static) iViews (even while remaining portions of the screen may have the dynamic, personalized nature described above and enabled by the implementation of FIG. 41).

Also in the implementation of FIG. 41, it should be understood that database 4140 may include a plurality of users, where each user-designated database portion might have supplemental articles associated therewith.

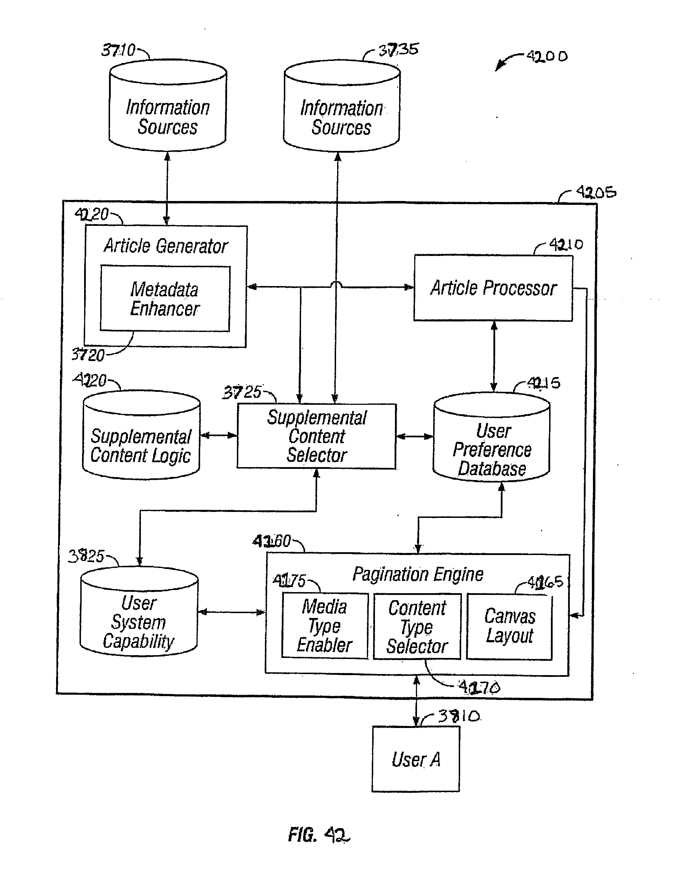

Finally with respect to FIG. 41, it should be understood that system 4105 may by used to generate content that is not restricted to a web page. Rather, as referred to above with respect to pagination engine 4175, content may be stored as video, audio, text, or any other format compatible with a particular article and a system of user 3805. System 3805 of FIG. 38 might also utilize the ability to store various types (media) of content by incorporating some of the functionality of pagination engine 4160 in pagination engine 3830 (discussed below with respect to FIG. 42), although pagination engine 3830 would not require the aggregation functionality of pagination engine 4160 (since pagination engine 3830 would not generally be sizing or placing portions of a canvas in the same sense as pagination engine 4160, which may use, for example, prioritization information).

FIG. 42 is a block diagram 4200 of a rich-media content delivery system 4205 incorporating supplemental content selector 3725. More specifically, system 4205 represents an implementation that includes pagination engine 4160 and its associated functionality, but in a portal environment. That is, system 4205 is capable of generating content based on a user request, and does not generally store articles prior to the request. In this sense, system 4205 is more similar to system 3805 than system 4105.

In other words, in system 4105, as just explained, articles may be collected in a pool (and prioritized/filtered), stored in a database, and associated with a user all prior to a specific user request. The articles then may or may not be aggregated in a rich media setting (that is, a setting that includes the possibility of incorporating various types of media in a content delivery).

In FIG. 42, an article processor 4210 associates articles with particular users, using a user preference database 4215. This association may occur by virtue of content metadata such as discussion objects contained within the articles, as discussed above, or may occur by virtue of a comparison of general article attributes and/or content to user preferences. An article generator 4220 generates articles based on information in information sources 3710. Article generator 4220 may or may not include metadata enhancer 3720, and may or may not store the articles separately (although the articles could be cached for possible later use, as is referred to above).

It should be understood that article processor 4210 is a simple processing engine for associating iViews/articles to be generated based on a user request, and does not require the capabilities of content-based router 4120 and/or personalized article processor 4135 shown in system 4105 of FIG. 41. Also, in contrast to personalized article processor 4135 (which processes article only after they are read by article reader 4110, article processor 4210 generally performs its (associating) functionality prior to generation of an article by article generator 4220.

Pagination engine 4160 communicates with both article processor 4210 and user system 3805. Pagination engine 4160, as already described, will typically have access to characteristics of the client system being used by each user, determined either from user preference database 4215, user system capability database 3825, or from the user request at the time of the request.

In this way, pagination engine 4160 determines a layout for the canvas being used by each user, using canvas layout subsystem 4165. As described above, one of the services of the canvas layout subsystem 4165 is to determine how much "space" is available to the user for displaying articles, as well as any other user-specific capacity constraints relevant to deciding which articles to provide to the user(s).

Content-type selector 4170 may then determine which rendering media are available to the user for the selected canvas, and which articles are consistent, or can be made to be consistent, with that media. Media-type enabler 4175 is available to utilize a type of media that would not normally be available to the user.

In the implementation of FIG. 42, article selection and layout may be determined essentially as is done in the context of traditional portal technology (that is, predetermined, categorized canvas sections such as iViews), or may, for example, incorporate any or all of the advantageous features of system 4105. In either case, system 4205 serves to provide personalized audio and/or video presentations above and beyond the context of traditional browser-based technologies. User preferences as to which media type is preferred may be stored in user preference database 4215, or may be included with a request from user 3805.

Thus in FIG. 42, supplemental content selector 3725 may access supplemental content logic 4220, user system capability database 3825, and user preference database 4215, to thereby generate supplemental content to be delivered to user 3805.

In short, FIG. 42 demonstrates a system similar in concept to that of FIG. 38, but that explicitly demonstrates an ability to use multimedia in delivering content. For example, system 4205 could generate content in the form of an audio file, which might be accessed via a cell phone or a radio. In the audio file, the last twenty percent might be saved for supplemental content. Similarly, system 4205 could generate a video file for delivery via a television, such as a closed-circuit television, and, again, some portion of the video file could be saved for supplemental content.

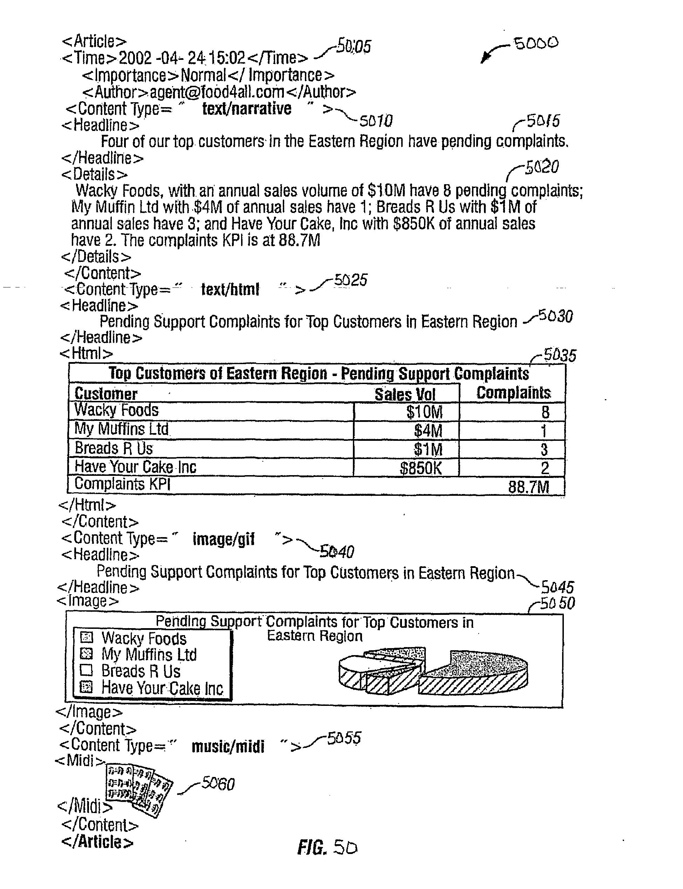

In one implementation, rich media is made available to systems 4105 and 4205 by incorporating various content-types within content blocks within the article, each content-type conveying similar information and having at least some segment of the content. See, for example, the article in FIG. 50, which is discussed in more detail below with respect to that drawing. As another example, an article might have one content block having an HTML chart, a second content block having a video file, a third content block having an audio file, and a fourth content block having a text file. In this way, pagination engine 4160 (specifically, content-type selector 4170) can select the appropriate content type for a given user and a given article.

In short, system 3805 of FIG. 38 is an example of providing supplemental content in a web-based portal environment. FIG. 41 is an example of supplemental content in a highly-personalized, dynamic, rich-media content delivery system for delivering pre-assembled articles. Although system 4105 of FIG. 41 may also utilize some of the concepts of system 3805, for example, inclusion of supplemental iViews in an otherwise dynamically-assembled delivery package, system 3805 differs in that there is more of a direct connection between an actual publisher of information and user 3805 than in system 4105 (in which system 4105 is more of an intermediary between a publisher and a user). Finally, FIG. 42 is an example of a rich-media content delivery system along the lines of the web portal shown in FIG. 38, that may provide more of a direct connection between publisher(s) and user(s), and does not require the pre-assembly of articles in the manner of FIG. 41.

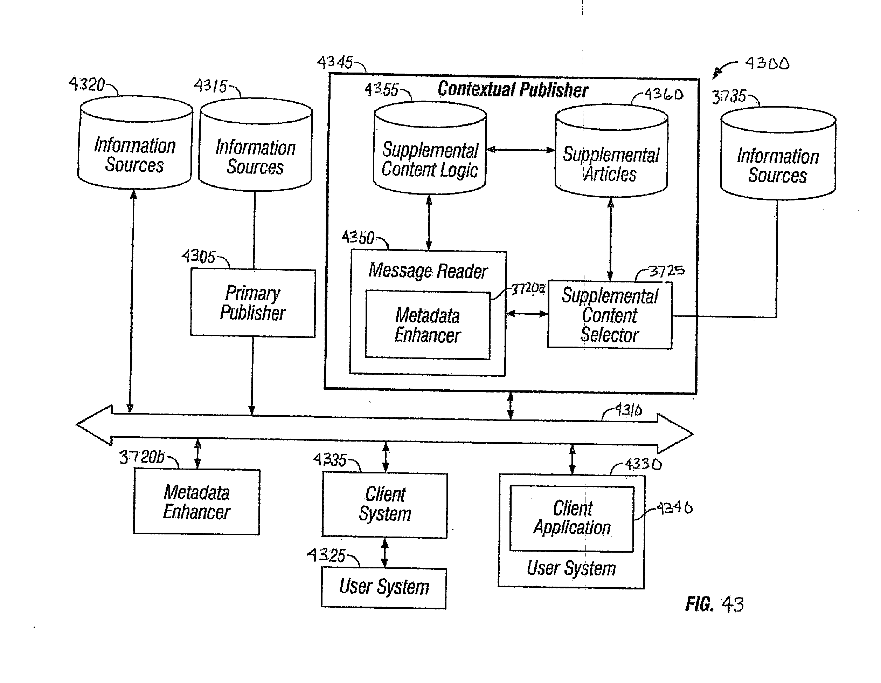

FIG. 43 is a block diagram 4300 of supplemental content selector 3725 in a publish/subscribe infrastructure that includes an information distribution source. In FIG. 43, a primary publisher 4305 publishes articles to an information distribution service, or "wire" 4310, based on content obtained from information sources 4315 and/or 4320.

The term wire originates as a reference to distribution services used by news services such as the Associated Press ("AP"), which publishes news stories to be distributed nationally and used by national and/or local paper. In the context of this description, the term wire may refer to many different types of information distribution services. For example, the wire 4310 may be a collection of servers connected thru computer networks, and perhaps sending/receiving HTML, XML, simple text, and/or other types of content. Such servers may support the functionality of wire 4310 by means of specialized software, such as a messaging system like Java Messaging Service ("JMS").

Generally speaking, wire 4310 may refer to any separation layer between the publishers and clients receiving published content. Wire 4310 could thus be a bus (for example, JMS or Elvin), or could simply be a file system or a table in a database. Wire 4310 could also simply be the Application Program Interface ("API") to a publishing system, or simply an electronic mail ("email") inbox.

In short, wire 4310 may be an information distribution service that supports publishing articles and/or messages, receiving the articles/messages, listening for specific types of articles/messages, and selectively receiving specific types of article/messages thereof. Additionally, the term "stream" may be used to represent a flow of articles, messages, or other information on the wire.

Generally speaking, a characteristic of a messaging system such as wire 4310 is a separation between a sender such as primary publisher 4305 and a recipient. The structure of the messages is such that any client connected to the wire 4310 can easily create a message and transmit it over the wire 4310. In order for the sender to send a message to the recipient, the sender may utilize, for example, a direct address of the recipient. However, it is not necessary that the sender know such a direct address. For example, in the case of content-based messaging (discussed in more detail below), the sender need not know where or even who the recipient is; rather, the sender may merely send messages over wire 4310, and trust that the wire 4310 will, based on the content of the messages, ensure that users interested in such content will actually receive the messages.

Thus, the wire 4310 may act as a mediator between senders and recipients. This layer of separation enables several advantageous features in the system of FIG. 43. For example, messages can be sent from senders to recipients even if the recipients are not currently connected. As a second example, delivery can essentially be guaranteed, inasmuch as the wire 4310 may store all of the messages until delivery is confirmed. As a third example, new parties can easily join in; for example, the system API may be the same for all parties. As a final example, messaging can be performed anonymously; that is, senders need not know exactly who is going to read their content. Similarly, recipients do not know exactly who is going to send them content after they create a subscription to the wire 4310. In this case, only when recipients receive a message will they know who it was from.

Various techniques exist for routing messages on a wire. First, in direct addressing, each recipient has a unique address. Publishers who want to send content to that recipient need to know this address. Email systems are an example of such a system.

Second, in channel-based addressing, recipients may subscribe to a channel or to a family of channels. Publishers send content to channels, not to recipients directly. This provides for means to multi-cast messages to multiple recipients who expressed interest in a specific topic. A good example is a newsgroup, where people may join and thereafter receive all emails addressed to the group as a whole. In addition, users may opt to unsubscribe from the group.

As a final example, content based messaging (CBM) allows recipients to describe their subscription based on the content of the message. A recipient specifies that he would like to receive messages only if they contain something specific. This provides for the ultimate separation between senders and recipients. Senders simply broadcast their messages, which thereafter get routed only to interested consumers. As referred to above in the context of FIG. 41, various content-based routers exist which enable this type of messaging.

In any of the above-described messaging schemes, messages may reach users such as a user 4325 and/or a user 4330 via wire 4310. Since the messages will often be in a format (for example, an XML file) that may be unreadable to an average human recipient, it may be necessary to include client systems 4335 or 4340. As shown in FIG. 43, such client systems may be external to the user systems, as with client 4335, or may be an application running on the user system, such as with client 4340.

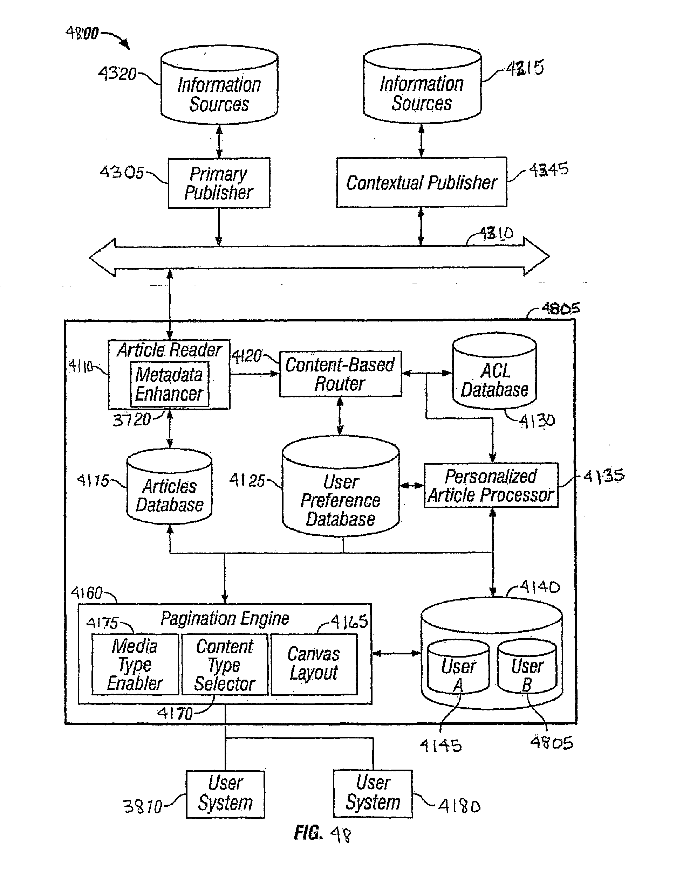

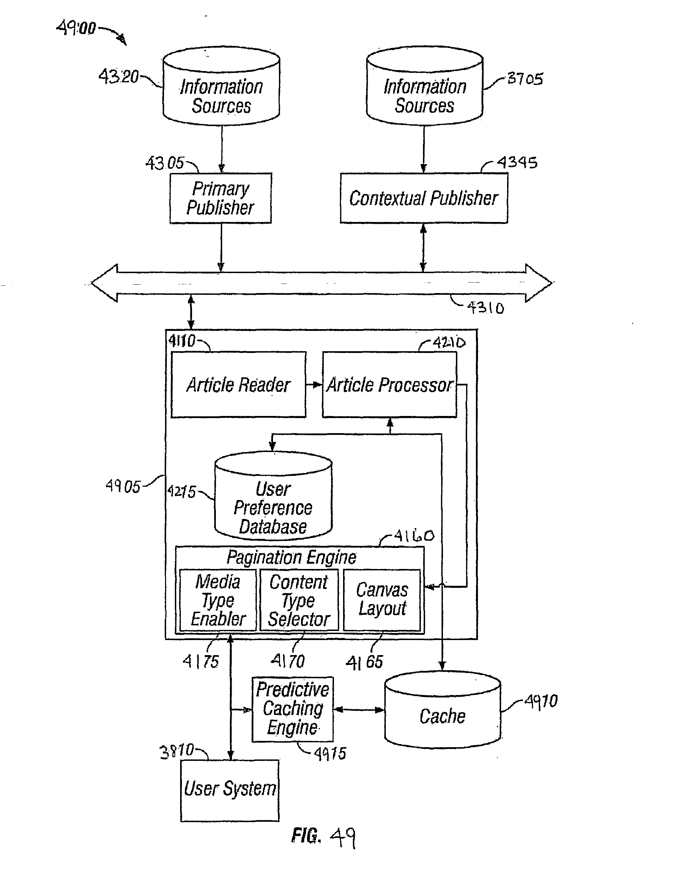

Clients 4335 and/or 4340 may be capable of rendering the messages in a format suitable for use by users 4325 and 4330, respectively, and in accordance with the client's capabilities. For example, client application 4340 running on user system 4330 may be an application designed simply to render text of a message to the user, perhaps as a "ticker" at the bottom of a screen of the user. In contrast, a more complex client system such as client 4335 may be able to render messages in a plurality of formats to a plurality of users. Examples of client system 4335 are discussed below with respect to FIGS. 48 and 49.

Contextual publisher 4345 also may act as a client or subscriber to wire 4310. Contextual publisher 4345, unlike primary publisher 4305, does not generally initiate generation of new content. Instead, contextual publisher 4345 eavesdrops on the wire 4310 for information that it recognizes, and for which it has (or can generate) relevant information. When such information is recognized, the contextual publisher 4345 accesses or creates a message that is related to the recognized information in some way, and publishes the accessed/created message on the wire 4310, addressing the accessed/created message to the same user(s) identified in the original, eavesdropped message (that is, the recognized information).

Contextual publisher 4345 generally contains a message reader 4350 that monitors the wire 4310 for articles in which the contextual publisher has expertise. That is, contextual publisher 4345 can be regarded as an expert in a specific field or category, and will generally publish supplemental content when such supplemental content is, in fact, relevant to a particular article or message. This is represented in FIG. 43 by a connection between message reader 4350 and a supplemental content logic database 4355, which specifies the types of messages and/or subject matter that contextual publisher 4345 should intercept.

Supplemental content selector 3725, as generally described above, receives as to input supplemental content logic from database 4355, as well as messages from message reader 4350, and outputs messages back onto the wire. The supplemental messages may be accessed from/or generated using information sources 3735. The supplemental messages also may be stored in supplemental articles database 4360, so that contextual publisher 4345 can transmit the messages more quickly the next time contextual publisher intercepts a related message from primary publisher 4305.

In FIG. 43, message reader 4350 is shown to contain a metadata enhancer 120a, which, as already described for metadata enhancer 3720, assists the supplemental content selector in determining whether to intercept a message and/or generate a related message by adding content metadata to the message(s). This technique, however, may require contextual publisher 4345 to intercept almost every message to enhance metadata before determining whether contextual publisher 4345 should publish supplemental content. In another implementation, a metadata enhancer 120b can be alternatively or additionally provided on the wire and external to the contextual publisher, so that one metadata enhancer 120b may provide metadata for a number of contextual publishers, and so that the contextual publishers may therefore intercept only those messages already with metadata about which contextual publisher 4345 has specific knowledge.

An example of a contextual publisher 4345 might be one that listens on a news wire for articles (embodied as messages) regarding Standard and Poor ("S&P") 4100 companies. Whenever one is detected, the contextual publisher 4345 generates a new message with the stock quote for that company. Since the discussed company is in the news for a given day, it is likely that recipients of that original message will be also interested in the stock quote message as well.

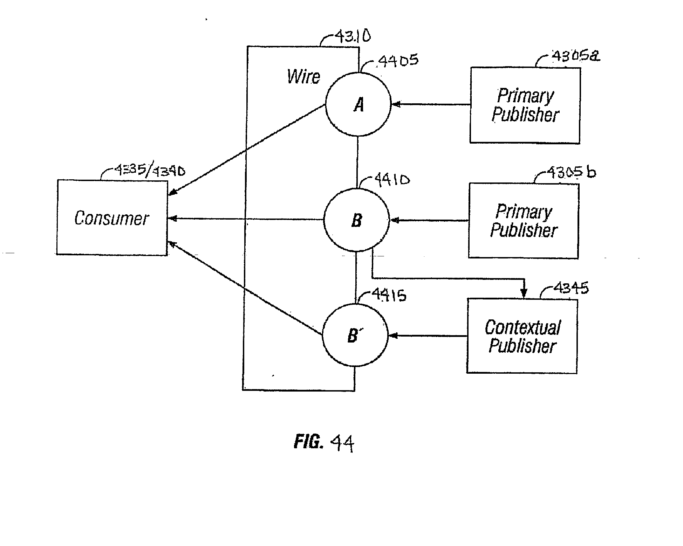

FIG. 44 is a block diagram of a supplemental content generation system. In FIG. 44, two primary publishers 4305a and 4305b, one contextual publisher 4345, and one consumer (which could be client application 4335 or 4340 associated with user 4325 and 4335, respectively) interact within an enriched information stream system sent via wire 4310.

For the example of FIG. 44, it is assumed that the publishers 4305a and 4305b are using wire 4310 to transmit messages to consumers (as opposed to more of a consumer-to-consumer scenario, which would also be possible). As described above, and depending on the messaging scheme utilized, publishers 4305a and 4305b need not know where the consumer 4335/4340 is at the moment of sending the message. It is enough that they know that the consumer is (or will be) connected to the wire, and that the wire has some technique for routing the message to the appropriate user(s). Again, such routing techniques may be, for example, direct addressing, channel-based subscriptions, or content-based messaging. In content-based messaging, no specific user address is needed; rather, the mere fact that a message having certain content is placed onto the wire should be sufficient to ensure that users interested in such messages will receive them.

Contextual publisher 4345 may be thought of as a consumer and a publisher at the same time. That is, contextual publisher 4345 both receives messages and sends new messages.

In FIG. 44, then, primary publisher 4305a publishes a message A 4405, which the consumer 4335/4340 receives via wire 4310. Meanwhile primary publisher 4305b publishes a message B 4410, which the consumer 4335/4340 also receives. Contextual publisher 4345 also receives message B 4410, since contextual publisher 4345 determines that message B 4410 is a type of message with respect to which contextual publisher 4345 has expertise and has (or can access or generate) supplemental messages. Contextual publisher 4345 then publishes message B' 4415 onto the wire. Since message B' 4415 has content similar to message B 4410, and/or because contextual publisher 4345 is aware of routing information in message B 4410 that results in consumer 4335/4340 being a recipient, contextual publisher 4345 is also capable of forwarding message B' 4415 to consumer 4335/4340 using wire 4310.

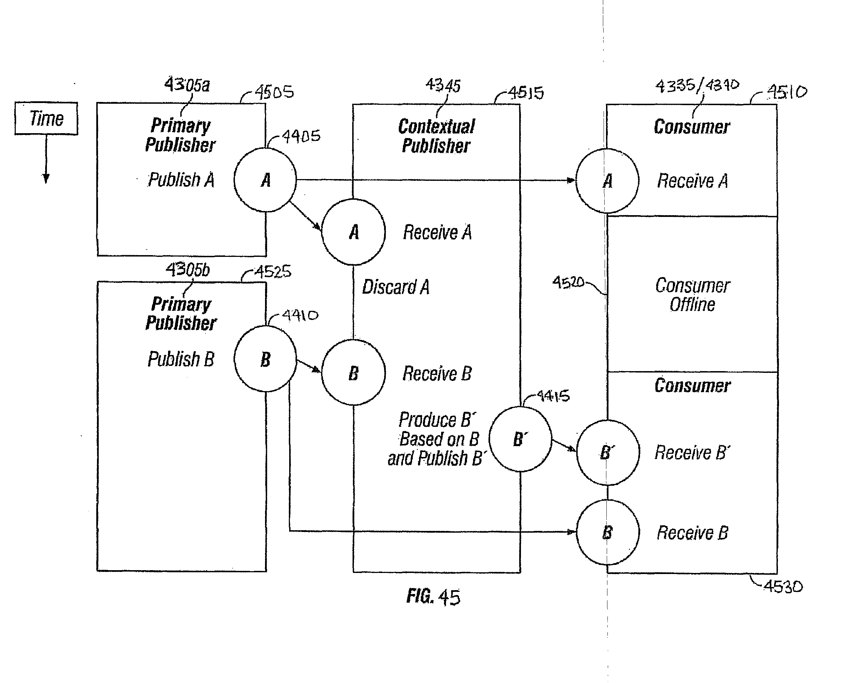

FIG. 45 is a timing diagram of a supplemental content generation system. In FIG. 45, message A 4405 is sent from primary publisher 4305a in a time period 4505 to consumer 4335/4340 in a time period 4510. Contextual publisher 4345 also receives message A 4405 early in a time period 4515, and, determining that message A 4405 is not relevant to subjects in which this contextual publisher 4345 has expertise, then discards message A 4405. In a time period 4520, consumer 4335/4340 goes offline (or experiences some network delay or malfunction that prevents or delays reception), and does not have immediate access to wire 4310.

Next, in a time period 4525, primary publisher 4305b publishes message B 4410, which is received by contextual publisher 4345 later in time period 4515. Determining that it has expertise about the subject matter of message B 4410, contextual publisher 4345 publishes the related message B' 4415, which is then passed on (through wire 4310) to consumer 4335/4340 in a time period 4530, during which the consumer 4335/4340 is again online. Message B 4410 is received by consumer 4335/4340 later in time period 4530.

It should be understood from FIG. 45 that message B 4410 was sent by primary publisher 4305b during a portion of time period 4525 corresponding to time period 4520, during which the consumer 4335/4340 was offline. Therefore, message B 4410 is not immediately received by consumer 4335/4340. Nonetheless, contextual publisher 4345 does receive message B 4410, and soon thereafter publishes message B' 4415, which is therefore received earlier in time period 4530 (during which consumer 4335/4340 comes back online) than the message B 4410 which inspired it, which is ultimately delivered by wire 4310.

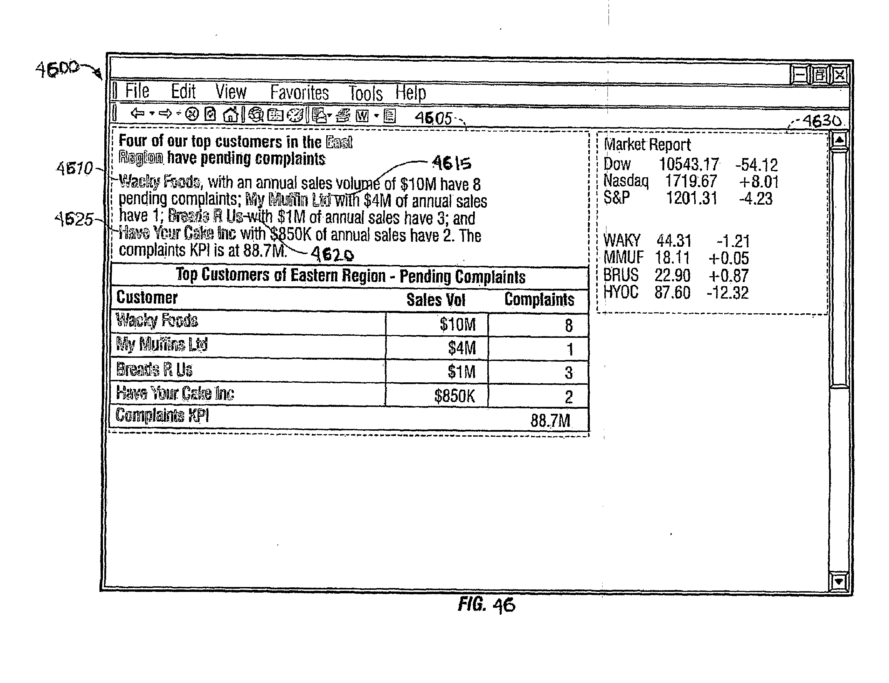

One advantageous reason to produce supplemental, contextual content is to provide consumers with information regarding stories they already find interesting. In this regard, FIG. 46 is a screenshot 4600 of a message and supplemental content. In FIG. 46, a message 4605 contains a message about customers of an enterprise who have pending complaints with the enterprise. The message contains various discussion objects, such as "Wacky Foods" 4610, "My Muffin Ltd" 4615, "Breads R Us" 4620, and "Have Your Cake Inc" 4625. These discussion objects (and their associated classes/categories, not shown) may have been identified by metadata enhancer 120a or 120b in FIG. 43, or may have been identified by the original primary publisher 4305.

FIG. 46 also includes a supplemental message 4630. This message was produced by contextual publisher 4345, according to the process described above. Messages 4605 and 4630 can be delivered and rendered to the consumer 4335/4340 in a variety of ways, as referred to above and described in more detail below.

Contextual publisher 4345 thus increases the likelihood that users will receive sufficient information on topics that they find interesting, without overburdening either the users or the system(s) delivering the information to the users. In other words, conventional system may be capable of delivering much of the content that a user may find interesting; however, delivering all available content (for example, all stock quotes currently available) would make it difficult for the user to sift through the content to find useful information (for example, a particular stock quote). Even if a client application of a user were implemented for prioritizing such content, the client application itself may become overburdened.

With contextual publisher 4345, however, the user may only receive information that the contextual publisher 4345 may infer will be useful. In this way, a burden on both the user and the user's client application is reduced, and the likelihood of the user receiving information that is both interesting and useful to the user may be increased.

Contextual publisher 4345 can be implemented in different ways, depending on the addressing scheme being used. For example, with direct addressing, all messages are generally routed directly to the consumer. Thus, because contextual publisher 4345 does not impersonate a specific consumer, the contextual publisher 4345 does not have access to the messages. In order to enable content enrichment in this environment, contextual publisher 4345 may be run in a privileged environment where it has access to all messages. In the privileged environment, contextual publisher 4345 can analyze each message and, where applicable, generate a supplemental message. In most cases in this type of scenario, the supplemental message will be addressed to the addressee of the original message.

For example, a contextual publisher for an email system may be installed on the email server itself. It would therefore have access to all incoming and outgoing emails, and would be able to process them. If an email contains a subject that the contextual publisher 4345 feels it has something to contribute to, it may generate a new email with supplemental content (or append the supplemental content to the email with the primary content).

In the example of channel-based subscriptions, the contextual publisher 4345 can act as a regular subscriber and subscribe to the channel like anybody else. When a new message comes in to the channel, all users, including the contextual publisher 4345, will receive it. At this point, the contextual publisher 4345 can process the message and may choose to publish a new message that is based on the original one. In some cases the new message will be directed to the same channel, since it is likely to deal with the same topic as the original message. In others, it may be directed to another channel.

For example, assume a messaging system with a channel for customer complaints. A contextual publisher 4345 may eavesdrop on (subscribe to) this channel and process all incoming complaints. Out of each message, the contextual publisher 4345 may extract the customer who complained and generate a full customer report for that customer. This report may then be broadcast (via the wire 4310) on another channel.

With content-based messaging, ("CBM"), the contextual publisher 4345 is free to use the fine-grained subscription mechanism to subscribe to only those messages for which it has (or can obtain or generate) supplemental content. This reduces the overhead of processing messages that will not generate supplemental content. Once a message does pass through to the contextual publisher 4345, the contextual publisher 4345 generates the supplemental message and publishes it. Moreover, in the CBM environment, as long as the right metadata is included in the supplemental message, the message will find its way to the right consumers.

For example, the contextual publisher 4345 may subscribe only to messages that contain metadata about companies. Once received, the contextual publisher 4345 will thus look up the quotes, generate a new message (making sure to mark it with the same metadata as the old message) and publish it to the wire. Because the metadata is the same and because consumers subscribe based on metadata, those consumers that receive the original message are very likely to receive the supplemental message.

Because there could be several contextual publishers, some might produce supplemental content that is based on another's supplemental content (as opposed to an original message of a primary publisher). This may produce a cascade effect of messages. If needed, it is possible to eliminate cascading by preventing contextual publishers from receiving messages of anyone but primary publishers. Alternatively, if cascading is desired, its flow may be controlled in other means to prevent an overflow of messages and, even in extreme situations, an infinite feedback loop between publishers.

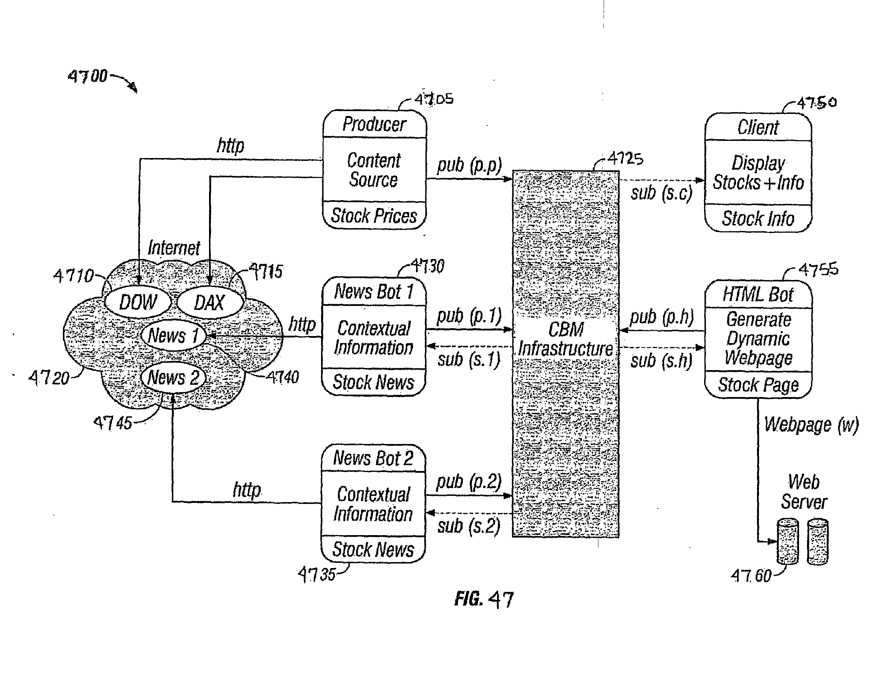

FIG. 47 is a block diagram 4700 of a supplemental content generation system in a content-based messaging environment. In FIG. 47, a producer (primary publisher) 4705 reads stock quotes from various sources, such as a DOW 4710 and a DAX 4715 (representing an American and German stock index, respectively), via, for example, the Internet 4720. The stock quotes may then be mapped onto a message (not shown) and published onto a CBM infrastructure 4725, which may be thought of as a type of wire 4310. In this example, the message contains the symbol of the stock, the stock quote, a time stamp of the quote, and the source of the quote.

Meanwhile, a newsbot 4730 and a newsbot 4735 may read news articles from various other individual sources, such as a news source 4740 and a news source 4745, respectively, and store the articles as messages within a local database (not shown). The newsbots 4730 and 4735 may be, for example, software agents as described above, and may be collecting information about stocks in the news.

Each newsbot 4730 and 4735 subscribes to messages on CBM infrastructure 4725 to receive messages that contain stock quotes and are not generated by any other newsbot. Each newsbot 4730 and 4735 publishes messages that contain, for example, the ticker symbol contained in the original message, the name of the newsbot that published the message, and a Uniform Resource Locator ("URL") that points to the original news story on the web (i.e., the original message which triggered the collection of the stock quote(s)). Alternatively, the newsbot 4730 or 4735 may publish a message that contains the news story and stock quote(s) directly, rather than pointing to their location on the web.

A client 4750 subscribes to those messages that contain symbols that an associated user (not shown) is interested in.

Finally, an HTML bot 4755 subscribes to all messages that contain a stock symbol, and stores incoming messages in an internal database. Upon the fulfillment of some pre-determined rule or condition for generating contextual content, the HTML bot may generate a webpage containing at least the stock symbol(s)/quote(s) (and possibly also the original news story), and placed on a webserver 4760. Then, a new message is generated containing the original message containing the stock symbol, the name of the HTML bot that published the message, and a URL pointing to the generated webpage.

FIG. 48 is a block diagram 4800 illustrating a content delivery system using a contextual publisher 4345. As referred to above, messages from primary publisher 4305 and contextual publisher 4345 may not be in a format that is immediately accessible by user 3805. For example, the message may be an XML file that would not be useful to user 3805. Thus, a client application such as system 4805 may be necessary to translate the message(s) into a usable format for the user 3805.

In FIG. 48, then, client application 4805 is shown to be a content delivery system that is very similar to the content delivery system 4105 of FIG. 41. That is, articles/messages from the wire 4310 are collected by article reader 4110, and prioritized, filtered, aggregated, and assembled for a user 3805 by the various components of system 4805, the operation of which was explained with respect to FIG. 41. As with system 4105, the system 4805 may also act on behalfof another user, such as user 4180. Sorted articles database 4140 is shown including a User B database 4810 that may be used to store articles for user 4180.

Using client system 4805, user 3805 has access to the advantageous features of prioritization and/or filtering that increase the likelihood that the user 3805 will receive messages in which he or she is actually interested. Further, supplemental articles can be put into the pool and prioritized along with all the other (that is, the primary) articles, so that a supplemental article that has a relatively low priority will not be shown to user 3805. This feature may be particularly helpful when messages are emailed to the user 3805, since it will help keep the user 3805 from feeling that his or her email inbox has been "spammed," or overwhelmed with uninteresting information. Moreover, system 4805 may include a ratings system for each discussion object, whereby user 3805 will be able to rate a particular discussion object or entire message as particularly interesting or disinteresting. This rating may be stored in user preference database 4125, so that, over time, the user 3805 will be more and more likely to receive messages that are of interest to him or her.

Additionally, pagination engine 4160 may provide the content to the user in a format or media (for example, text, audio, video) that the user 3805 finds most advantageous. Pagination engine 4160 may also be able to reserve space in a rendered page or canvas for supplemental content, since the supplemental content (due to its relatively low priority ranking) might otherwise not be shown on the page.

System 4805, like system 4105, assumes that messages and articles are pre-assembled for users, so that they may largely be prioritized and filtered for delivery to user 3805 upon a logging on to the system by user 3805. This will generally be the case, since contextual publisher 4345 must have something (that is, some article or message) to intercept and examine in order to generate supplemental content.

FIG. 49 is a block diagram that demonstrates another system 4905 for providing supplemental content to a user 3805. Although system 4805 exemplified a system for providing some subset of pre-assembled articles and associated articles, it is also possible to use the contextual publisher concept in a more conventional portal environment. That is, in a conventional portal environment, as explained above, articles are not assembled for display in, for example, iViews, until user 3805 actually requests the page ofiViews. Therefore, it is problematic for the contextual publisher 4345 to generate supplemental content when the primary content has not yet been determined.

One way to consider the difficulty in utilizing the contextual publisher 4345 in a conventional portal environment is to consider the difference between an email system and a live telephone conversation. In the former, the delayed nature of emails results in a number of email messages accumulating in an inbox. As the messages enter the inbox, a contextual publisher 4345 having appropriate permissions can generate supplemental content specific to those email messages. In contrast, during a live telephone conversation, it would be more difficult for a contextual publisher to determine topics of conversation and provide supplemental content in a timely fashion.

One way around this problem involves "predictive caching," in which a mechanism predicts, based on, for example, past use of the user 3805, types of articles that user 3805 may request. For example, the system 4905, having knowledge that user 3805 normally logs on every morning, may refresh or update a page ofiViews to be delivered to a user sometime during the night before. Based on the resulting articles, supplemental content can be generated and assembled for delivery to the user.

Thus, in system 4905, many of the elements of systems 3805 and 4205 are displayed. There is no supplemental content selector 3725 in system 4905, since supplemental content is provided by contextual publisher 4345; however, such a supplemental content selector 3725 and associated supplemental content logic could be included, for example, if the supplemental content logic was somehow different from the supplemental content logic used by contextual publisher 4345. For example, the supplemental content selector 3725 may be more specific to user 3805 than simply specifying a particular topic or subject. Similarly, pagination engine 4160 is shown to include the canvas layout subsystem 4165, the content-type selector 4170, and the media-type enabler 4175 discussed above for delivering rich media content including audio, video, and text to be rendered as audio and/or video. However, pagination engine 3830, without some or all of these features, could also be used.

In FIG. 49, then, system 4905 performs similarly to systems 3805 and/or 4205, but inputs articles from wire 4310 and stores them in a cache 4910, based on an update/refresh initiated by predictive caching engine 4915. Contextual publisher 4345, realizing, or being informed, that these articles are in fact being delivered to system 4905, may then generate supplemental content. The supplemental content may also be stored in cache 4910 and delivered when a user logs onto the system 4905.

In FIG. 49, predictive caching engine 4915 and cache 4910 are shown as external to system 4905, in order to emphasize the point that user 3805 may, when possible, receive content directly from these elements. In other words, predictive caching engine 4915 may operate as a proxy server of content for user 3805, and may be located more closely to user 3805 than system 4905 itself. On the other hand, predictive caching engine 4915 may also be incorporated within system 4905. Also, predictive caching engine 4915 may be similarly employed with respect to system 3805 in FIG. 38. In neither case will user 3805 generally have an ability to determine a source of the content being delivered; rather, predictive caching engine 4915 and/or pagination engine 4160 will make such a determination, based on, for example, an availability of content in cache 4910 and/or the speed from which content can be delivered to user 3805 from system 4905 versus predictive caching engine 4915.

In another implementation, space on a rendering canvas, such as one or more iViews on a portal page, can be reserved for supplemental content from a contextual publisher, as described above with respect to FIGS. 38-42. While primary space on the screen (for example, section 3905) may be filled as soon as possible, the secondary space 3925 may be reserved for future use. In other words, section 3925 may remain blank to a user's view while the contextual publisher 4345 examines the primary articles and delivers supplemental content to fill the section 3925. In this implementation, as well as in other implementations as would be apparent, supplemental content may only be generated after a user has maintained a certain primary article on a canvas for a pre-determined period of time, such as, for example, ten seconds. This technique helps ensure that user 3805 is actually interested in a piece of content before supplemental content is generated.

In another implementation, supplemental content may be generated based on a "hot topic" of the day, for example, once a certain number of primary articles have been generated about a specific topic, a contextual publisher 4345 or some other supplemental content selector 3725 (for example, in FIGS. 38, 41, and 42) may generate supplemental content about that topic for delivery to the user 3805. The supplemental articles may be delivered to the user 3805 even if the user 3805 has expressed no interest in the topic, or even if the user 3805 has expressed disinterest in the topic. This feature may be used in system 4905, since supplemental content can be generated about the "hot topic" even without predictive caching. For example, the "hot topic" may also be determined by compiling statistics of what users are seeing and predicting the "hot topic" based on the statistics.

FIG. 50 demonstrates an article 5000 used in one implementation of the system. Article 5000 is written in XML. In article 5000, a section 5005 contains general attributes of the article, such as its author, time of creation, and level of importance. A section 5010 labels a first content portion as being narrative text in proper grammar for reading and having a headline portion 5015 and a details portion 5020. A section 5025 labels a second content portion as being HTML-based, with a headline in section 5030 and a table 5035, as its detailed content.

A section 5040 labels the next content block as containing a viewable image in a standard format such as ".gif." The image has an associated headline in section 5045, and is itself located in section 5050. Finally, a section 5055 labels a last content block as containing music, which may be, for example, background music having no words, in a standard format such as "midi." The actual midi file is in a section 5060.

Although not explicitly shown, it should be understood that video (for example, MPEG) and other formats may also be used. Also, as should be understood from FIG. 42, articles such as article 5000 may include summaries of the articles, or of article portions. Also, content blocks may be labeled as mutually exclusive or not, for example, typically an article summary would not be included in the same page as the article itself, as that would be redundant.

In the implementations described above, a supplemental content selector inputs primary articles, user preferences, and supplemental content logic, and outputs articles having content that supplements the content of the primary articles. In a conventional portal environment, the supplemental content selector allows the portal to retain space (for example, iViews) on the page for the supplemental content, delivered to the user, for example, with or after the primary content. The primary and supplemental content can also be delivered in various media, including audio or video.

In a personalized, dynamic content delivery system, the supplemental content can be prioritized with, apart from, or based on a prioritization of the primary content, and delivered to the user in a plurality of media formats.

Supplemental content selector can also be used as part of a contextual publisher, which eavesdrops on an information distribution service for content in articles in which it has a particular expertise or ability in adding supplemental content. The supplemental content can then be delivered to the user, via the information distribution system and perhaps a client system interacting with a system of the user. The client system may be, for example, the personalized, dynamic content delivery system described above, or may be any of the other content delivery systems described herein.

A number of implementations have been described. Nevertheless, it will be understood that various modifications may be made. Accordingly, other implementations are within the scope of the following claims.

## Claims

1. A system comprising:
an article reader (115) operable to access information for inclusion in a pool of articles, each article in the pool of articles including content metadata characterizing content of the article type;
a sorting engine operable to input the pool of articles and individually organize the articles according to the content metadata and preference metadata associated with a user, to thereby output sorted articles for delivery to the user;
a media-type selector operable to select a media type of at least one of the sorted articles;
a supplemental content selector (3725) operable to select a supplemental article based on the content metadata, the preference metadata, supplemental content metadata associated with the supplemental article, and a supplemental content selection rule;
an aggregation engine (165) operable to determine a presentation format for rendering each of the sorted articles and the supplemental article, where the presentation format is determined based on the content metadata, the preference metadata, and the media type, and further operable to aggregate the sorted articles and the supplemental article in accordance with the presentation format for delivery to the user;
a metadata presentation system operable to distinguish, on a user display, the content metadata in the form of discussion objects within each of the sorted articles and the supplemental article,
wherein the metadata presentation system identifies the discussion objects within the content of the articles and presents the discussion objects on the user display to the user and
wherein the discussion objects are objects that are mentioned as part of the articles and are designated within content of the articles; and
a preference input system (905; 1005) operable to input a user modification to the preference metadata with respect to one or more of the discussion objects selected by the user, while the sorted articles and the supplemental article are being displayed on the user display,
wherein the user of the user display can enter preference information about one or more of the discussion objects while being in the context of the articles and actually viewing said articles in order to alter his preference metadata,
wherein the preference information is input using the preference input system and is stored with the altered preference metadata within a user preference database, and
wherein upon entering the preference information the user receives a revised portal page based on the altered preference metadata including the articles which reflects information expressed regarding the discussion objects.

2. The system of claim 1 wherein the sorting engine is further operable to filter the pool of articles based on pre-determined criteria.

3. The system of claim 1 wherein the aggregation engine (165) is further operable to determine the presentation format based on a priority level associated with each article by the sorting engine.

4. The system of claim 1 wherein the aggregation engine (165) is further operable to format a first frame for display of the sorted articles, and a second frame for display of the supplemental article.

5. The system of claim 1 wherein at least one of the sorted articles contains a plurality of content blocks, each content block associated with a specific media type, and the media-type selector is operable to select one of the specific media types as the media type.

6. The system of claim 1 wherein a contextual content selector is operable to transmit the contextual article to the article reader (115), and the supplemental content selector (3725) is operable to select the contextual article as the supplemental article.

7. The system of claim 1 wherein the preference input system (905; 1005) is operable to provide a pop-up window on the user display in the vicinity of the selected discussion object.

8. A method comprising:
accessing information for inclusion in a pool of media assets, each media asset (700) in the pool of media assets including a discussion object (740) designated within content of the media asset;
sorting the pool of media assets with respect to a user to obtain sorted media assets, based on the discussion objects (740) and a user preference associated with the user;
selecting a supplemental media asset based on discussion objects (740) within the sorted media assets, the user preference, and a supplemental content selection rule (4220); and
aggregating the sorted media assets and the supplemental media asset for delivery to the user for presentation on a user display, based on the discussion objects (740) within the sorted media assets and the user preference;
selecting a designated discussion object within one of the sorted media assets to be distinguished on the user display;
providing a pop-up window on the user display, while the designated discussion object is being displayed and in the vicinity of the designated discussion object, wherein the discussion objects are objects that are mentioned as part of the articles and are designated within content of the articles;
accepting a modification to the user preferences with respect to one or more of the discussion objects selected by the user through a user input into the pop-up window, while the sorted articles and the supplemental article are being displayed to the user,
wherein the user can enter preference information about one or more of the discussion objects while being in the context of the articles and actually viewing said articles in order to alter his preference metadata,
wherein the preference information is input using the preference input system and is stored with the altered preference metadata within a user preference database, and
wherein upon entering the preference information the user receives a revised portal page based on the altered preference metadata including the articles which reflects information expressed regarding the discussion objects.

9. The method of claim 8 wherein aggregating the sorted media assets and the supplemental media asset comprises selecting a content block from a plurality of content blocks associated with a selected media asset (700), where each of the content blocks is associated with a different media type.

10. The method of claim 8 wherein sorting the pool of media assets comprises filtering and prioritizing the pool of media assets according to a pre-determined criteria.

11. The method of claim 8 wherein aggregating the sorted media assets and the supplemental media asset comprises:
assigning the sorted media assets to a first frame on the user display for display of the sorted media assets; and
assigning the supplemental media asset to a second frame on the user display for display of the supplemental media asset.

## Patentansprüche

1. Ein System umfassend:
einen Artikelleser (115), welcher bedienbar oder betreibbar ist, um auf Information bzw. Informationen für Aufnahme in einen Pool von Artikeln zuzugreifen, wobei jeder Artikel in dem Pool von Artikeln Inhaltsmetadaten, die Inhalt von dem Artikeltyp charakterisieren, beinhaltet;
eine Sortiermaschine, welche bedienbar oder betreibbar ist, um den Pool von Artikeln einzugeben und die Artikel entsprechend den Inhaltsmetadaten und Präferenzmetadaten, die mit einem Benutzer assoziiert sind, einzeln oder individuell zu organisieren, und um dabei sortierte Artikel für Lieferung an den Benutzer auszugeben;
einen Medientypwähler, welcher bedienbar oder betreibbar ist, um einen Medientyp von mindestens einem von den sortierten Artikeln zu wählen;
einen zusätzlichen bzw. ergänzenden Inhaltswähler (3725), welcher bedienbar ist, um einen zusätzlichen bzw. ergänzenden Artikel basierend auf den Inhaltsmetadaten, den Präferenzmetadaten, zusätzlichen bzw. ergänzenden Inhaltsmetadaten, die mit dem zusätzlichen bzw. ergänzenden Artikel assoziiert sind, und eine zusätzliche bzw. ergänzende Inhaltswahlregel zu wählen;
eine Maschine zum Aggregieren (165), welche bedienbar oder betreibbar ist, um ein Darstellungsformat zum Rendern oder Darstellen jedes von den sortierten Artikeln und des zusätzlichen Artikels zu bestimmen, wobei das Darstellungsformat basierend auf den Inhaltsmetadaten, den Präferenzmetadaten, und dem Medientyp bestimmt wird, und des Weiteren, welche bedienbar oder betreibbar ist, um die sortierten Artikel und den zusätzlichen Artikel in Übereinstimmung mit dem Darstellungsformat für Lieferung an den Benutzer zu aggregieren;
ein Metadatendarstellungssystem, welches bedienbar oder betreibbar ist, um auf einer Benutzeranzeige die Inhaltsmetadaten in der Form von Besprechungsobjekten innerhalb jedes von den sortierten Artikeln und des zusätzlichen Artikels zu unterscheiden,
wobei das Metadatendarstellungssystem die Besprechungsobjekte innerhalb des Inhalts von den Artikeln identifiziert und die Besprechungsobjekte auf der Benutzeranzeige dem Benutzer darstellt, und
wobei die Besprechungsobjekte (discussion objects) Objekte sind, die als Teil von den Artikeln aufgeführt werden und innerhalb des Inhalts von den Artikeln genannt werden; und
ein Präferenzeingabesystem (905; 1005), welches bedienbar oder betreibbar ist, um eine Benutzermodifikation zu den Präferenzmetadaten bezüglich eines oder mehrerer von den Diskussionsobjekten, die von dem Benutzer gewählt sind, einzugeben, während die sortierten Artikel und der zusätzliche Artikel auf der Benutzeranzeige angezeigt werden,
wobei der Benutzer der Benutzeranzeige Präferenzinformation bzw.
Präferenzinformationen über eines oder mehrere von den Besprechungsobjekten eingeben kann, während er in dem Kontext der Artikel ist und tatsächlich die Artikel anschaut, um seine Präferenzmetadaten zu ändern,
wobei die Präferenzinformation eine Eingabe ist, die das Präferenzeingabesystem verwendet, und mit den geänderten Präferenzmetadaten innerhalb einer Präferenzdatenbank gespeichert wird, und
wobei der Benutzer beim Eingeben der Präferenzinformation eine geänderte Portalseite basierend auf den veränderten Präferenzmetadaten beinhaltend die Artikel, die Information bzw. Informationen ausgedrückt in Bezug auf die Besprechungsobjekte reflektiert bzw. reflektieren, empfängt.

2. System nach Anspruch 1, wobei die Sortiermaschine weiterhin bedienbar oder betreibbar ist, den Pool von Artikeln basierend auf vorgegebenen bzw. vorbestimmten Kriterien zu filtern.

3. System nach Anspruch 1, wobei die Maschine zum Aggregieren (165) weiterhin bedienbar oder betreibbar ist, das Darstellungsformat basierend auf einer Prioritätsebene, die mit jedem Artikel durch die Sortiermaschine assoziiert ist, zu bestimmen.

4. System nach Anspruch 1, wobei die Maschine zum Aggregieren (165) weiterhin bedienbar oder betreibbar ist, einen ersten Rahmen zum Anzeigen der sortierten Artikel und einen zweiten Rahmen zum Anzeigen des zusätzlichen Artikels aufzubereiten, oder zu formatieren.

5. System nach Anspruch 1, wobei wenigstens einer von den sortierten Artikeln eine Vielzahl von Inhaltsblöcken beinhaltet, wobei jeder Inhaltsblock mit einem spezifischen Medientyp assoziiert ist, und der Medientypwähler bedienbar oder betreibbar ist, einen von den spezifischen Medientypen als den Medientyp zu wählen.

6. System nach Anspruch 1, wobei ein kontextabhängiger Inhaltswähler bedienbar oder betreibbar ist, den kontextabhängigen Artikel zu dem Artikelleser (115) zu übermitteln, und der zusätzliche Inhaltswähler (3725) bedienbar oder betreibbar ist, den kontextabhängigen Artikel als den zusätzliche Artikel zu wählen.

7. System nach Anspruch 1, wobei das Präferenzeingabesystem (905; 1005) bedienbar oder betreibbar ist, ein Pop-Up Fenster auf der Benutzeranzeige in der Nachbarschaft von dem gewählten Besprechungsobjekt bereitzustellen.

8. Verfahren mit den folgenden Schritten:
Zugreifen auf Information bzw. Informationen für die Aufnahme in einen Pool von Medienassets, wobei jedes Medienasset (700) in dem Pool von Medienassets ein Besprechungsobjekt (740) beinhaltet, das innerhalb des Inhalts von dem Medienasset genannt ist;
Sortieren des Pools von Medienassets bezüglich eines Benutzers, um sortierte Medienassts basierend auf den Besprechungsobjekten (740) und einer Benutzerpräferenz, die mit einem Benutzer assoziiert ist, zu bekommen;
Wählen eines zusätzlichen Medienassets basierend auf den Besprechungsobjekten (740) innerhalb den sortierten Medienassets, der Benutzerpräferenz und einer zusätzlichen Inhaltswahlregel (4220); und
Sammeln der sortierten Medienassets und des zusätzlichen Medienassets für Lieferung an den Benutzer zur Darstellung auf einer Benutzeranzeige basierend auf den Besprechungsobjekten (740) innerhalb der sortierten Medienassets und der Benutzerpräferenz;
Wählen eines ausgewiesenen Besprechungsobjekts innerhalb eines von den sortierten Medienassets, um auf der Benutzeranzeige unterschieden zu werden;
Bereitstellen eines Pop-Up Fensters auf der Benutzeranzeige, während das ausgewiesene Besprechungsobjekt angezeigt wird, und in der Nachbarschaft des ausgewiesenen Besprechungsobjekts, wobei die Besprechungsobjekte Objekte sind, die als Teil von den Artikeln aufgeführt werden und innerhalb des Inhalts von den Artikeln genannt werden;
Annehmen einer Abwandlung zu den Benutzerpräferenzen bezüglich eines oder mehrerer von den Besprechungsobjekten, die von dem Benutzer durch eine Benutzereingabe in das Pop-Up Fenster gewählt sind, während die sortierten Artikel und der zusätzliche Artikel dem Benutzer angezeigt werden,
wobei der Benutzer Präferenzinformation bzw. Präferenzinformationen über eines oder mehrere der Besprechungsobjekte eingeben kann, während er in dem Kontext von den Artikeln ist und tatsächlich die Artikel anschaut, um seine Präferenzmetadaten zu ändern,
wobei die Präferenzinformation bzw. die Präferenzinformationen eine Eingabe ist bzw. Eingaben sind, die das Präferenzeingabesystem verwendet, und mit den geänderten Präferenzmetadaten innerhalb einer Benutzerpräferenzdatenbank gespeichert wird bzw. werden, und
wobei der Benutzer beim Eingeben der Präferenzinformation bzw. der Präferenzinformationen eine geänderte Portalseite basierend auf den geänderten Präferenzmetadaten beinhaltend die Artikel, die Information bzw. Informationen ausgedrückt in Bezug auf die Besprechungsobjekte reflektiert bzw. reflektieren, empfängt.

9. Verfahren nach Anspruch 8, wobei die sortierten Medienassets und das zusätzliche Medienasset Wählen eines Inhaltsblocks aus einer Vielzahl von Inhaltsblöcken, die mit einem gewählten Medienasset (700) assoziiert sind, umfasst, wobei jeder der Inhaltsblöcke mit einem unterschiedlichen Medientyp assoziiert wird.

10. Verfahren nach Anspruch 8, wobei das Sortieren des Pools von Medienassets, das Filtern und das Priorisieren des Pools von Medienassets bezüglich vorgegeben bzw. vorbestimmten Kriterien umfasst.

11. Verfahren nach Anspruch 8, wobei das Aggregieren der sortierten Medienassets und des zusätzlichen Medienassets umfasst:
Zuordnen der sortierten Medienassets an einen ersten Rahmen auf der Benutzeranzeige zur Anzeige von den sortierten Medienassets; und
Zuordnen des zusätzlichen Medienassets an einen zweiten Rahmen auf der Benutzeranzeige zur Anzeige von dem zusätzlichen Medienasset.

## Revendications

1. Système comprenant :
un lecteur d'articles (115) pouvant être opéré pour accéder à des informations pour l'inclusion dans un groupe d'articles, chaque article dans le groupe d'articles incluant des métadonnées de contenu caractérisant le contenu du type d'articles ;
un moteur de tri pouvant être opéré pour entrer le groupe d'articles et organiser individuellement les articles en fonction des métadonnées de contenu et des métadonnées de préférence associées à un utilisateur, afin de sortir de ce fait des articles triés pour livraison à l'utilisateur ;
un sélecteur de type de supports pouvant être opéré pour sélectionner un type de supports d'au moins un des articles triés ;
un sélecteur de contenu supplémentaire (3725) pouvant être opéré pour sélectionner un article supplémentaire en fonction des métadonnées de contenu,
des métadonnées de préférence, de métadonnées de contenu supplémentaire associées à l'article supplémentaire et d'une règle de sélection de contenu supplémentaire ;
un moteur d'agrégation (165) pouvant être opéré pour déterminer un format de présentation pour le rendu de chacun des articles triés et de l'article supplémentaire, où le format de présentation est déterminé en fonction des métadonnées de contenu, des métadonnées de préférence et du type de supports, et pouvant en outre être opéré pour agréger les articles triés et l'article supplémentaire conformément au format de présentation pour livraison à l'utilisateur ;
un système de présentation de métadonnées pouvant être opéré pour établir une distinction sur un écran de l'utilisateur entre les métadonnées de contenu sous la forme d'objets de discussion au sein de chacun des articles triés et de l'article supplémentaire,
dans lequel le système de présentation de métadonnées identifie les objets de discussion au sein du contenu des articles et présente les objets de discussion sur l'écran de l'utilisateur à l'utilisateur et
dans lequel les objets de discussion sont des objets qui sont mentionnés en tant que partie des articles et sont désignés au sein du contenu des articles ; et
un système d'entrée de préférence (905 ; 1005) pouvant être opéré pour entrer une modification de l'utilisateur aux métadonnées de préférence par rapport à un ou plusieurs des objets de discussion sélectionnés par l'utilisateur, tandis que les articles triés et l'article supplémentaire sont affichés sur l'écran de l'utilisateur,
dans lequel l'utilisateur de l'écran de l'utilisateur peut saisir des informations de préférence concernant un ou plusieurs des objets de discussion tout en étant dans le contexte des articles et visualisant en fait lesdits articles afin de modifier ses métadonnées de préférence,
dans lequel les informations de préférence sont entrées en utilisant le système d'entrée de préférence et sont stockées avec les métadonnées de préférence modifiées au sein d'une base de données de préférence de l'utilisateur, et
dans lequel, lors de la saisie des informations de préférence, l'utilisateur reçoit une page de portail révisée en fonction des métadonnées de préférence modifiées incluant les articles qui reflète des informations exprimées concernant les objets de discussion.

2. Système selon la revendication 1, dans lequel le moteur de tri peut en outre être opéré pour filtrer le groupe d'articles en fonction de critères prédéterminés.

3. Système selon la revendication 1, dans lequel le moteur d'agrégation (165) peut en outre être opéré pour déterminer le format de présentation en fonction d'un niveau de priorité associé à chaque article par le moteur de tri.

4. Système selon la revendication 1, dans lequel le moteur d'agrégation (165) peut en outre être opéré pour formater un premier cadre pour l'affichage des articles triés et un second cadre pour l'affichage de l'article supplémentaire.

5. Système selon la revendication 1, dans lequel au moins un des articles triés contient une pluralité de blocs de contenu, chaque bloc de contenu étant associé à un type de supports spécifique, et le sélecteur de type de supports peut être opéré pour sélectionner un des types de supports spécifiques comme le type de supports.

6. Système selon la revendication 1, dans lequel un sélecteur de contenu contextuel peut être opéré pour transmettre l'article contextuel au lecteur d'articles (115) et le sélecteur de contenu supplémentaire (3725) peut être opéré pour sélectionner l'article contextuel comme l'article supplémentaire.

7. Système selon la revendication 1, dans lequel le système d'entrée de préférence (905 ; 1005) peut être opéré pour fournir une fenêtre intruse sur l'écran de l'utilisateur à proximité de l'objet de discussion sélectionné.

8. Procédé comprenant les étapes consistant à :
accéder à des informations pour l'inclusion dans un groupe de contenus multimédias, chaque contenu multimédia (700) dans le groupe de contenus multimédias incluant un objet de discussion (740) désigné au sein du contenu du contenu multimédia ;
trier le groupe de contenus multimédias par rapport à un utilisateur pour obtenir des contenus multimédias triés en fonction des objets de discussion (740) et d'une préférence de l'utilisateur associée à l'utilisateur ;
sélectionner un contenu multimédia supplémentaire en fonction d'objets de discussion (740) au sein des contenus multimédias triés, de la préférence de l'utilisateur et d'une règle de sélection de contenu supplémentaire (4220) ; et
agréger les contenus multimédias triés et le contenu multimédia supplémentaire pour livraison à l'utilisateur pour la présentation sur un écran de l'utilisateur en fonction des objets de discussion (740) au sein des contenus multimédias triés et
de la préférence de l'utilisateur ;
sélectionner un objet de discussion désigné au sein d'un des contenus multimédias triés pour être distingué sur l'écran de l'utilisateur ;
fournir une fenêtre intruse sur l'écran de l'utilisateur, tandis que l'objet de discussion désigné est affiché et à proximité de l'objet de discussion désigné,
dans lequel les objets de discussion sont des objets qui sont mentionnés en tant que partie des articles et sont désignés au sein du contenu des articles ;
accepter une modification aux préférences de l'utilisateur par rapport à un ou
plusieurs des objets de discussion sélectionnés par l'utilisateur par une entrée de l'utilisateur dans la fenêtre intruse, tandis que les articles triés et l'article supplémentaire sont affichés à l'utilisateur,
dans lequel l'utilisateur peut saisir des informations de préférence concernant un ou plusieurs des objets de discussion tout en étant dans le contexte des articles et
visualisant en fait lesdits articles afin de modifier ses métadonnées de préférence,
dans lequel les informations de préférence sont entrées en utilisant le système d'entrée de préférence et sont stockées avec les métadonnées de préférence modifiées au sein d'une base de données de préférence de l'utilisateur, et
dans lequel, lors de la saisie des informations de préférence, l'utilisateur reçoit une page de portail révisée en fonction des métadonnées de préférence modifiées incluant les articles qui reflète des informations exprimées concernant les objets de discussion.

9. Procédé selon la revendication 8, dans lequel l'agrégation des contenus multimédias triés et du contenu multimédia supplémentaire comprend la sélection d'un bloc de contenu parmi une pluralité de blocs de contenu associés à un contenu multimédia sélectionné (700), où chacun des blocs de contenu est associé à un type de supports différent.

10. Procédé selon la revendication 8, dans lequel le tri du groupe de contenus multimédias comprend le fait de filtrer et de hiérarchiser le groupe de contenus multimédias en fonction d'un critère prédéterminé.

11. Procédé selon la revendication 8, dans lequel l'agrégation des contenus multimédias triés et du contenu multimédia supplémentaire comprend :
l'attribution des contenus multimédias triés à un premier cadre sur l'écran de l'utilisateur pour l'affichage des contenus multimédias triés ; et
l'attribution du contenu multimédia supplémentaire à un second cadre sur l'écran de l'utilisateur pour l'affichage du contenu multimédia supplémentaire.
